# EUROPÄISCHE PATENTSCHRIFT

(11) **EP 1 897 446 B1**
(45) Veröffentlichungstag und Bekanntmachung des Hinweises auf die Patenterteilung: **28.07.2010**
(21) Anmeldenummer: 07017500.5
(22) Anmeldetag: 06.09.2007
(51) Int. Cl.: A22C 11/02, B65G 47/61, A22C 15/00

(54) **Fertigungslinie zur Herstellung wurstförmiger Produkte**
Production line for manufacturing sausage-shaped products
Ligne de fabrication pour la fabrication de produits sous forme de saucisse

(30) Priorität: 06.09.2006 DE 102006041829
(43) Veröffentlichungstag der Anmeldung: 12.03.2008
(60) Teilanmeldung: 10006154.8
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Nöth, Heinz

(56) Entgegenhaltungen:
- EP-A- 0 727 144
- EP-A- 1 498 034
- WO-A-92/03929
- DE-A1- 3 437 830
- DE-A1- 3 935 746
- DE-B3- 10 340 632
- DE-C1- 3 322 759
- DE-C1- 3 806 467
- FR-A- 1 483 818

## Beschreibung

Die Erfindung betrifft ein Verfahren zum Steuern einer Fertigungslinie zur Herstellung von wurstförmigen Produkten gemäß dem Oberbegriff des Anspruchs 1, eine Fertigungslinie für den vorgenannten Zweck gemäß dem Oberbegriff des Anspruchs 18.

In der Praxis ist es bekannt, dass beispielsweise bei der Herstellung von Würsten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und durch Setzen eines zweiten Clips verschlossen. Wenn das wurstförmige Produkt bzw. das Wurstprodukt zur weiteren Verarbeitung aufgehängt werden soll, wird üblicherweise in den zweiten Clip ein Aufhängeelement, meist eine Fadenschlaufe, eingelegt und mit diesem zweiten Clip an dem Wurstprodukt befestigt. Anschließend werden die Wurstprodukte auf Speicherstangen aufgereiht, um weiterverarbeitet, beispielsweise geräuchert, zu werden.

Aus der DE 39 35 746 A1 ist hierzu ein Verfahren und eine Vorrichtung zum mechanisierten Aufhängen von Wurstprodukten bekannt. Dabei greift ein aus zwei zunächst deckungsgleich aneinanderliegenden, verschwenkbaren Teilhaken bestehendes Übergabeelement in das durch eine Fadenschlaufe gebildete Aufhängeelement ein und entnimmt das Wurstprodukt aus der Clipmaschine. Anschließend werden die beiden Haken des Übergabeelements aus der Entnahmeposition, in der das Wurstprodukt aus der Clipmaschine entnommen worden ist, in eine Übergabeposition verschwenkt. Dabei werden gleichzeitig die beiden Haken auseinander gefahren.

In der Übergabeposition wird das Wurstprodukt an ein dort bereits wartendes Förderelement eines Endlosförderers übergeben. Die Förderelemente besitzen hierzu an ihrem unteren Ende zwei beabstandete Haken, deren Abstand kleiner ist als der Abstand der gespreizten Haken des Übergabeelements. Die Haken des Förderelements greifen in die gespreizte Schlaufe des Wurstprodukts ein und nehmen dieses so von dem Übergabeelement ab. Das Übergabeelement kann dann weitergedreht werden, bis es seine Ausgangsstellung wieder erreicht hat, in der wiederum die Teilhaken aneinander anliegen.

Mittels des Förderelements wird das an ihm hängende Wurstprodukt auf einer einseitig eingespannten Speicherstange abgelegt. Dazu wird das Förderelement so parallel über die Speicherstange hinweg geführt, dass die Schlaufe auf die Stange gefädelt wird. Ist eine bestimmte Position erreicht, drückt ein Druckbalken die Haken des Förderelements soweit nach unten, dass die Schlaufe des Wurstprodukts auf der Stange abgelegt wird. Anschließend wird das Förderelement weiter bewegt, so dass die Haken außer Eingriff mit der Schlaufe gelangen, sodass das Wurstprodukt an der entsprechenden Position auf der Stange verbleibt. Anschließend werden die Haken durch Anheben des Druckbalkens entlastet.

Ein Nachteil dieses bekannten Verfahrens bzw. dieser bekannten Vorrichtung besteht darin, dass die Ausrichtung des Übergabeelements zu der Entnahmeposition an der Clipmaschine und dem in der Übergabeposition befindlichen Förderelement äußerst präzise erfolgen muss. Schon bei geringsten Abweichungen können die Schlaufen von dem Übergabeelement entweder in der Entnahmeposition an der Clipmaschine nicht erfasst werden und/oder in der Übergabeposition nicht an die Förderelemente übergeben werden. Auch die diskontinuierliche Förderung durch Anhalten der Förderelemente zum Übernehmen der Wurstprodukte von dem Übergabeelement erweist sich als nachteilig, da hierdurch Schaukelbewegungen der an anderen Förderelementen hängenden Würste beim Anhalten und wieder Anfahren des Endlosförderers ausgelöst werden können, was zu zusätzlichen Belastungen der Fördereinrichtung führt. Darüber hinaus muss sich der Druckbalken, der das Absenken der Haken der Förderelemente bewirkt, über die gesamte Länge einer Speicherstange erstrecken, da er nur so die Wurstprodukte auf der gesamten Speicherstange durch Absenken der Haken eines Förderelements verteilen kann. Schließlich bedarf es ebenfalls eines genauen Anhaltens der Förderelemente, um einen gleichmäßigen Abstand der Wurstprodukte auf der Speicherstange zu gewährleisten.

Es ist Aufgabe der vorliegenden Erfindung, ein Verfahren zum Steuern einer Fertigungslinie zur Herstellung von wurstförmigen Produkten und eine Fertigungslinie der eingangs genannten Art, mit einer Clipmaschine und einer Beschickungsmaschine hierfür bereit zu stellen, die die genannten Nachteile überwinden und ein kontinuierliches, prozesssicheres Beladen von Speichestangen mit an Aufhängeelementen hängenden wurstförmigen Produkten ermöglichen.

Die vorstehende Aufgabe wird hinsichtlich des Verfahrens durch die Merkmale des Anspruchs 1 gelöst. In den sich daran abschließenden Ansprüchen 2 bis 17 finden sich vorteilhafte Ausgestaltungen hierzu.

Insbesondere wird hierzu ein Verfahren zum Steuern einer Fertigungslinie zur Herstellung von wurstförmigen Produkten vorgeschlagen, wobei die wurstförmigen Produkte in einem schlauchförmigen Verpackungshüllenmaterial ein fließfähiges Füllgut, wie Wurstbrät, Dichtmasse, Granulat und dgl. aufnehmen. Hierbei enthält die Fertigungslinie zumindest eine Clipmaschine, in der das mit Füllgut befüllte Verpackungshüllenmaterial in einzelne wurstförmige Produkte durch Setzen von Verschlussclips portioniert und von dem Vorrat an übrigem Verpackungshüllenmaterial abgetrennt wird, wobei beim Setzen der Verschlussclips mindestens ein flexibles Aufhängeelement an dem wurstförmigen Produkt angebracht werden kann, das in der Clipmaschine getaktet zugeführt wird, und eine Beschickungsmaschine, die Speicherstangen für die Weiterverarbeitung der wurstförmigen Produkte einzeln mit wurstförmigen Produkten beschickt bzw. belädt. Dabei werden zum Beschicken der Speicherstangen mit wurstförmigen Produkten kontinuierlich entlang eines Förderwegs umlaufende Förderelemente verwendet, die die aus der Clipmaschine auslaufenden wurstförmigen Produkte in einem zwischen der Clipmaschine und der Beschickungsmaschine vorgesehenen Übernahmebereich übernehmen. Weiterhin ist vorgesehen, dass zumindest die Umlaufgeschwindigkeit der Förderelemente der Beschickungsmaschine auf Basis einer aus der Clipmaschine abgeleiteten Steuergröße gesteuert wird.

In Folge des Steuerns zumindest der Umlaufgeschwindigkeit der Förderelemente der Beschickungsmaschine auf Basis einer aus der Clipmaschine abgeleiteten Steuergröße wird eine erste Abstimmung der Beschickungsmaschine mit der Clipmaschine und damit mit der Produktionsgeschwindigkeit in der Clipmaschine erreicht. Hierdurch kann auf einfache Weise ein gut verzahnter Fördervorgang zwischen Clipmaschine und Beschickungsmaschine bereitgestellt werden. Weiterhin wird die Möglichkeit zu einem kontinuierlichen Betrieb des Endlosförderers eröffnet. Mit anderen Worten laufen im Gegensatz zu dem Stand der Technik, bei dem ein Start-/Stopbetrieb des Endlosförderers erfolgt, die Förderelemente des Endlosförderers gemäß der Erfindung kontinuierlich um.

Wird die Umlaufgeschwindigkeit der Förderelemente auf einem zumindest zeitabschnittsweise wenigstens annährend konstanten Sollwert gehalten, der durch die aus der Clipmaschine abgeleiteten Steuergröße bestimmt wird, können Schaukelbewegungen der wurstförmigen Produkte minimiert werden, wodurch die Bewegung des Endlosförderers beruhigt und mechanischer Verschleiß u. a. an dem Endlosförderer verringert wird.

Für die aus der Clipmaschine abgeleitete Steuergröße können die unterschiedlichsten Werte der Clipmaschine Verwendung finden. Besonders vorteilhaft ist es, wenn die aus der Clipmaschine abgeleitete Steuergröße für die Umlaufgeschwindigkeit der Förderelemente die Zuführgeschwindigkeit der Aufhängeelemente in der Clipmaschine ist. Die Zuführgeschwindigkeit der Aufhängeelemente gibt den tatsächlichen Produktionstakt für die Herstellung der wurstförmigen Produkte in der Clipmaschine vor, da an jedem der Produkte ein Aufhängeelement befestigt wird. Selbst wenn nur an jedem zweiten, dritten usw. wurstförmigen Produkt ein Aufhängelement angebracht wird, was, um Wurstpaare bzw. Wurstketten zu bilden, grundsätzlich gemäß der Erfindung möglich ist, stellt die Zuführgeschwindigkeit für die Aufhängeelemente eine derjenigen aus der Clipmaschine ableitbaren Größen dar, die die tatsächliche Produktionsgeschwindigkeit in der Clipmaschine gut beschreibt.

Da aber die Umlaufgeschwindigkeit der Förderelemente zusätzlichen Störungen, wie beispielsweise Störungen in Folge aufgetretenen Verschleißes oder in Folge von Schaukelbewegungen der wurstförmigen Produkte, ausgesetzt ist, die zu Schwankungen in der Umlaufgeschwindigkeit der Förderelemente führen, ist es von Vorteil, der Steuerung der Umlaufgeschwindigkeit eine Regelung zu überlagern.

Die Regelung kann dabei auf Basis verschiedener Regel- und Führungsgrößen erfolgen. Beispielsweise kann vorgesehen sein, dass mit der der Steuerung der Umlaufgeschwindigkeit überlagerten Regelung der Zeitpunkt des Erreichens einer Übernahmeposition in der Beschickungsmaschine durch die Förderelemente zum kontinuierlichen Übernehmen von wurstförmigen Produkten geregelt wird. Hierdurch kann gewährleistet werden, dass sich zum Übernahmezeitpunkt immer ein Produkt in der Übernahme- bzw. Übergabeposition befindet.

Die eigentliche Regelung selbst kann wiederum auf unterschiedlichen Wegen erfolgen. So kann die Regelung der Umlaufgeschwindigkeit der Förderelemente auf Basis der Abweichungstendenz des Abstandes der Förderelemente von einer vorbestimmten Position an dem Förderweg der Förderelemente durchgeführt werden. Denn mit der Ermittlung der Abweichungstendenz kann der Einfluss fast aller Störungen auf die Umlaufgeschwindigkeit der Förderelemente erfasst und korrigiert werden. Bei Zunahme der Abweichungstendenz wird die Umlaufgeschwindigkeit der Förderelemente erhöht und bei Abnahme der Abweichungstendenz verringert.

Auch für die vorbestimmte Position kann jede geeignete Position entlang des Förderwegs der Förderelemente ausgewählt werden. Da die Übernahmeposition der Förderelemente, in der sie ein wurstförmiges Produkt von der Clipmaschine übernehmen, eine klar definierte Position ist, kann es weiterhin vorteilhaft sein, als die vorbestimmte Position die Übernahmeposition der Förderelemente in der Beschickungsmaschine zur Übernahme der aus der Clipmaschine auslaufenden wurstförmigen Produkte zu wählen. Hierdurch kann gewährleistet werden, dass sich zum Übernahmezeitpunkt immer ein Förderelement in der Übernahmeposition befindet.

Die Bestimmung der Abweichungstendenz kann wiederum auf die verschiedensten Art und Weisen erfolgen. So kann zur Bestimmung der Abweichungstendenz der Abstand eines bestimmten Förderelements von der vorbestimmten Position in einem Umlauf entlang des Förderwegs mit dem Abstand des bestimmten Förderelements von der vorbestimmten Position in einem nachfolgenden Umlauf verglichen werden. Alternativ kann zur Bestimmung der Abweichungstendenz der Abstand eines bestimmten Förderelements von der vorbestimmten Position in einem Umlauf entlang des Förderwegs mit dem Abstand des nachfolgenden Förderelements von der vorbestimmten Position in dem gleichen Umlauf verglichen werden. In beiden Fällen kann sehr genau die Entwicklung der Umlaufgeschwindigkeit der Förderelemente erfasst und durch die Regelung entsprechend schnell auf Veränderungen reagiert werden.

Neben den bereits erwähnten Maschinen können bei der erfindungsgemäßen Fertigungslinie noch weitere Maschinen hinzugefügt werden. So kann beispielsweise eine vorzugsweise getaktet betriebenen Füllmaschine in der Fertigungslinie angeordnet werden, die in der Fertigungslinie stromaufwärts der Clipmaschine bzw. entgegen der Produktionsablaufrichtung der Fertigungslinie vor der Clipmaschine angeordnet wird und die vorzugsweise das Füllgut dem Verpackungshüllenmaterial in der Clipmaschine zuführt. Hierdurch wird es ermöglicht, diese in die Steuerung der gesamten Fertigungslinie zu integrieren, wodurch eine weitere Erhöhung der Prozesssicherheit erreicht wird. Dabei kann die Füllmaschine kontinuierlich oder diskontinuierlich betrieben werden.

Wenn der Betrieb der Füllmaschine bei einer Störung des Betriebs der Beschickungsmaschine angehalten wird, kann eine weitere Zufuhr von Füllgut zur nachgeschalteten Clipmaschine vermieden und eine drohende Verstopfung der Clipmaschine verhindert werden.

Wird zum Anhalten der Füllmaschine ein an der Füllmaschine anliegendes Freigabesignal durch die Beschickungsmaschine weggenommen, kann diese fast zeitgleich beim Erkennen einer Störung in der Beschickungsmaschine abgeschaltet werden.

Es ist vorteilhaft, wenn bei einer Störung des Betriebs der Beschickungsmaschine der Betrieb der Clipmaschine zumindest bis zur Fertigstellung des gerade zu befüllenden wurstförmigen Produkts fortgesetzt wird und nach der Fertigstellung der Betrieb der Clipmaschine angehalten wird. So wird gewährleistet, dass sich beim erneuten Einschalten in der Clipmaschine keine halbfertigen Produkte befinden, die sofort wieder Störungen auslösen könnten.

Darüber hinaus ist es von Vorteil, wenn bei einer Störung des Betriebs der Beschickungsmaschine das Förderelement, das gerade in der Übernahmeposition der Beschickungsmaschine ein wurstförmiges Produkt von der Clipmaschine übernimmt, aus der Übernahmeposition herausgefahren wird, bevor der Betrieb der kontinuierlich umlaufenden Förderelemente angehalten wird. Beim nächsten Anfahren der Fertigungslinie ist die Übernahmeposition der Beschickungsmaschine und die Übergabeposition der Clipmaschine leer, sodass ein Produkt, das sich noch auf der Austragstrecke der Clipmaschine befindet, in die Übergabeposition gefördert werden kann.

Weiterhin ist es vorteilhaft, wenn das Anhalten der kontinuierlich umlaufenden Förderelemente erfolgt, bevor das Förderelement, das gerade in der Übernahmeposition ein wurstförmiges Produkt von der Clipmaschine übernommen hat, eine zu beschickende Speicherstange erreicht hat. Hierdurch wird die Speicherstange nicht von dem Förderelement blockiert und kann, falls dies erforderlich ist, entnommen werden.

Zur Ausgestaltung der Steuerung bzw. Regelung kann weiterhin eine Steuereinrichtung vorgesehen sein, die in der Lage ist, zumindest die Umlaufgeschwindigkeit der Förderelemente der Beschickungsmaschine auf Basis der aus der Clipmaschine abgeleiteten Steuergrößen zu steuern. Dabei kann die Steuereinrichtung auch dazu verwendet werden, zumindest den aufeinander abgestimmten Betrieb der Beschickungsmaschine und der Clipmaschine zu steuern.

Hinsichtlich der Fertigungslinie wird die vorstehende Aufgabe durch die Merkmale des Anspruchs 20 gelöst. In den sich daran abschließenden Ansprüchen 21 bis 25 finden sich vorteilhafte Ausgestaltungen hierzu.

Insbesondere wird eine Fertigungslinie zum Herstellen von wurstförmigen Produkten vorgeschlagen, die in einem schlauchförmigen Verpackungshüllenmaterial ein fließfähiges Füllgut, wie Wurstbrät, Dichtmasse, Granulat und dgl. aufnehmen, wobei die Fertigungslinie zumindest aufweist: eine Clipmaschine, in der das mit Füllgut befüllte Verpackungshüllenmaterial in einzelne wurstförmige Produkte durch Setzen von Verschlussclips portioniert und von dem Vorrat an übrigem Verpackungshüllenmaterial abgetrennt wird, wobei beim Setzen der Verschlussclips mindestens ein flexibles Aufhängeelement angebracht werden kann, das in der Clipmaschine getaktet zugeführt wird, und eine Beschickungsmaschine, die Speicherstangen für die Weiterverarbeitung der wurstförmigen Produkte einzeln mit wurstförmigen Produkten beschickt bzw. belädt und die kontinuierlich entlang eines Förderwegs umlaufende Förderelemente aufweist, welche die aus der Clipmaschine auslaufenden wurstförmigen Produkte in einem zwischen der Clipmaschine und der Beschickungsmaschine vorgesehenen Übernahmebereich übernehmen, wobei eine Steuereinrichtung vorgesehen ist, welche in der Lage ist, zumindest die Umlaufgeschwindigkeit der Förderelemente der Beschickungsmaschine auf Basis einer aus der Clipmaschine abgeleiteten Steuergröße zu steuern.

Dabei ist es vorteilhaft, wenn die Steuereinrichtung in der Lage ist, der Steuerung der Umlaufgeschwindigkeit eine Regelung zu überlagern. Weiterhin ist es vorteilhaft, wenn die Steuereinrichtung in der Lage ist, zumindest den aufeinander abgestimmten Betrieb der Beschickungsmaschine und der Clipmaschine zu steuern.

In einer bevorzugten Ausführungsform der Fertigungslinie ist die Förderstrecke zwischen der Clipmaschine und der Beschickungsmaschine unterbrochen, wobei vorzugsweise die Unterbrechung der Förderstrecke zwischen Clipmaschine und Beschickungsmaschine durch einen Übernahmebereich gebildet ist, in dem der Förderweg der Clipmaschine in einer Übergabeposition endet und in dem die Förderelemente der Beschickungsmaschine in einer beschickungsmaschinenseitigen Übernahmeposition die in der clipmaschinenseitigen Übergabeposition befindlichen wurstförmigen Produkte einzeln übernehmen.

Durch eine solche Anordnung wird der physische Kontakt zwischen den Komponenten der Fertigungslinie unterbrochen, wodurch mechanischer Verschleiß verhindert wird. Darüber hinaus bedarf es keiner präzisen Positionierung der Clipmaschine gegenüber der Beschickungsmaschine. Bei vorzunehmenden Wartungsarbeiten an einer der beiden Maschinen kann diese jeweils aus dem Verbund der Fertigungslinie hierdurch herausgenommen werden, ohne dass die andere Maschine bewegt werden muss. Die Clipmaschine kann abschwenken, zum Beispiel zum Aufziehen einer neuen Darmraupe, ohne dass die Beschickungsmaschine bewegt werden muss.

Wie bereits vorstehend erwähnt worden ist, können in der erfindungsgemäßen Fertigungslinie neben einer Clipmaschine und einer Beschickungsmaschine noch weitere Maschinen vorgesehen sein, wie beispielsweise eine Füllmaschine zum Zuführen von Füllgut an das Verpackungshüllenmaterial in der Clipmaschine, die in der Fertigungslinie stromaufwärts der Clipmaschine angeordnet ist.

Die Fertigungslinie umfasst weiterhin eine Clipmaschine. Die Clipmaschine selber enthält wenigstens zwei Verschließwerkzeuge, die zum Setzen und Verschließen von Clips an dem wurstförmigen Produkt relativ zueinander zwischen einer Öffnungsstellung und einer Verschließstellung bewegbar sind, mindestens eine Clipspeichereinrichtung, von der Clips den Verschließwerkzeugen zuführbar sind, eine Speichereinrichtung zum Speichern eines Vorrats an Verpackungshüllenmaterial, eine Trenneinrichtung zum Abtrennen von Verpackungshüllenmaterial eines einzelnen Wurstprodukts von dem Vorrat an Verpackungshüllenmaterial, ein Füllrohr zum Zuführen von Füllgut, eine Austragfördereinrichtung zum Austragen von wurstförmigen Produkten aus der Clipmaschine entlang einer Austragstrecke für die wurstförmigen Produkte und eine Zuführeinrichtung für flexible Aufhängeelemente, aus der Aufhängeelemente beim Setzen von Clips einem der Verschließwerkzeuge zuführbar sind, wobei die Austragstrecke für die wurstförmigen Produkte einen ersten Förderweg für die wurstförmigen Produkte und parallel zu dem Förderweg für die wurstförmigen Produkte ein von dem Förderweg für die wurstförmigen Produkte getrennten Förderweg für das mit einem wurstförmigen Produkt verbundene Aufhängeelement vorgesehen ist.

Dadurch werden zum einen die wurstförmigen Produkte sicher aus der Clipmaschine geführt, zum anderen können so die Aufhängeelement optimal auf die Übergabe vorbereitet werden.

Endet der Förderweg für die wurstförmigen Produkte und der Förderweg für das mit einem wurstförmigen Produkt verbundene Aufhängeelement in einer Übergabeposition, in der ein wurstförmiges Produkt zur Übergabe für eine Weiterverarbeitung definiert bereit gehalten werden kann, ist gewährleistet, dass die wurstförmigen Produkte direkt nach der Fertigstellung zur Übergabe für eine Weiterverarbeitung gelangen.

Zweckmäßig ist an der Übergabeposition zumindest ein Übergabeelement zur Übergabe der wurstförmigen Produkte vorgesehen, das an seinem von der Clipmaschine wegweisenden Ende gabelförmig ausgestaltet ist. Dadurch kann ein entsprechend gestaltetes Förderelement das wurstförmige Produkt berührungsfrei aus der Übergabeposition entnehmen, wodurch zusätzliche Störquellen ausgeschaltet werden.

Wird wenigstens ein Sensor an der Übergabeposition vorgesehen, der das Vorhandensein eines wurstförmigen Produkts erfasst, kann hierdurch der kontinuierliche und störungsfreie Betrieb weiter sichergestellt werden.

Um Beschädigungen an den Aufhängeelementen zu vermeiden, kann der Förderweg für die Aufhängeelemente durch eine Gleitschiene mit einem geeigneten Querschnitt gestaltet sein. In einem bevorzugten Ausführungsbeispiel weist die Gleitschiene einen kreisförmigen Querschnitt auf. So können die Aufhängeelemente leicht, und ohne beschädigt zu werden, an ihr entlang gleiten.

Bevorzugt weist die Gleitschiene wenigstens zwei Lagereinrichtungen auf, die insbesondere jeweils durch drei vorzugsweise in einer gleichmäßigen Teilung in Umfangsrichtung der Gleitschiene angeordnete Stützrollen gebildet sein können, wodurch die Gleitschiene hinreichend sicher abgestützt wird.

Ist die Gleitschiene zwischen den Lagereinrichtungen abgewinkelt, kann ein wurstförmiges Produkt durch sein Eigengewicht am abgewinkelten Teil der Gleitschiene entlang gleiten. Das ist dann vorteilhaft, wenn die Abwinkelung in der nähe der beschickungsmaschinenseitigen Lagereinrichtung vorgesehen ist und die Schiene nach unten abgewinkelt ist. Darüber hinaus kann durch diese Anordnung ein gegebenenfalls auftretendes Mitdrehen der Gleitschiene verhindert werden.

Um das Durchfädeln des Aufhängelements durch die Lagereinrichtungen zu erleichtern, kann weiterhin vorgesehen sein, dass die Gleitschiene im Bereich der Lagereinrichtung eine antreibbare Hohlwelle aufweist, die koaxial zu der Gleitschiene angeordnet ist.

In einer vorteilhaften Ausführungsform ist die Gleitschiene im Bereich der Lagereinrichtungen mit einer gewindeförmig umlaufenden Nut versehen, um eine Durchführung der Aufhängeelemente durch die Lagereinrichtungen zu ermöglichen. Vorzugsweise kann die gewindeförmig umlaufende Nut auf der Hohlwelle vorgesehen sein.

In einer weiteren bevorzugten Ausführung weist die Gleitschiene im Bereich der Stützrollen eine konvexe Oberfläche auf, während die Stützrollen eine entsprechend konkave Oberfläche besitzen. Dadurch wird zusätzlich zur Abstützung der Gleitschiene eine axiale Sicherung erreicht.

Es ist vorteilhaft, wenn mindestens eine der Stützrollen jeder Lagereinrichtung antreibbar ist, da hierdurch die Hohlwelle auf eine Weise angetrieben werden kann und so eine Zwangsführung der Aufhängeelemente durch die Lagereinrichtung erreicht wird.

Ist am clipmaschinenseitigen Ende der Gleitschiene ein Einfädelkegel vorgesehen, so können mit dessen Hilfe die Aufhängeelemente der wurstförmigen Produkte sicher auf die Gleitschiene geführt werden.

Eine sich an das clipmaschinenseitige Ende der Gleitschiene anschließende Fangeinrichtung für die Aufhängeelemente, die von der Gleitschiene bis in den Verschließbereich der Verschließwerkzeuge reicht, stellt sicher, dass alle gefangenen Aufhängeelemente sicher zur Gleitschiene geführt werden. In einer bevorzugten Ausführung ist die Fangeinrichtung abgewinkelt und besitzt eine kegelförmige Fangspitze.

Es ist weiterhin vorteilhaft, wenn die Aufhängeelemente durchs Fadenschlaufen gebildet sind, da diese flexibel und leicht zu handhaben sind.

Die Fertigungslinie enthält weiterhin eine Beschickungsmaschine, wobei Speicherstangen zum Aufhängen der wurstförmigen Produkte vorgesehen sind, die an ihrem einen Ende ein flexibles Aufhängelement aufweisen, welches über die Speicherstangen führbar ist und welches eine geschlossene und eine offene Ausgestaltung annehmen kann. Weiterhin enthält die Beschickungsmaschine eine Einrichtung zur endseitigen Einspannung einer am anderen Ende freien Speicherstange, und eine Einrichtung zum aufeinanderfolgenden Zuführen der an ihren Aufhängeelementen hängenden wurstförmigen Produkte zur Speicherstange unter Führung der Aufhängeelemente über die Speicherstange von deren freiem Ende her und Ablegen der Aufhängelemente an voneinander beabstandeten Stellen entlang der Speicherstange. Die Einrichtung zum aufeinanderfolgenden Zuführen kann dabei einen Endlosförderer mit einem parallel zur Speicherstange verlaufenden Trum aufweisen, wobei der Endlosförderer zur Aufnahme der Aufhängeelemente aufeinanderfolgender wurstförmiger Produkte beabstandete Förderelemente trägt, welche aus einer die wurstförmigen Produkte an ihren Aufhängeelemente haltenden Stellung in eine die Aufhängeelemente auf der Speicherstange ablegenden Stellung bewegbar sind, und wobei wenigstens ein Steuerelement an beabstandeten Stellen entlang der Speicherstange die Bewegung der Förderelemente in ihre ablegende Stellung bewirkt. Weiterhin ist vorgesehen, dass die Förderelemente Haken aufweisen, die um horizontale Achsen aus ihrer die Aufhängeelemente haltenden Stellung in ihre die Aufhängeelemente ablegende Stellung schwenkbar sind und dass das Steuerelement ein entlang dem Trum des Endlosförderers entgegen dessen Vorlaufrichtung bewegtes Auslöseelement ist, welches die Schwenkung der Haken aus ihrer haltenden in ihre ablegende Stellung auslöst.

Durch einen solchen Aufbau ist es möglich, dass bei Vorhandensein eines wurstförmigen Produkts in der Übergabeposition, diese von nur einem Förderelement aus der Übergabeposition entnommen und an einer vorbestimmten Position auf einer Speicherstange abgelegt werden kann. Mit anderen Worten muss das Produkt von der Aufnahme durch das Förderelement aus der Übergabeposition bis zu seiner endgültigen Ablage auf einer Speicherstange an kein weiteres Transportelement übergaben werden. Dadurch werden weitere Fehlerquellen ausgeschlossen und die Automatisierung dieses Vorgangs vereinfacht.

Es ist von Vorteil, wenn die Haken jeweils aus zwei gleichartigen Teilhaken bestehen, die vor Erreichen einer Übernahmeposition der Beschickungsmaschine, in der die wurstförmigen Produkte von dem Förderelementen an deren Aufhängeelementen übernehmbar sind, deckungsgleich aneinander liegen und nach dem Verlassen der Übernahmeposition quer zur Erstreckung des Trums gegen Federkraft in eine die Aufhängeelemente offenhaltende Stellung spreizbar sind. So werden die Produkte sicher aus der Übergabeposition entnommen. Durch das anschließende Spreizen der Haken wird die Schlaufe soweit geöffnet, dass sie beschädigungsfrei und ohne Anstoßen über die Speicherstange geführt werden kann.

Ein in Rücklaufrichtung des Endlosförderers vor der Übernahmeposition für die Aufhängeelemente angeordnetes Stellglied kann die Haken nach dem Ablegen der wurstförmigen Produkte auf der Speicherstange wieder in ihre die Aufhängeelemente haltende Stellung bewegen. Dadurch wird sichergestellt, dass sich die Haken bei Erreichen der Übernahmeposition immer in dieser Stellung befinden und ein ungestörter Betrieb gewährleistet wird.

In einer bevorzugten Ausführung ist der Endlosförderer eine um eine Antriebsscheibe und eine Umlenkscheibe laufende Kette, wobei beide Scheiben um horizontale Achsen drehbar sind. Ketten erscheinen als besonders geeignet, da sie schlupffrei laufen und sich nicht dehnen, wie beispielsweise Riemen, wodurch der Abstand zwischen zwei Förderelementen immer gleichleibend ist.

Es ist vorteilhaft, wenn eine Abstützeinrichtung vorgesehen ist, die nach Teilbeschickung einer Speicherstange an diese zwischen ihren Enden aus einer Warteposition in eine Unterstützungsposition reversibel anschwenkbar ist. Durch das Befüllen der einseitig eingespannten Speicherstangen biegen sich diese nach unten durch. Sind sie aber durch eine Abstützeinrichtung gehalten, die beispielsweise mittig unter die Speicherstange greift, wird eine unzulässig weite Durchbiegung verhindert und die Stange kann sicher weiter befüllt werden.

Dabei ist es zweckmäßig, wenn die Abstützeinrichtung in die Unterstützungsposition mittels der Schwerkraft und in die Warteposition mittels eines motorischen Antriebs bewegbar ist, da hierdurch ein zusätzlicher Antrieb eingespart werden kann.

Die Unterstützung der Bewegung der Abstützeinrichtung in die Unterstützungsposition durch eine elastische Vorspannkraft, welche durch den motorischen Antrieb reproduzierbar ist, erhöht den vorgenannten Effekt.

Ist der motorische Antrieb der Abstützeinrichtung von einem Antrieb der Beschickungsmaschine ableitbar, so ist es möglich, dessen Bewegung an den Takt der Befüllungsmaschine anzupassen, das heißt, ihn beispielsweise beim Auswechseln einer gefüllten Speischerstange in die Warteposition zu bewegen.

In einer vorteilhaften Ausführung ist die Bewegung der Abstützeinrichtung aus der Warteposition in die Unterstützungsposition von einem Auslöseelement auslösbar. Hierdurch ist es möglich, die Abstützeinrichtung bei einem exakt festgelegten Füllstand in die Unterstützungsposition zu bewegen.

Es ist weiterhin vorteilhaft, wenn die Abstützeinrichtung eine Verriegelungseinrichtung aufweist, die die Abstützeinrichtung in der Warteposition reversibel verriegelt, wodurch diese sicher in der Warteposition gehalten wird.

Die Bewegung der Abstützeinrichtung kann entlang einer stetigen Kurvenbahn geführt sein, wobei die Kurvenbahn wenigstens zwei Unstetigkeitsstellen aufweist, die die Warteposition und die Unterstützungsposition definieren.

Zur Einspannung der Speicherstangen können wiederum die unterschiedlichsten Lösungen vorgesehen sein. So ist es aus dem vorstehend zitierten Stand der Technik bekannt, eine Einrichtung zur endseitigen Einspannung einer Speicherstange als Teil einer Revolverleinrichtung mit vorzugsweise vier Einspannköpfen auszugestalten. Erfindungsgemäß kann diese Revolvereinrichtung wenigstens in eine Einspannstellung, in eine Beschickungsstellung und in eine Abgabestellung drehbar sein. Hierbei kann es vorteilhaft sein, wenn zwischen der Einspannstellung und der Beschickungsstellung eine Prüfstellung vorgesehen ist, in der das Vorhandensein einer Speicherstange in einer Einspanneinheit und/oder die Geradeaus-Richtung der Speicherstange überprüft wird. Letzteres ist deshalb notwendig, da Speicherstangen verbogen oder beispielsweise falsch eingespannt sein können, was ein Auffädeln der wurstförmigen Produkte auf die Speicherstangen erschwert oder unmöglich macht.

Weist die Revolvereinrichtung einen motorischen Antrieb auf, von dem die Bewegung der Abstützeinrichtung aus der Unterstützungsposition in die Warteposition ableitbar ist, kann hierdurch in vorteilhafter Weise die Bewegung der Abstützeinrichtung gesteuert werden.

In einer bevorzugten Ausführungsform ist an der der Revolvereinrichtung gegenüberliegenden Seite der Beschickungsmaschine eine Prüfeinrichtung vorgesehen, die zumindest das Vorhandensein einer Speicherstange erfasst. Vorteilhaft ist es dabei, wenn die Prüfeinrichtung in der Lage ist, die Ausrichtung der Speicherstange zu erfassen, um deren korrekte axiale Ausrichtung festzustellen.

Weiterhin ist es vorteilhaft, wenn die Prüfeinrichtung in der Lage ist, eine falsch positionierte Speicherstange und/oder eine eine falsche Ausrichtung aufweisende Speicherstange aus der Revolvereinrichtung zu entfernen, da eine Ausrichtung einer unkorrekt eingelegten Stange zu aufwendig wäre. Dabei kann die Prüfeinrichtung dieses selber vornehmen oder auch durch eine andere Einrichtung, wie beispielsweise die Einspanneinrichtung vornehmen lassen.

Die Prüfeinrichtung kann ganz unterschiedlich aufgebaut sein. Eine besonders einfache und zuverlässige Gestaltung lässt sich dadurch erreichen, dass in der Prüfstellung die Speicherstange vom Einspannkopf mit Ihrem freien Ende axial in einen Testnapf der Prüfeinrichtung verschiebbar ist und im Falle einer Behinderung des Verschiebens aussonderbar ist.

In einer bevorzugten Ausführungsform sind die Förderelemente zur Übergabe der wurstförmigen Produkte an die Speicherstangen parallel über diese hinwegwegführbar, wodurch jede Ablageposition für die wurstförmigen Produkte auf der Speicherstange erreichbar ist.

Wenn die Teilhaken eines Förderelements unmittelbar vor Erreichen der Speicherstange spreizbar sind und vorzugsweise zum Spreizen der Teilhaken eine insbesondere trapezförmige Spreizleiste vorgesehen ist, wird sichergestellt, dass die Schlaufen bei Erreichen der Speicherstange soweit geöffnet sind, dass diese über die Stangen geführt werden können.

Um bei Beendigung eines Umlaufs der Förderelemente wieder wurstförmige Produkte aufnehmen zu können, ist es vorteilhaft, wenn die gespreizten Teilhaken der Förderelemente nach Erreichen des Endes der Speicherstange wieder zusammenführbar sind und vorzugsweise das Zusammenführen der gespreizten Teilhaken der Förderelemente beispielsweise mittels einer vorgespannten Feder durchführbar ist.

Wenn als Auslöseelement eine Auslösemutter, die vorzugsweise auf einer Spindel führbar ist, vorgesehen ist, bei deren Erreichen ein Förderelement durch Wegklappen der Haken das wurstförmige Produkt zur Ablage auf die Speicherstange freigibt, kann der Abstand zweier benachbarter Produkte genau eingestellt werden. Dabei kann die Auslösemutter so entgegen der Bewegungsrichtung der Förderelemente führbar sein, dass ein gleichmäßiges Befüllen der Speicherstangen erfolgt. Dabei kann die Auslösemutter in der Lage sein, einen Mechanismus zu betätigen, der das Wegklappen der Haken des Förderelements bewirkt.

Wenn das Förderelement unmittelbar vor Erreichen der Übernahmeposition ein Hakenaufrichtelement passiert, das die zur Freigabe des wurstförmigen Produkts weggeklappten Haken wieder aufrichtet, ist sichergestellt, dass ein in der Übergabeposition befindliches Produkt problemlos übernommen werden kann.

Es ist weiterhin vorteilhaft, wenn das Förderelement eine Klinkenvorrichtung aufweist, die die Haken des Förderelements in der weggeklappten Position sichert, sowie ggf. eine Klinkenvorrichtung, die die Haken des Förderelements in der aufgerichteten Position sichert. Dadurch wird ein sicheres Aufnehmen und Ablegen der wurstförmigen Produkte sichergestellt und Störungen vermieden.

Es kann eine Zuführeinrichtung für die Speicherstangen vorgesehen sein, die die Speicherstangen in Übereinstimmung mit dem Arbeitszyklus der Beschickungsmaschine zuführt, wodurch diese dem Bedarf entsprechend zugeführt werden können.

Ein kompliziertes Schwenken der Stangen wird vermieden, wenn die Zuführeinrichtung in der Lage ist, die Speicherstangen achsparallel zur Einspannvorrichtung der Revolvereinrichtung dieser zuzuführen, und die Speicherstangen koaxial mit der Einspannvorrichtung in die Beschickungsmaschine einlegt.

In einer vorteilhaften Ausführung besitzt die Zuführeinrichtung mindestens zwei, mit gleichmäßigen Teilungen versehene, starre Abstützelemente, auf denen ein Vorrat an Speicherstangen achsparallel zur Befüllrichtung abgelegt ist, die vorzugsweise durch mindestens zwei fördernde, mit gleichmäßigen Teilungen versehene Stangen durch eine intermittierende Bewegung die Speicherstangen in die Beschickungsmaschine transportiert werden können.

Wenn die intermittierende Bewegung durch mindestens einen Exzenter erzeugbar ist, kann die Fördergeschwindigkeit über die Drehzahl des Exzenters geregelt werden. Dabei ist es vorteilhaft, dass der mindestens eine Exzenter durch einen Riementrieb antreibbar ist, der von dem Antrieb der Revolvereinrichtung ableitbar ist, da so die Fördergeschwindigkeit der Stangen an die Produktionsgeschwindigkeit der wurstförmigen Produkte angepasst werden kann.

Zur Gewichts- und Qualitätskontrolle ist es weiterhin vorteilhaft, wenn im Bereich der Übernahmeposition eine Wiegeeinrichtung für die wurstförmigen Produkte vorgesehen ist, die wahlweise das Gewicht eines einzelnen wurstförmigen Produkts erfasst. Dabei kann die Wiegeeinrichtung einen in den Bewegungsweg eines Förderelements einschwenkbaren Wiegehebel aufweisen, an den ein zu wiegendes wurstförmiges Produkt von dem Förderelement übergebbar ist.

Weitere vorteilhafte Ausgestaltungen sowie ein Ausführungsbeispiel der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine schematische Übersichtsdarstellung einer erfindungsgemäßen Fertigungslinie;
- Fig. 2:: eine Ansicht der erfindungsgemäßen Beschickungsmaschine mit einer Austragstrecke für wurstförmige Produkte aus einer erfindungsgemäßen Clipmaschine;
- Fig. 2a:: eine schematische Darstellung einer Übergabeposition von einer Clipmaschine an einer Beschickungsmaschine innerhalb der in Fig. 1 wiedergegebenen Fertigungslinie in Draufsicht und in Seitenansicht ;
- Fig. 3:: eine teilweise geschnittene Seitenansicht der in Fig. 2 gezeigten Austragstrecke für die wurstförmigen Produkte aus der erfindungsgemäßen Clipmaschine;
- Fig. 4:: eine schematische Darstellung einer Lagereinrichtung einer Gleitschiene innerhalb der in den Fig. 2 und 3 gezeigten Austragstrecke der Clipmaschine gemäß der Erfindung;
- Fig. 5:: eine schematische Draufsicht der in Fig. 2a gezeigten Übergabeposition von der Clipmaschine an die Beschickungsmaschine;
- Fig. 6:: eine schematische, perspektivische Ansicht eines Endlosförderers und einer Revolvereinrichtung einer erfindungsgemäßen Beschickungsmaschine in einer Ansicht von unten;
- Fig. 6a:: eine schematische Darstellung einer Übergabeposition von einem Förderelement des in Fig. 6 dargestellten Endlosförderers der erfindungsgemäßen Beschickungsmaschine an eine Speicherstange innerhalb der Beschickungsmaschine gemäß der Erfindung;
- Fig. 7:: eine schematische Ansicht des revolverseitigen Endes des in Fig. 6 gezeigten Endlosförderers;
- Fig. 8:: eine schematische, perspektivische Ansicht des Endlosförderers und der Revolvereinrichtung der erfindungsgemäßen Beschickungsmaschine in einer Ansicht von oben;
- Fig. 9:: eine schematische, perspektivische Ansicht der Revolvervorrichtung der erfindungsgemäßen Beschickungsmaschine in einer Ansicht von unten und in Richtung der Clipmaschine;
- Fig. 10:: eine schematische Ansicht einer Prüfeinrichtung der in der Fig. 2 gezeigten erfindungsgemäßen Beschickungsmaschine ;
- Fig. 10a bis 10d:: verschiedene Stellungen der in der Fig. 10 gezeigten Prüfeinrichtung;
- Fig. 11:: eine schematische Draufsicht auf eine Zuführeinrichtung für Speicherstangen in der in Fig. 2 gezeigten Beschickungsmaschine;
- Fig. 12:: eine schematische Darstellung eines Messprinzips zur Bestimmung einer Abweichtendenz der Förderelemente des Endlosförderers der in Fig. 2 gezeigten Beschickungsmaschine; und
- Fig. 13:: ein Blockschaltbild einer erfindungsgemäßen Steuerung mit überlagerter Reglung.

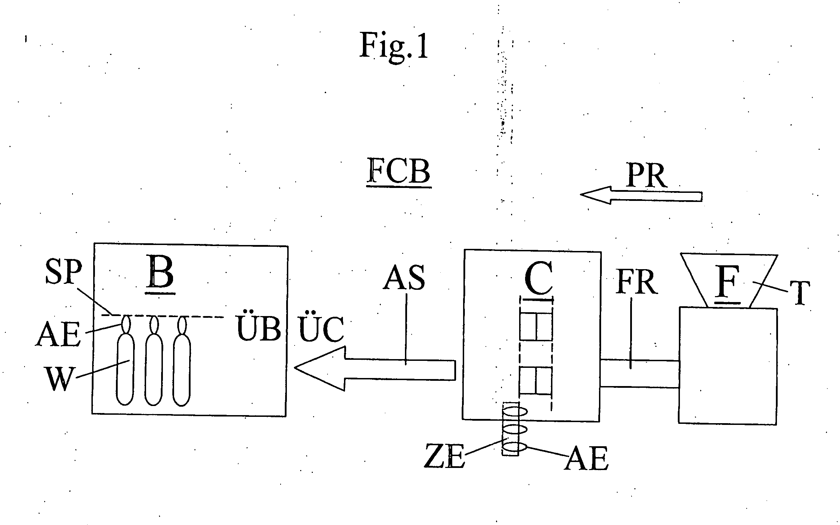

In Fig. 1 ist eine erfindungsgemäße Fertigungslinie FCB in ihrem prinzipiellen Aufbau schematisch wiedergegeben. Dieser Aufbau wird nachstehend in seinen Grundstrukturen erläutert.

Die erfindungsgemäße Fertigungslinie FCB dient zur Herstellung von wurstförmigen Produkten bzw. von Wurstprodukten W. Selbstverständlich kann die erfindungsgemäße Fertigungslinie FCB zur Herstellung anderer wurstförmiger Produkte W, wie beispielsweise wurstförmig portionierten Dichtmassen und dgl., eingesetzt werden. Generell kann die Fertigungslinie FCB gemäß der Erfindung für jedes fließfähige Füllgut, d.h. also auch Granulat, Flüssigkeiten usw. verarbeiten, das in ein Verpackungshüllenmaterial einfüllbar und als wurstförmiges Produkt portionierbar ist.

Wie aus Fig. 1 entnehmbar ist, setzt sich die erfindungsgemäße Fertigungslinie FCB aus einer Füllmaschine F, einer Clipmaschine C und einer Beschickungsmaschine B zusammen, die entsprechend ihrer Funktion in dieser Reihenfolge, die der Produktionsablaufrichtung PR der Fertigungslinie FCB entspricht, nacheinander angeordnet sind. Dabei wird aus der Füllmaschine F ein dort einem Fülltrichter T zugeführtes Füllgut, hier Wurstbrät, diskontinuierlich oder kontinuierlich mittels einer geeigneten Fördereinrichtung, wie beispielsweise einer Förderpumpe, der Clipmaschine C zugeführt. In der Clipmaschine C wird das Wurstbrät in ein in Fig. 1 ebenfalls nicht näher dargestelltes Verpackungshüllenmaterial eingefüllt und zu einzelnen Wurstprodukten W portioniert. Anschließend wird das so hergestellte Wurstprodukt W aus der Clipmaschine C über eine Austragstrecke AS der Clipmaschine C zu einer Übergabeposition ÜC ausgetragen. Von der Übergabeposition ÜC übernimmt ein in Fig. 1 nicht näher dargestelltes Förderelement eines Endlosförderers der Beschickungsmaschine B das Wurstprodukt W in einer Übernahmeposition ÜB. In der Beschickungsmaschine B werden die einzelnen Wurstprodukte W auf einzelne Speicherstangen SP hintereinander, aber beabstandet zueinander aufgefädelt. Anschließend können die Speicherstangen SP zur Weiterverarbeitung der Wurstprodukte W aus der Beschickungsmaschine B entnommen und beispielsweise einem Räucherofen und dgl. zugeführt werden.

Die Clipmaschine C verfügt über ein Füllrohr FR zum Zuführen des Füllguts aus der Füllmaschine F und ist über dieses mit der Füllmaschine F verbunden. Das Füllrohr FR kann dabei auch als Speicher für den Vorrat an Verpackungshüllenmaterial dienen, der in der Clipmaschine C verarbeitet wird. Des weiteren verfügt die Clipmaschine C über eine vorzugsweise durch ein Förderband gebildete Zuführeinrichtung ZE für flexible Aufhängeelemente AE. Die Aufhängeelemente AE, die vorzugsweise durch Fadenschlaufen gebildet sind, liegen dabei auf einem einseitig mit einem Kleber beschichteten Trägerband, von dem sie in der Clipmaschine C einzeln durch eine nicht näher dargestellte Matrize eines Clipsetz- und Clipschließwerkzeugs abgezogen werden. Wie aus Fig. 1 entnommen werden kann, ist die Zuführeinrichtung ZE für die Aufhängeelemente AE so an der Clipmaschine C im Bereich der Clipsetz- und Clipverschließwerkzeuge angeordnet, dass ihre Förderrichtung zumindest annährend senkrecht zur Produktionsablaufrichtung PR in der erfindungsgemäßen Fertigungslinie FCB verläuft.

In der Clipmaschine C wird das schlauchförmige Verpackungshüllenmaterial mit dem Wurstbrät befüllt und durch Setzen sowie Verschließen von Clips an entsprechenden Stellen in bekannter Weise zu Wurstprodukten portioniert. Dabei wird gleichzeitig an einem Ende jedes wurstförmigen Produkts W ein flexibles Aufhängeelement AE befestigt, das von der Zuführeinrichtung ZE in das Clipsetzund Clipverschließwerkzeug der Clipmaschine C eingelegt wurde. Anschließend wird das fertige Wurstprodukt W auf der Austragstrecke AS aus der Clipmaschine C ausgetragen. Die Austragstrecke AS der Clipmaschine C endet dabei in der Übergabeposition ÜC, an der die Wurstprodukte W von in Fig. 1 nicht näher dargestellten Förderelementen in einer Übernahmeposition ÜB der Beschickungsmaschine B einzeln übernommen und den Speicherstangen SP zugeführt werden. Die Übergabeposition ÜC am Ende der Austragstrecke AS der Clipmaschine C und die Übernahmeposition ÜB der Beschickungsmaschine B, in der die Förderelemente ein Wurstprodukt W, welches sich in der Übergabeposition ÜC der Clipmaschine C befindet, übernehmen, bilden zusammen einen Übernahmebereich ÜB, ÜC.

Es ist noch anzumerken, dass neben der vorstehend beschriebenen Vorgehensweise, an jedem Wurstprodukt W ein Aufhängelement AE anzubringen, auch die Möglichkeit besteht, ein Aufhängeelement AE an jedem zweiten, dritten usw. Wurstprodukt W anzubringen, wobei dann das Verpackungshüllenmaterial zwischen dem ersten, zweiten, dritten usw. Wurstprodukt W nicht durchtrennt wird. Hierdurch lassen sich Paare bzw. Ketten an Wurstprodukten W bilden.

In Produktionsablaufrichtung PR der Fertigungslinie FCB schließt sich an die Clipmaschine C die Beschickungsmaschine B an. Wie bereits vorstehend erwähnt worden ist, werden in dieser die Speicherstangen SP in achsparalleler Ausrichtung zu der Produktionsablaufrichtung PR der Fertigungslinie FCB, d.h. in einer horizontalen Ausrichtung in Fig. 1, zum Ablegen der Wurstprodukte W bereitgehalten. Dabei werden die Speicherstangen SP mit den Wurstprodukten W beschickt bzw. beladen, wobei die Wurstprodukte W einen zumindest annähernd gleich bleibenden Abstand zueinander aufweisen, der vorzugsweise so gewählt ist, dass sich die Außenseiten der Wurstprodukte W nicht berühren. Die Erzielung des Abstandes kann durch geeignete Mittel, wie Sie nachstehend noch näher erläutert werden, eingestellt werden.

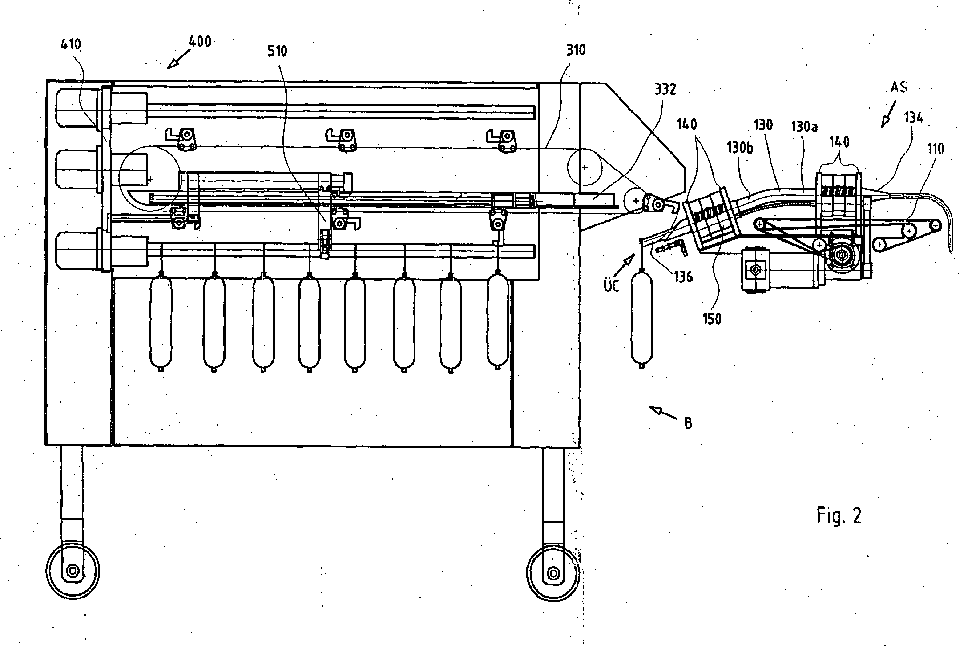

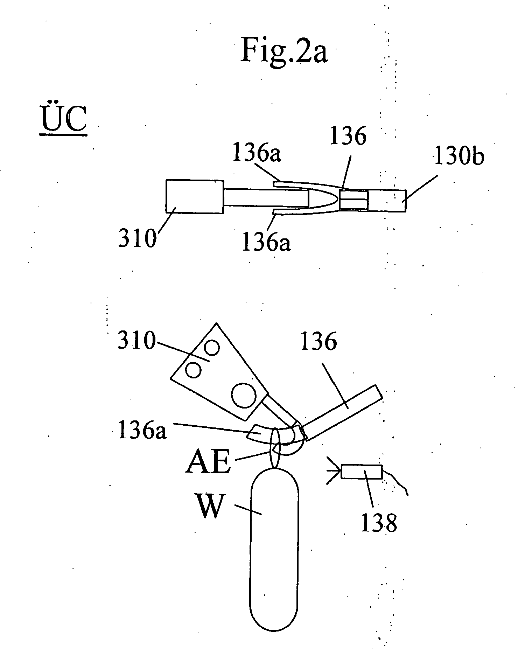

Nachstehend wird der Aufbau der Clipmaschine C, insbesondere ihrer Austragstrecke AS, unter Bezugnahme auf die Fig. 2 bis 4 näher erläutert.

In der Fig. 2 ist die Beschickungsmaschine B mit der vorgeschalteten Austragstrecke AS der Clipmaschine C wiedergegeben. An der Schnittstelle zwischen dem Ende der Austragstrecke AS der Clipmaschine C und der Beschickungsmaschine B ist der Übernahmebereich ÜC/ÜB vorgesehen, der durch die Übergabeposition ÜC der Clipmaschine C und der Übernahmeposition ÜB der Beschickungsmaschine B gebildet wird, wie dies vorstehend bereits erwähnt worden ist. Rechts von der Austragstrecke AS befindet sich die in Fig. 2 nicht näher dargestellte Clipmaschine C.

Die Austragstrecke AS der Clipmaschine C weist als wesentliche Bestandteile ein Förderband 110, eine Gleitschiene 130 und zwei die Gleitschiene 130 lagernde Lagereinrichtungen 140 auf. Dabei dient das Förderband 110 zum Transport der Wurstprodukte W, die auf dem Förderband 110 in einer horizontalen Ausrichtung mit zu der Beschickungsmaschine B bzw. der Clipmaschine C weisenden Wurstenden aufliegen. Demgegenüber ist die Gleitschiene 130 zum Führen der Aufhängeelemente AE eines durch das Förderband 110 transportierten Wurstprodukts W vorgesehen.

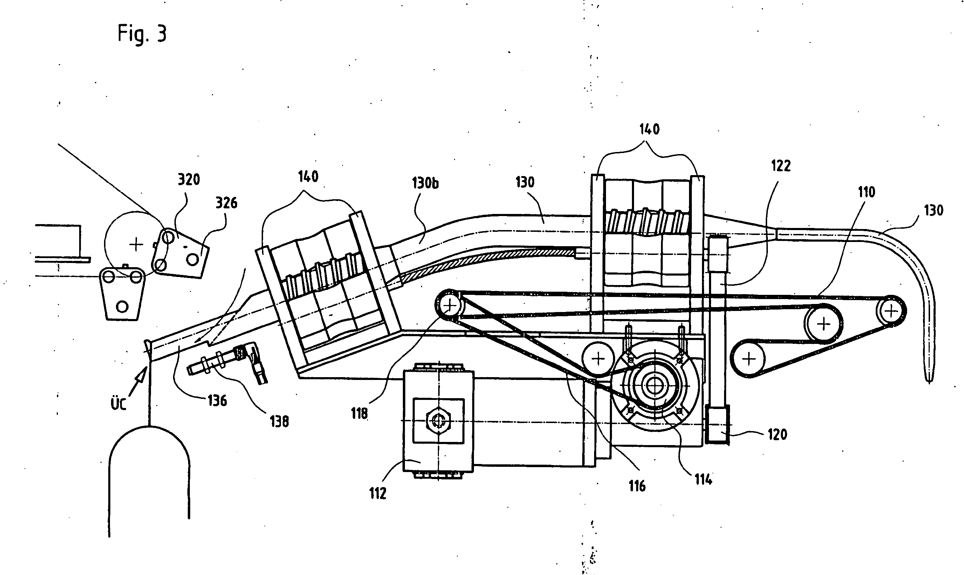

Das Förderband 110, das sich in etwa von den Clipsetz- und Verschließwerkzeugen der Clipmaschine C in die Nähe der zweiten Lagereinrichtung 140 erstreckt, wird über einen unterhalb des Förderbands 110 vorgesehenen Antriebsmotor 112 angetrieben (vgl. Fig. 3). Hierzu steht der Antriebsmotor 112 über ein nicht näher bezeichnetes Getriebe mit einer Riemenscheibe 114 in Wirkverbindung, über die ein Riemen 116 für den unmittelbaren Antrieb des Förderbands 112 geschlungen ist. Der Riemen 116 ist ebenfalls um eine in Fig. 3 links angeordnete Umlenkrolle 118 des Förderbands 110 geschlungen, die gleichzeitig als Antriebsrolle für das Förderband 110 dient. Das Förderband 110 wird weiterhin über mehrere nicht näher bezeichnete Walzen, deren Achsen senkrecht zur Transportrichtung des Förderbands 110 verlaufen, umgelenkt, und es kann so der Abstand des Förderbands zu den Verschließwerkzeugen verändert werden.

Von dem Antriebsmotor 112 wird darüber hinaus direkt von der Motorwelle eine Antriebskraft für die Gleitschiene 130 abgeleitet. Von dem unterhalb des Förderbands 110 und der Gleitschiene 130 angeordneten Winkelgetriebe 120 erstreckt sich hierzu ein, bezogen auf Fig. 3, vertikal nach oben verlaufender Antriebsriemen 122 in Richtung zu der Gleitschiene 130, der zum Drehantrieb der Gleitschiene 130 im Bereich der Lagereinrichtungen 140 in einer nachstehend noch näher beschriebenen Weise dient.

Die Gleitschiene 130 ist oberhalb des Förderbands 110 angeordnet und umfasst einen horizontal verlaufenden Gleitschienenabschnitt 130a, der sich von der Clipmaschine C nach links, bezogen auf die Fig. 2 bis 4, erstreckt sowie einen sich an das linke Ende des horizontal verlaufenden Gleitschienenabschnitts 130a anschließenden und von diesem Gleitschienenabschnitt 130a nach rechts unten schräg bzw. geneigt verlaufenden Gleitschienenabschnitt 130b. Durch das Abwinkeln der Gleitschiene 130 bewegt sich das Wurstprodukt W nach Verlassen des Förderbands 110 durch sein Gewicht selbstständig in die Übergabeposition ÜC. In beiden Abschnitten 130a, 130b weist die Gleitschiene 130 einen zumindest annährend kreisförmigen Querschnitt auf.

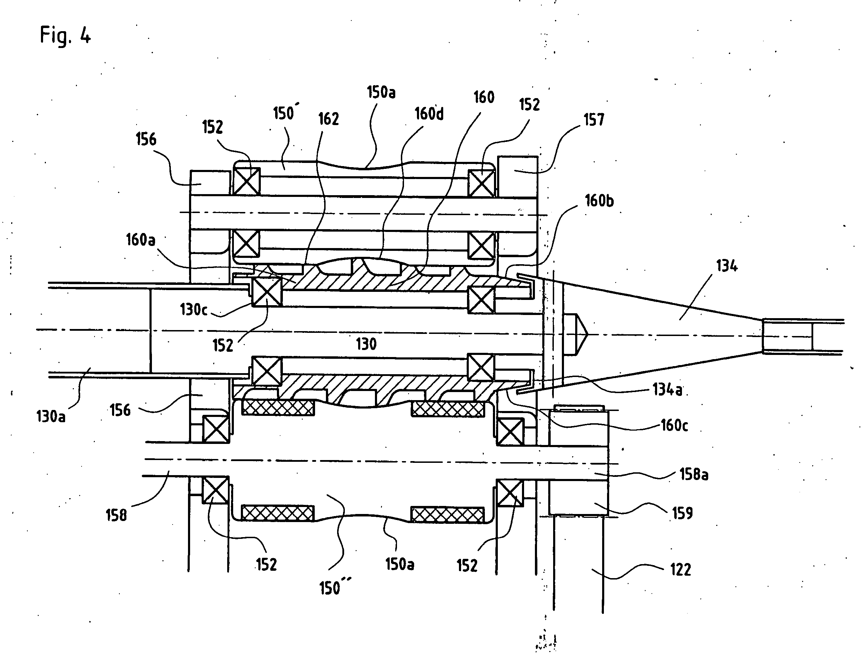

Wie insbesondere aus den Fig. 2 und 4 entnehmbar ist, ist die Gleitschiene 130 an ihrem clipmaschinenseitigen Ende mit einem Einfädelkegel 134 zum Einfädeln der Aufhängeelemente AE versehen. Der Einfädelkegel 134 bildet einen Teil einer nicht näher dargestellten Fangeinrichtung, die bis in den Verschließbereich der Clipsetz- und Clipverschließwerkzeuge der Clipmaschine C reicht, wodurch ein sicheres Auffädeln der durch die Fadenschlaufen gebildeten Aufhängeelemente AE gewährleistet ist. Der Einfädelkegel 134 ist koaxial zur Gleitschiene 130 ausgerichtet und weist mit seiner Spitze von ihr weg. Der Einfädelkegel 134 besitzt einen spitzen Kegelwinkel, wodurch das Führen eines Aufhängeelements AE erleichtert wird. An seinem zu der Gleitschiene 130 weisenden Ende ist der Einfädelkegel 134 noch mit einer ringförmig umlaufenden Ausnehmung 134a versehen.

An ihrem beschickungsmaschinenseitigen Ende der Gleitschiene 130 ist ein die Übergabeposition ÜC der Clipmaschine C definierendes, gabelförmiges Übergabeelement 136 an der Gleitschiene 130 angebracht. Wie aus der Fig. 2a ersichtlich ist, liegen die beiden Zinken 136a des gabelförmigen Übergabeelements 136 zumindest annährend in einer horizontalen Ebene. Die Enden der Zinken 136a sind so nach oben gebogen, dass ein an der Gleitschiene 130 heruntergleitendes Wurstprodukt W an ihnen hängen bleibt und sicher die Übergabeposition ÜC einnimmt, gleichzeitig aber ein Wurstprodukt W mittels eines nachstehend noch näher beschriebenen Förderelements der Beschickungsmaschine B von dem gabelförmigen Übergabeelement 136 abgenommen werden kann.

In der Nähe des gabelförmigen Übergabeelements 136 ist ein Sensor 138 angebracht, der das Vorhandensein eines Wurstprodukts W erfasst.

Zur Übergabe der Wurstprodukte W von der Austragstrecke AS der Clipmaschine C an die Beschickungsmaschine B liegen bzw. hängen die Produkte W am Ende der Austragstrecke AS in der Übergabeposition ÜC bereit, um dort von dem nachstehend noch näher beschriebenen Förderelement der Beschickungsmaschine B aufgenommen zu werden. Das gabelförmige Übergabeelement 136 weitet dabei das Aufhängeelement AE in der Weise auf, dass ein Abschnitt des Aufhängelements AE über die beiden Zinken 136a des gabelförmigen Übergabeelements 136 in einer Richtung senkrecht zu der Produktionsablaufrichtung PR der Fertigungslinie FCB gespannt verläuft. Dieser Abschnitt wird dann von dem Förderelement der Beschickungsmaschine B in der nachstehend beschriebenen Weise erfasst.

Die beiden die Gleitschiene 130 lagernden Lagereinrichtungen 140 sind jeweils gleich aufgebaut, so dass nachstehend nur eine der beiden Lagereinrichtungen 140, die clipmaschinenseitige Lagereinrichtung 140, im Zusammenhang mit insbesondere der Fig. 4 näher erläutert wird, die in dieser in einer Seitenansicht dargestellt ist. Die Lagereinrichtung 140 besteht aus drei Stützrollen 150, die in Umfangsrichtung der Gleitschiene 130 in gleichmäßiger Teilung um diese herum angeordnet sind, wobei in der Darstellung der Fig. 4 nur zwei der drei Stützrollen 150 sichtbar sind. Die obere Stützrolle 150' der beiden in Fig. 4 dargestellten Stützrollen 150 ist auf Kugellagern 152 um eine Achse 154 frei drehbar gelagert. Die Achse 154 ist in zwei an je einem der beiden stirnseitigen Enden der Achse 154 vorgesehenen Lagerwänden 156, 157 gehaltert, welche sich wiederum an dem Rahmen der Clipmaschine C abstützen.

Die in Fig. 4 sichtbare zweite, untere Stützrolle 150" ist drehfest mit einer Welle 158 verbunden und zusammen mit dieser in Kugellagern 152 drehbar an den Lagerwänden 156, 157 gelagert. Das linksseitige Ende der Welle 158 setzt sich parallel zu dem Verlauf der Gleitschiene 130 in einer flexiblen Welle fort, wie dies aus Fig. 2 entnehmbar ist, und dient als Antrieb für die entsprechende Stützrolle 150" in der beschickungsmaschinenseitigen Lagereinrichtung 140.

Wie aus Fig. 4 weiterhin hervorgeht, erstreckt sich das rechte Stirnende der Welle 158, das einen Wellenfortsatz 158a bildet, über die rechte Lagerwand 157 hinaus. Dieser Wellenfortsatz 158a steht über ein Kegel- oder Schneckenradgetriebe 159 in Dreheingriff mit der Antriebswelle 122, welche so die untere Stützrolle 150" antreibt. Weiterhin weist die untere Stützrolle 150" einen geringfügig größeren Außendurchmesser auf als die obere Stützrolle 150'.

Es ist noch zu bemerken, dass die in Fig. 4 nicht erkennbare Stützrolle 150, die, bezogen auf die Fig. 4, hinter der unteren, angetriebenen Stützrolle 150" liegt, ebenso aufgebaut ist wie die vorstehend beschriebene obere Stützrolle 150'.

Die Gleitschiene 130 ist im Bereich der Stützrollen 150 mit einer gegenüber der Gleitschiene 130 frei drehbaren Hohlwelle 160 versehen, die koaxial zu der Gleitschiene 130 auf diese aufgeschoben ist. Hierzu ist die Hohlwelle 160 auf Kugellagern 152 gelagert, die auf die starre Gleitschiene 130 aufgeschoben sind und von ihr durchsetzt werden. Das linke stirnseitige Wellenende 160a der Hohlwelle 160 schließt mit den linken stirnseitigen Enden der Stützrollen 150 ab. Dabei ragt die Hohlwelle 160 über einen Absatz 130c an der starren Gleitschiene 130 hinaus, der eine axiale Abstützung für das linke Kugellager 152 bildet, und deckt diesen Absatz 130c ab. Wie aus Fig. 4 ersichtlich ist, ragt das rechte stirnseitige Ende 160b der Hohlwelle 160 über die rechten Enden der Stützrollen 150 hinaus. Dieses rechte stirnseitige Ende 160b der Hohlwelle 160 weist eine Abschrägung 160c zur Gleitschiene 130 hin auf, mit dem die Hohlwelle 160 in die ringförmige Ausnehmung 134a des sich anschließenden Einfädelkegels 134 eingreift.

Wie weiterhin aus Fig. 4 ersichtlich ist, besitzen die Stützrollen 150 in ihrem axialen Mittenbereich an ihrer Außenumfangsfläche eine konkave Oberflächenkontur 150a und die Hohlwelle 160 an ihrem axialen Mittenbereich an ihrer Außenumfangsfläche eine entsprechend konvexe Oberflächenkontur 160d, wodurch die axiale Lagerung der Hohlwelle 160 unterstützt wird. Die Hohlwelle 160 und die Stützrollen 150 berühren sich in einer Mantellinie, wodurch die Hohlwelle 160 über die antreibbare untere Stützrolle 150" ebenfalls antreibbar ist. Hieraus ist erkennbar, dass die Gleitschiene 130 nur im Bereich der Hohlwelle 160 der beiden Lagereinrichtungen 140 drehbar ist, ihre übrigen Bauteile sind starr und ortsfest.

Die Hohlwelle 160 weist auf ihrer Oberfläche zusätzlich eine gewindeförmig umlaufende Nut 162. Diese ermöglicht die Durchführung der vom Einfädelkegel 134 eingefangenen Aufhängelemente AE durch die Lagereinrichtungen 140. Durch die Drehung der Hohlwelle 160 übernimmt die gewindeförmig umlaufende Nut 162 eine Transportfunktion für die Aufhängelemente AE. Dabei ist die Nut 162 so gestaltet, dass die Aufhängeelemente AE in Richtung der Beschickungsmaschine B transportiert werden.

Durch die vorstehend erläuterte Gestaltung der Lagereinrichtungen 140 wird eine sichere Lagerung der Gleitschiene 130 erreicht, ohne den Transport der Wurstprodukte W auf dem Transportband 110 entlang der Gleitschiene 130 zu behindern. Weiterhin wird durch den abgewinkelten Abschnitt 130b der Gleitschiene 130 erreicht, dass ein Wurstprodukt W in Folge seines eigenen Gewichts entlang des abgewinkelten Abschnitts 130b der Gleitschiene 130 in die Übergabeposition ÜC gleiten kann, ohne dass hierfür ein separater Antrieb notwendig ist. Darüber hinaus verhindert die Anordnung der beiden Lagereinrichtungen 140 in einem Winkel, dass sich die Gleitschiene 130 unbeabsichtigt mitdreht.

Es ist noch zu bemerken, dass die beiden von dem Antriebsmotor 112 mit einer Antriebskraft beaufschlagten Getriebe so aufeinander abgestimmt sind, dass das von dem Förderband 110 transportierte Wurstprodukt W und das zugehörige Aufhängelement AE gleichmäßig entlang der Austragstrecke AS förderbar sind und dass das von dem Förderband 110 am Ende der Förderstrecke des Förderbands 110 gleitende und mit seinem Aufhängeelement AE an der Gleitschiene 130 gehaltene Wurstprodukt W sicher und ohne große Pendelbewegung entlang der Gleitschiene 130, wie dies nachstehend noch näher erläutert wird, zu der Übergabeposition ÜC gleiten kann.

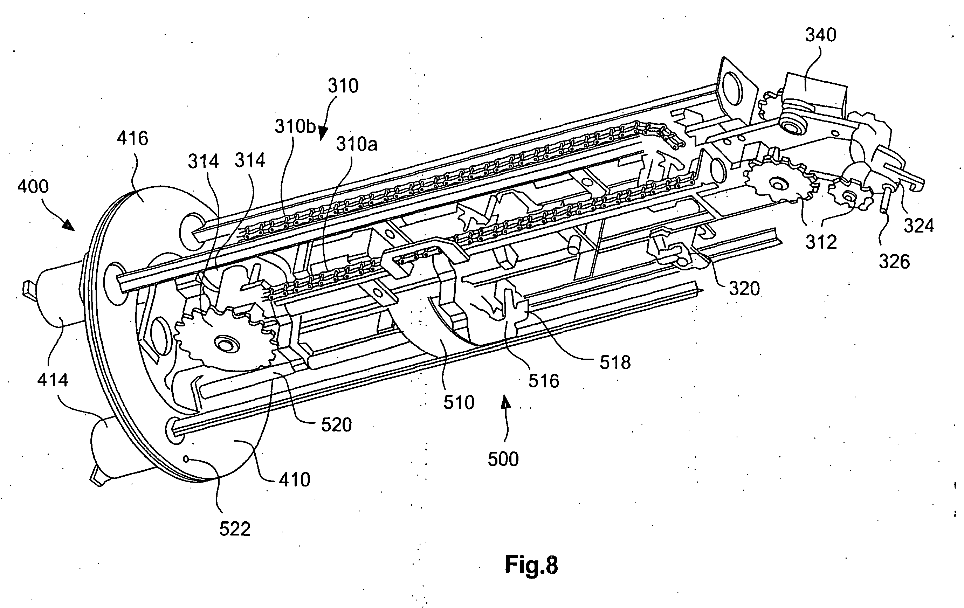

Nachstehend wird die Beschickungsmaschine B unter Bezugnahme auf die Fig. 2 und Fig. 5 bis 12 näher erläutert. Als wesentliche Bestandteile weist die Beschickungsmaschine B eine Fördereinrichtung 300, eine Revolvereinrichtung 400, eine Unterstützungseinrichtung 500, eine Vorratseinrichtung 600 für die Speicherstangen SP, eine Prüfeinrichtung 700 für die Speicherstangen SP sowie eine Wiegeeinrichtung 800 für die Wurstprodukte W auf.

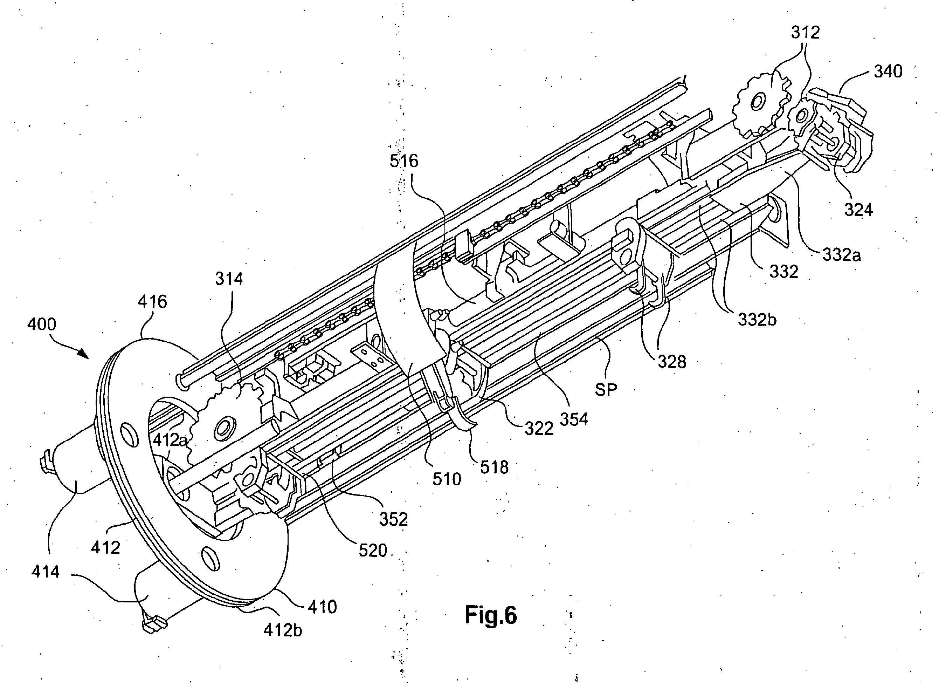

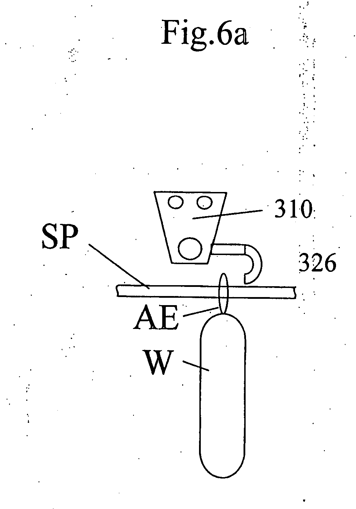

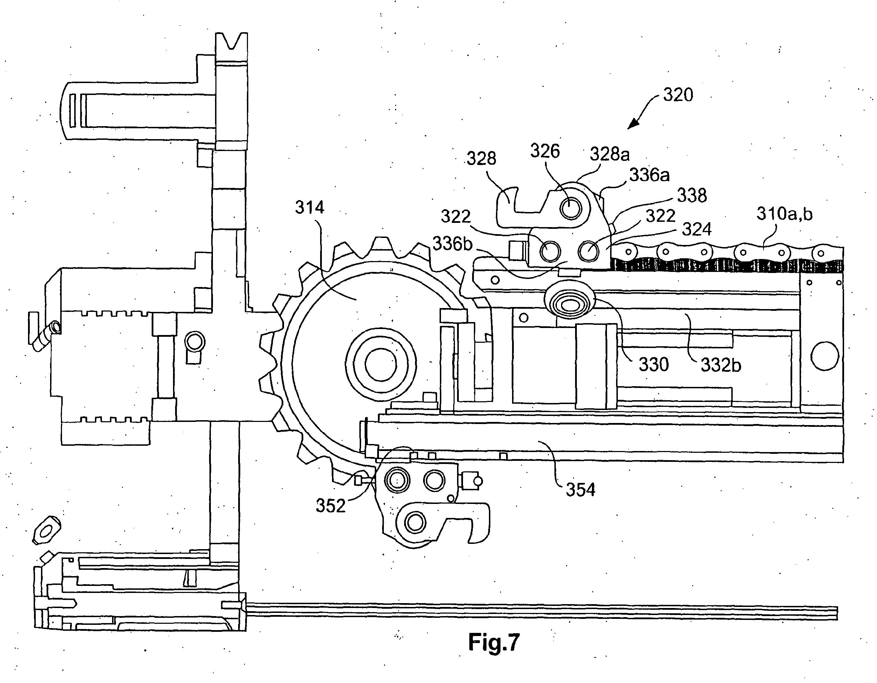

Die Fördereinrichtung 300 weist einen im Wesentlichen horizontal ausgerichteten Endlosförderer 310 auf, der in diesem Ausführungsbeispiel durch zwei weitestgehen in Horizontalebenen parallel, aber beabstandet zueinander verlaufende Endlosketten 310a, 310b gebildet ist. Diese laufen um zwei paarweise in Fig. 6 am rechten Ende des Endlosförderers 310 angeordnete freilaufende Ritzel 312 und zwei paarweise in Fig. 6 am linken Ende des Endlosförderers 310 angeordnete sowie angetriebene Ritzel 314 um (vgl. auch Fig. 7). Gemäß der Erfindung laufen die beiden Endlosketten 310a, 310b des Endlosförderers 310 während des Betriebs kontinuierlich um, d.h. es erfolgt nicht, wie beim eingangs geschilderten Stand der Technik, ein Start-/Stop-Betrieb des Endlosförderers 310. Die Achsen der Ritzelpaare 312, 314 sind ebenfalls horizontal, aber senkrecht zu den Endlosketten 310a, 310b des Endlosförderers 310 ausgerichtet. Die Umlaufrichtung der Endlosketten 310a, 310b ist so, dass nachstehend noch näher erläuterte Förderelemente 320 am oberen Trum des Endlosförderers 310 entgegen der Produktionsablaufrichtung PR zur Herstellung der Wurstprodukte W zur Übernahmeposition ÜB bewegt werden und sich im unteren Trum in Produktionsablaufrichtung PR von der Übernahmeposition ÜB wegbewegen.

Die Förderelemente 320 sind in gleichmäßigem Abstand entlang des Endlosförderers 310 starr, aber abnehmbar an diesem angebracht. Die Förderelemente 320 sind mittels zweier quer zu den Endlosketten 310a, 310b verlaufender und in einer gemeinsamen Horizontalebene angeordneter Befestigungsstangen 322 an den Endlosketten 310a, 310b fest angebracht. Auf den Befestigungsstangen 322 sind in dem Zwischenraum zwischen den Endlosketten 310a, 310b zwei gleich aufgebaute, dreiecksförmige Tragwände 324 angeordnet, von denen wenigstens eine entlang der Befestigungsstangen 322 axial bewegbar ist. An der von den Endlosketten 310a, 310b je nach der Position entlang der Förderstrecke des Endlosförderers 310 nach oben oder unten wegweisenden Dreiecksspitze der Tragwände 324 ist eine Drehachse 326 gelagert. Auf der Drehachse 326 sind in dem Bereich zwischen den Tragwänden 324, d.h. zwischen den aufeinander zu weisenden Innenseiten der Tragwände 324, zwei deckungsgleich ausgestaltete Teilhaken 328 drehbar angeordnet.

Die Teilhaken 328 können zwei verschiedene Positionen einnehmen: eine die Wurstprodukte W haltende Position, in der sie mit ihren nicht näher bezeichneten Hakenbogen in eine Richtung senkrecht zu der von den beiden Endlosketten 310a, 310b aufgespannten Horizontalebene vertikal nach unten weisen, und eine Bereitschaftsposition, in der sie entgegen der Förderrichtung des Endlosförderers 310 nach hinten um zumindest annährend 90° weggeklappt sind. Die Wurstprodukte W haltende Position nehmen die Teilhaken, wie dies nachstehend noch näher erläutert werden wird, während des Transports der Wurstprodukte W entlang dem unteren Trum des Endlosförderers 310 bis zur Ablage der Wurstprodukte W an eine Speicherstange SP ein. Das Einnehmen der Bereitschaftsposition bewirkt dabei das Ablegen der Wurstprodukte W auf eine Speicherstange SP, wie dies ebenfalls nachstehend noch näher erläutert wird. In die Bereitschaftsposition sind die Teilhaken 328 durch wenigstens ein ebenfalls nicht näher dargestelltes elastisches Vorspannelement vorgespannt.

Mindestens eine der Tragwände 324 ist zusammen mit dem zugehörigen Teilhaken 328 entlang der Befestigungsstangen 322 und der Drehachse 326 axial verschiebbar. Vorzugsweise sind beide Tragwände 324 zusammen mit dem jeweils zugehörigen Teilhaken 328 entlang der Stangen 322 und der Drehachse 326 axial verschiebbar, wobei sie eine zusammengefahrene Position, in der sie zumindest annährend in der Mitte der Stangen 322 bzw. der Drehachse 326 zwischen den Endlosketten 310a, 310b angeordnet sind, und eine auseinandergefahrene oder auseinandergespreizte Position einnehmen können, in der die Tragwände 324 mit ihren Außenseiten an den Innenseiten der Endlosketten 310a, 310b und die Teilhaken 328 wiederum an den Innenseiten der Tragwände 324 anliegen. Weiterhin kann eine nicht näher dargestellte Zugfeder vorgesehen sein, die die Tragwände 324 und die Teilhaken 328 in die zusammengefahrene Position vorgespannt bewegt.

An der der Dreiecksspitze der Tragwände 324 gegenüberliegenden Basis der Förderelemente 320 sind an der je nach der Position eines Förderelements 320 entlang der Förderstrecke des Endlosförderers 310 nach oben oder unten wegweisende Trag- und Führungsrollen 330 drehbar angeordnet, die die axiale Bewegung der Tragwände 324 bzw. der Teilhaken 328 durch Eingriff mit entsprechenden Führungsbahnen bewirken. Dabei können die Trag- und Führungsrollen 330 sowohl beide Bewegungen, d.h. die Zusammenfahr- und die Auseinanderfahrbewegung als auch entgegen der Wirkung der Zugfeder nur die Auseinanderfahrbewegung zwangsweise hervorrufen. Selbstverständlich ist auch eine Kombination zwischen einer Zugfeder und beider zwangsweisen Bewegungen möglich.

Als Führungsbahn für die zwangsweise Führung der Trag- und Führungsrollen 330 ist an der nach unten weisenden Seite der Fördereinrichtung 300 eine trapezförmige Spreizleiste 332 vorgesehen. Die Spreizleiste 332 erstreckt sich in dem horizontalen Raum zwischen den beiden Ritzelpaaren 312, 314. An ihrem rechten und linken stirnseitigen Ende ist die Spreizleiste 332 mit einem dreiecksförmigen Abschnitt 332a versehen. An den nach oben abgeschrägten Außenkanten der beiden dreiecksförmigen Abschnitte 332a der Spreizleiste 332 sowie der Spreizleiste 332 selbst ist jeweils eine Führungsbahn 332b vorgesehen, entlang der die Trag- und Führungsrollen 330 entlang laufen. Bei Erreichen des rechten dreiecksförmigen Abschnitts 332a der Spreizleiste 332 gelangen die Trag- und Führungsrollen 330 in Eingriff mit der Führungsbahn 332b und werden so auseinander gedrängt. Hierdurch werden die mit den Führungsrollen 330 in Verbindung stehenden Tragwände 324 ebenfalls aus der zusammengefahrenen Position in die auseinander gefahrene Position zwangsweise verschoben und in dieser Position festgehalten, bis die Förderelemente 320 den linken dreiecksförmigen Abschnitt 332a der Spreizleiste 332 erreichen.

Die Trag- und Führungsrollen 330 dienen neben ihrer Führungsfunktion auch dazu, die mit Wurstprodukten W beladenen Förderelemente 320 während ihres Weges entlang dem unteren Trum des Endlosförderers 310 zu tragen. Hierdurch wird ein Absenken der Endlosförderketten 310a, 310b vermieden. Dies wird durch eine zu der Abschrägung der Führungsbahn 332b korrespondierende Ausrichtung der Trag- und Führungsrollen 330 erreicht (vgl. Fig. 7).

Für die Ausführung der Dreh- bzw. Schwenkbewegung der Teilhaken 328 sind verschieden Elemente vorgesehen, die nachstehend insbesondere unter Bezugnahme auf die Fig. 6 und 7 erläutert werden. Hierbei ist anzumerken, dass die Fig. 7 die Innenseite der Förderelemente 320 wiedergibt.

Der in Fig. 7 detailliert dargestellte Teilhaken 328 eines Förderelementes 320 weist eine Verriegelungsausnehmung 328a auf, die an seiner äußeren Umfangsfläche im Bereich seiner Drehachse 326 angeordnet ist und die, wie in Fig. 7 ersichtlich ist, zu seiner nicht näher bezeichneten Hakenspitze weist. Weiterhin ist an der Tragwand 324 des Förderelements 320 ein Sperrklinkenelement 336 mit einer Sperrklinke 336a auf der in Förderrichtung weisenden Befestigungsstange 322 des Förderelements 320 verschwenkbar angeordnet. Die Sperrklinke 336a gelangt in der die Wurstprodukte W haltende Position des Teilhakens 328 in reversiblen Eingriff mit der Ausnehmung 328a und verriegelt hierdurch den jeweiligen Teilhaken 328 in dieser Position. Das Sperrklinkenelement 336 wird in diese Verriegelungsposition durch eine an der jeweiligen Tragwand 324 vorgesehen Blattfeder 338 gedrängt.

Um diese Verriegelung aufzulösen, ist das Sperrklinkenelement 336 an seinem der Sperrklinke 336a gegenüberliegenden Ende mit einer Auslösenase 336b versehen, die durch eine nachstehend noch näher erläuterte Auslöseeinheit 350 betätigbar ist. Beim Auslösen wird das Sperrklinkenelement 336 in Uhrzeigerrichtung verschwenkt, sodass die Sperrklinke 336a außer Eingriff mit der Ausnehmung 328a des Teilhakens 328 gelangt. Durch Einwirkung des vorstehend erwähnten elastischen Vorspannelements wird der jeweilige Teilhaken 328 dann in die Bereitschaftsposition verschwenkt bzw. zurückgeklappt. Um wieder aufgerichtet zu werden, ist im Bereich des rechten antriebslosen Ritzelpaares 312 an dem Endlosförderer 310 ein Hakenaufrichtelement 340 vorgesehen. Diese Hakenaufrichtelement 340 ist dabei so an dem Endlosförderer 310 angeordnet, dass die Teilhaken 328b eines Förderelements 320 vor Erreichen der Übernahmeposition ÜB durch einen Stift, der gegen eine Kurvenbahn des Aufrichtelements 340 fährt, wieder aufgerichtet werden.

Die Fördereinrichtung 300 weist weiterhin eine Auslöseinheit 350 auf. Diese enthält eine ein Steuerelement bildende Auslösemutter 352, die entlang einer horizontal ausgerichteten Drehspindel 354 hin und her verfahrbar ist. Die Drehspindel 352 ist, wie dies insbesondere aus der Figur 6 entnehmbar ist, in den Bereich der Spreizleiste 332 zwischen den beiden Zwangsführungsbahnen 332b der Spreizleiste 332 angeordnet. Die Auslösemutter 352 kann entlang der Drehspindel 354 von dem linken dreiecksförmigen Abschnitt 332a der Spreizleiste 332 bis zu dem rechten dreiecksförmigen Abschnitt 332a der Spreizleiste 332 reversibel verfahren werden. Die Auslösemutter 352 dient, wie bereits erwähnt, dazu, dass die Teilhaken 328 der Förderelemente 320 bei Kontakt der Auslösenase 336b der Sperrklinke 336 mit der Auslösemutter 352 aus ihrer ein Wurstprodukt W haltenden Position in die nach hinten verschwenkte Bereitschaftsposition umgeklappt werden können.

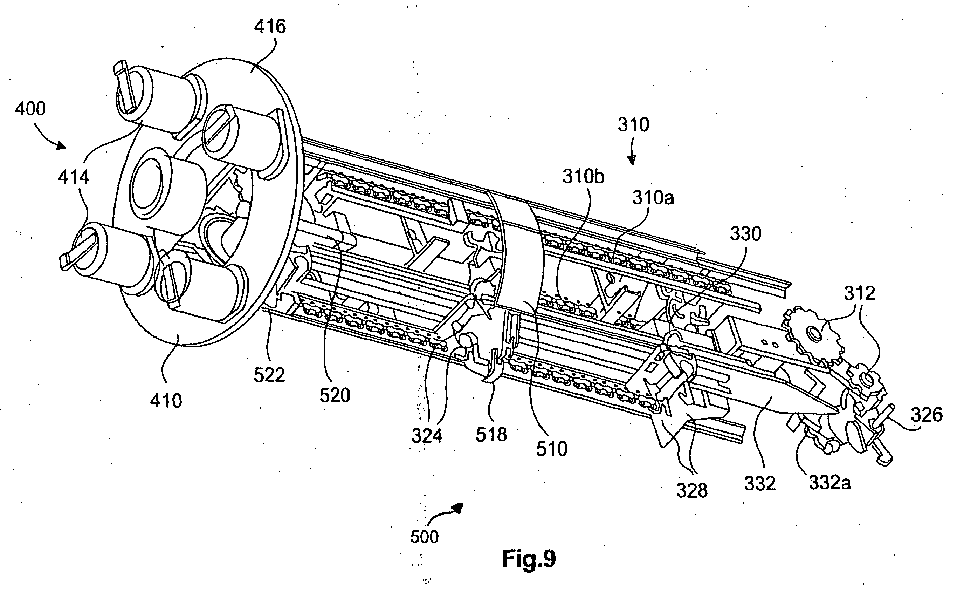

Am hinteren Ende der Beschickungsmaschine B, d.h. an dem, bezogen auf Fig. 2, linken Ende der Maschine B, ist die Revolvereinrichtung 400 angeordnet. Ihr Hauptbestandteil ist eine in Draufsicht zumindest annährend kreisförmige Revolverscheibe 410 mit einer koaxial angeordneten annähernd kreisrunden Zentralöffnung 412. Die Revolverscheibe 410 ist, bezogen auf Fig. 2, vertikal ausgerichtet ist, wobei ihre Mittelachse koaxial mit einer imaginären Mittellängsachse des Endlosförderers 310 verläuft. Auf der Revolverscheibe 410 sind an der von dem Endlosförderer 310 wegweisenden Seite in der Nähe des Außenumfangs vier gleichmäßig in Umfangsrichtung angeordnete, taschen- bzw. topfförmige Einspanneinheiten 414 in achsparalleler Ausrichtung zur Mittelachse angebracht. In diesen kann jeweils eine Speicherstange SP einseitig so eingespannt werden, dass sie mit ihrem freien Ende in Richtung der Clipmaschine C weist. Wie aus Fig. 9 hervorgeht, sind die Einspanneinheiten 414 auf einer Seite der Revolverscheibe 410, die von dem Endlosförderer 310 wegweist, angeordnet.

An der Außenumfangsseite der Revolverscheibe 410 ist ein Zahnkranz 416 vorgesehen, der in Eingriff mit einem nicht näher dargestellten Antriebszahnrad einer ebenfalls nicht näher dargestellten Antriebseinheit steht. An der Innenumfangsseite der Zentralöffnung 412 ist eine Nockenbahn 412a vorgesehen, die zur Betätigung der nachstehend noch näher erläuterten Unterstützungseinrichtung 500 dient. Die Nockenbahn 412a weist darüber hinaus noch entlang des Innenumfangs der Zentralöffnung 412 vier in gleichmäßiger Winkelteilung vorgesehene, Unstetigkeitsstellen bildende Ausnehmungen 412b auf.

Mittels der Revolverscheibe 410 können die Einspanneinheiten 414 vier Positionen einnehmen: eine erste Position, in der eine Einspanneinheit 414 mit einer Speicherstange SP beladen werden kann, welche aus der nachstehend noch näher erläuterten Vorratseinrichtung 600 für die Speicherstange SP zugeführt wird, eine zweite Position, die eine Prüfstellung ist, in der eine in der Einspanneinheit 414 eingespannte Speicherstange SP durch die Prüfeinrichtung 700 auf ihr Vorhandensein und/oder ihre Gradlinigkeit überprüft wird, eine Beladeposition (dritte Position), in der einzelne Wurstprodukte W auf die Speicherstange SP beladen werden können, und eine Austragposition (vierte Position), aus der eine mit Wurstprodukten W beladene Speicherstange SP zur Weiterverarbeitung der Wurstprodukte W aus der Beschickungsmaschine B herausgenommen werden kann. Diese vier Positionen sind in einer Teilung von 90° um den Endlosförderer 310 herum angeordnet. Nachstehend wird im Zusammenhang mit der Zuführeinrichtung 600 für die Speicherstangen SP, der Prüfeinrichtung 700 und der Beschreibung des Beladevorgangs einer Speicherstange SP mit Wurstprodukten W die einzelnen Positionen noch näher erläutert.

Die Unterstützungseinrichtung 500 weist im Wesentlichen einen Unterstützungsgreifer 510 auf, der sich in etwa in der Mitte zwischen den beiden Ritzelpaaren 312, 314 befindet, wie dies aus Fig. 6 entnehmbar ist. Der Unterstützungsgreifer 510 dient dazu, in einer Unterstützungsposition eine in einer Beladeposition befindliche Speicherstange SP an einem Durchbiegen zu hindern. Dazu ist der Unterstützungsgreifer 510 in einer Vertikalebene, die die imaginäre Mittelachse des Endlosförderers 310 schneidet, schwenkbar an einer Schwenkachse 516, die parallel zu dem Endlosförderer 310 ausgerichtet ist und die sich in geeigneter Weise an dem Rahmen der Beschickungsmaschine B abstützt, drehbar befestigt und steht im wesentlichen senkrecht nach unten von dieser ab. Um diese Schwenkachse 516 kann der Unterstützungsgreifer 510 reversibel aus einer Warteposition in die Unterstützungsposition bewegt werden.

An seinem der Schwenkachse 516 gegenüberliegenden freien Ende ist der Unterstützungsgreifer 510 mit einem Hakenelement 518 versehen, das mittels einem Pneumatikzylinder aus einer Wartestellung in eine Unterstützungsgreifstellung reversibel bewegbar bzw. verschwenkbar ist. Letztere nimmt das Hakenelement 518 ein, wenn sich der Unterstützungsgreifer 510 in der Unterstützungsposition befindet. Durch diese Schwenkbewegung des Hakenelements 518 wird sichergestellt, dass das Hakenelement 518 bei der Bewegung des Unterstützungsgreifers 510 in die Unterstützungsposition ohne Behinderung unter die jeweilige Speicherstange SP fahren kann. Durch die Schwenkbewegung des Hakenelements 518 gelangt dann dieses reversibel in Kontakt mit der Speicherstange SP.

Des weiteren weist die Unterstützungseinrichtung 500 eine Verriegelungsstange 520 auf. Diese verläuft achsparallel zum Endlosförderer 310. An ihrem einen Ende ist die Verriegelungsstange 520 mit dem Unterstützungsgreifer 510 in der Weise verbunden, dass sie zusammen mit dem Unterstützungsgreifer 510 aus der Warteposition in die Unterstützungsposition reversibel bewegbar ist, aber gegenüber dem Unterstützungsgreifer 510 axial verschiebbar ist. An ihrem anderen Ende steht die Verriegelungsstange 520 über einen an ihr fest angebrachten Nocken 522 in Eingriff mit der Nockenbahn 412a der Revolverscheibe 412. In der Warteposition befindet sich der Nocken 522 in einer der Ausnehmungen 412b der Nockenbahn 412a. Hierdurch wird der Unterstützungsgreifer 510 in der Warteposition gehalten. Die Ausnehmungen 412b kennzeichnen die Unterstützungsposition und die Warteposition des Unterstützungsgreifers 510.

Die Bewegung des Unterstützungsgreifers 510 aus der Warteposition in die Unterstützungsposition wird ebenfalls von der Auslösemutter 352 ausgelöst. Hierzu läuft die Auslösemutter 352 von links kommend, bezogen auf Fig. 6, an dem in seiner Warteposition befindlichen Unterstützungsgreifer 510 vorbei. Sobald die Auslösemutter 352 den Unterstützungsgreifer 510 passiert hat, zieht die Auslösemutter 352 die Verriegelungsstange 520 in axialer Richtung nach rechts, bezogen auf Fig. 6. Hierdurch gelangt der Nocken 522 außer Eingriff mit der Ausnehmung 412b der Nockenbahn 412a, sodass der Unterstützungsgreifer 510 in Folge seines Eigengewichts nach unten in die Unterstützungsposition fällt. Gegebenenfalls kann ein Antrieb zur Unterstützung dieser Bewegung vorgesehen sein, der beispielsweise durch eine vorgespannte Torsionsfeder gebildet wird. Bei Erreichen der Unterstützungsposition gelangt der Nocken 522 durch eine nicht näher dargestellte Feder in Eingriff mit der entgegen der Drehrichtung der Revolverscheibe 410 nächsten Ausnehmung 412b der Nockenbahn 412a. Durch Drehung der Revolverscheibe 410 in Uhrzeigerrichtung, betrachtet in der Draufsicht der Fig. 6, um zumindest annährend 90° wird der Unterstützungsgreifer 510 in Folge des Eingriffs des Nockens 522 in der Ausnehmung 412b, in die er bei Erreichen der Unterstützungsposition eingefahren ist, wieder zurück in die Warteposition mitgenommen.

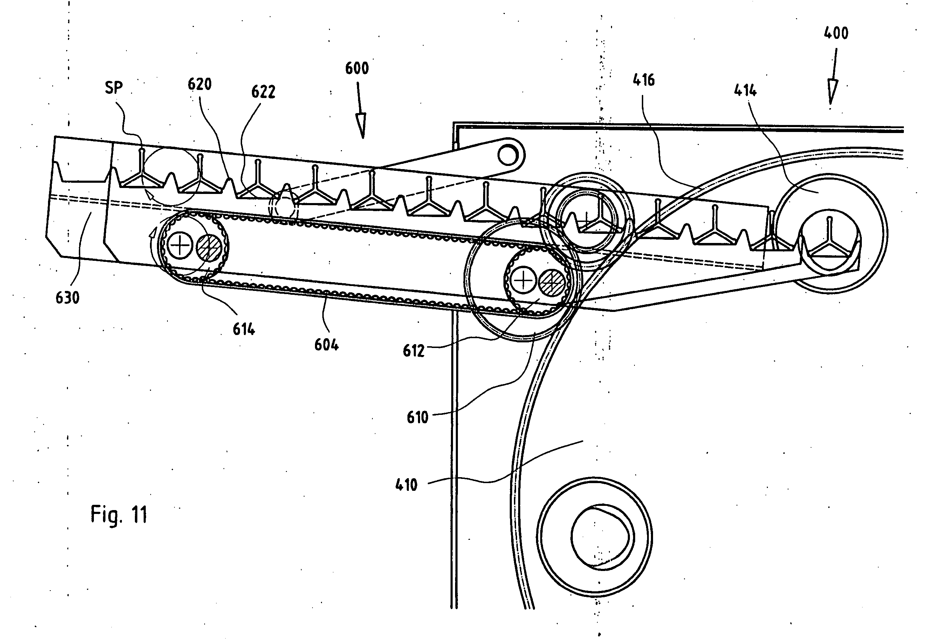

Die Zuführeinrichtung 600 für die Speicherstangen SP zum Bevorraten und Zuführen von Speicherstangen SP zu der Revolvereinrichtung 400 ist in Fig. 11 schematisch dargestellt. Die Zuführeinrichtung 600 ist, bezogen auf die in Fig. 2 wiedergegebene Beschickungsmaschine B, vor dem Endlosförderer 310, d.h., wiederum bezogen auf Fig. 2, links von dem Endlosförderer 310 angeordnet. Die Einrichtung 600 enthält mindestens eine Exzentereinheit 610, wenigstens zwei fördernde Stangen 620 sowie mindestens zwei starre Abstützelemente 630. Jeweils eine fördernde Stange 620 und eine starre Abstützstange 630 bilden ein Förderpaar, das jeweils im Bereich der stirnseitigen Enden der Beschickungsmaschine B in der Weise angeordnet ist, dass die Mittellängsachsen der Stangen 620, 630 zumindest annährend senkrecht zu der imaginären Mittellängsachse des Endlosförderers 310 verlaufen und die Stangen 620, 630 von der Beschickungsmaschine B nach links abstehen. Ggf. können die Stangen 620, 630 in einer leichten Schrägneigung, wie in Fig. 11 gezeigt, angeordnet sein, um den Fördervorgang für die Speicherstangen SP zu unterstützen.

Die starren Abstützelemente 630 sind parallel zueinander so beabstandet, dass die auf ihnen senkrecht zu diesen abgelegten Speicherstangen SP sicher gehalten werden. Wie bereits erwähnt, sind die Abstützstangen 630 senkrecht zu den Achsen der Einspanneinheiten 414 der Revolvereinrichtung 400 ausgerichtet. Ihre beschickungsmaschinenseitigen Enden reichen bis zu der Revolverscheibe 410.

Parallel zu den starren Abstützstangen 630 und in ihrer unmittelbaren Nähe sind die fördernden Stangen 620 angebracht. Sie sind so ausgerichtet, dass ihre beschickungsmaschinenseitigen Enden bei der durch die Exzentereinheit 610 erzeugten zumindest annähernd horizontalen Bewegungskomponente höchstens die beschickungsmaschinenseitigen Enden der starren Abstützelementen 630 erreichen. Die fördernden Stangen 620 weisen eine gleichmäßige Teilung auf, die durch Ausnehmungen 622 bzw. nach oben hervorstehende Erhebungen erzeugt wurde, in die jeweils genau eine Speicherstange SP passt.

Die fördernden Stangen 620 werden von der Exzentereinheit 610 angetrieben. Diese weist einen ersten Exzenter 612 auf, der achsparallel zu den Einspanneinheiten 414 ausgerichtet und unterhalb der fördernden Stange 620 in einer Weise angeordnet ist, dass seine Außenumfangs- oder Exzenterfläche in Berührungskontakt mit der fördernden Stange 620 steht. Bei Rotation des Exzenters 612 führt die fördernde Stange 620 eine intermittierende Bewegung aus. Diese Bewegung ist durch die Wahl des Exzenters 612 so gestaltet, dass der auf den starren Abstützelementen 630 liegende Vorrat an Speicherstangen SP durch die fördernden Stangen 620 um einen bestimmten Weg zu den Einspanneinheiten 414 der Revolvereinrichtung 400 schrittweise transportiert wird.

Im dargestellten Ausführungsbeispiel ist zusätzlich ein zweiten Exzenter 614 vorgesehen, der ebenfalls achsparallel zu den Einspanneinheiten 414 ausgerichtet ist und über einen nicht näher bezeichneten Riementrieb mit dem ersten Exzenter 612 verbunden ist. Dabei wird die Exzentereinheit 610 vom Zahnkranz 416 der Revolverscheibe 410 ggf. unter Zwischenschaltung eines nicht näher dargestellten Getriebes angetrieben. Durch den Antrieb der Exzentereinheit 610 über den Zahnkranz 416 der Revolvereinrichtung 400 kann bei dem Austragen einer mit Wurstprodukten W befüllten Speicherstange SP aus einer diese Speicherstange SP haltenden Einspanneinheit 414 der Revolvereinrichtung 400 eine abgestimmte Zuführung einer leerer Speicherstange SP zu einer in Bereitschaft zur Aufnahme dieser Speicherstange SP stehenden Einspanneinheit 414 erfolgen. Im gezeigten Ausführungsbeispiel erfolgt bei einer Vierteldrehung der Revolverscheibe 410 genau ein durch die fördernden Stangen 620 ausgeführter Fördervorgang bzw. Förderzyklus zum Weitertransport der Speicherstangen SP. Hierdurch ist die Förderbewegung der Exzentereinheit 610 mit der Drehbewegung der Revolverscheibe 410 zeitlich aufeinander abgestimmt. Darüber hinaus ist nur ein Antrieb für die Drehung der Revolverscheibe 410 und dem Betrieb der Exzentereinheit 610 notwendig.

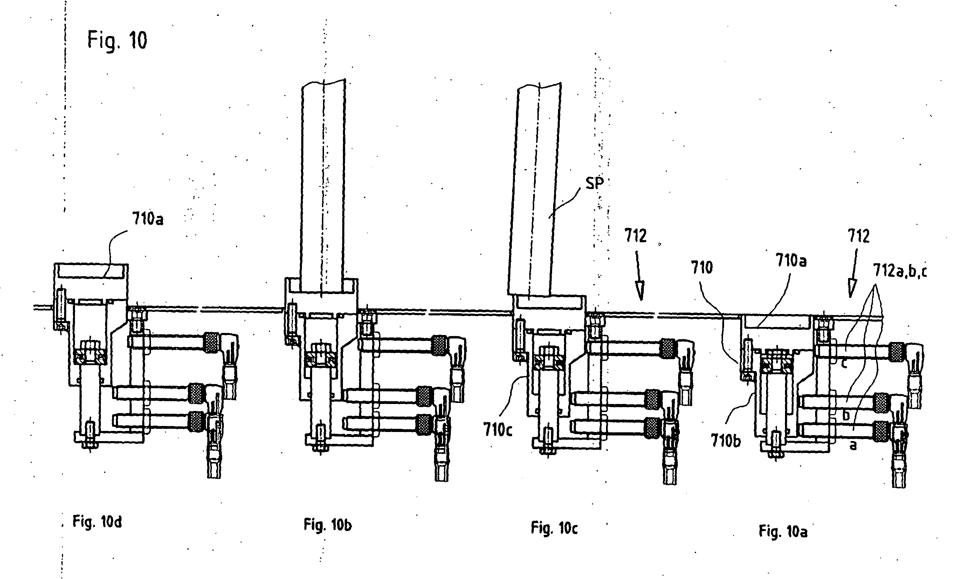

Die Fig. 10 und 10a bis 10d zeigen eine Prüfeinrichtung 700 zur Prüfung des Vorhandenseins und der korrekten Positionierung einer Speicherstange SP in der Einspanneinheit 414 der Revolvereinrichtung 400. Die Prüfeinrichtung 700 ist an dem der Revolvereinrichtung 400 gegenüberliegenden stirnseitigen Ende der Beschickungsmaschine B angeordnet. Sie weist im Wesentlichen ein topfförmiges, zylindrisches Element 710 sowie eine Überwachungseinheit 712 auf. Das topfförmige Element 710 lässt sich, wie in den Fig. 10a bis 10d dargestellt, senkrecht aus der nicht näher bezeichneten stirnseitigen Gehäusewand der Beschickungsmaschine B mittels eines ebenfalls nicht näher bezeichneten Antriebs reversibel herausbewegen. Der Innendurchmesser des topfförmigen Elements 710 ist größer als der Außendurchmesser einer Speicherstange SP, so dass das topfförmige Element 710 über eine Speicherstange SP hinweggreifen kann. Dabei bildet der Boden 710a des topfförmigen Elements 710 einen Anschlag für die Speicherstange SP.

An der von der Speicherstange SP wegweisenden Seite des Bodens 710a des topfförmigen Elements 710 ist eine kurze Verjüngung 710b vorgesehen, an sich die hintere Hälfte 710c des topfförmigen Elements 710 anschließt, die einen entsprechend geringeren Durchmesser aufweist. Ebenfalls auf der von der Speicherstange SP wegweisenden Seite des Bodens 710a sind in einer Ebene senkrecht zur Mittelachse des topfförmigen Elements 710 in diesem Ausführungsbeispiel drei Sensoren 712a, 712b, 712c der Überwachungseinheit 712 angeordnet. Der erste Sensor 712a überwacht den vorderen, im Durchmesser größeren Teil des topfförmigen Elements 710, der zweite und dritte Sensor 712b, 712c den hinteren, im Durchmesser kleineren Teil des topfförmigen Elements 710. Die Überwachungseinheit 712 kann hierdurch den zurückgelegten Weg des topfförmigen Elements 710 erfassen und so feststellen, ob eine Speicherstange SP vorhanden ist und ob sie korrekt positioniert ist. Dies wird nachstehend in Verbindung mit den Fig. 10a bis 10d erläutert.

In der Ausgangsposition entsprechend der Fig. 10a befindet sich das topfförmige Element 710 soweit in der Gehäusewand der Beschickungsmaschine B, dass es bündig mit dessen Vorderseite abschließt. Der Sensor 712c registriert den vorderen, im Durchmesser größeren Teil des topfförmigen Elements 710. Die beiden anderen Sensoren 712a, 712b erfassen den hinteren, im Durchmesser kleineren Teil des topfförmigen Elements 710.

Der Fall der korrekten Positionierung einer Speicherstange SP ist in Fig. 10b dargestellt. Das topfförmige Element 710 ist aus der Gehäusewand der Beschickungsmaschine B herausgefahren und umschließt die Speicherstange SP bis diese den Boden 710a des Elements 710 berührt. Das hintere Ende des topfförmiges Elements 710 ist aus dem Sensorbereich des Sensors 712a verschwunden, ebenso wurde der vordere, im Durchmesser größere Teil des topfförmigen Elements 710 aus dem Erfassungsbereich des Sensor 712c herausbewegt. Nur der Sensor 712b registriert noch den hinteren Teil des topfförmigen Elements 710. Die sich hieraus ergebenden Sensorsignale zeigen an, dass das topfförmige Element 710 um einen erlaubten Weg aus seiner Ausgangsstellung heraus bewegt und durch eine korrekt eingelegte Speicherstange SP, sobald der Boden 710a diese erreicht, angehalten wurde.

In Fig. 10c ist eine verkantet in eine Einspanneinheit 410 eingespannte oder eine verbogene Speicherstange SP angedeutet. Die verkantete bzw. verbogene Stange SP stößt an die äußere Kante des topfförmigen Elements 710, wodurch dieses nicht weit genug aus der Gehäusewand der Beschickungsmaschine B ausgefahren werden kann. Im hier dargestellten Fall wird das topfförmige Element 710 um einen Weg, der kürzer ist, als der in Fig. 10b gezeigte, aus der Gehäusewand ausgefahren. Das hintere Ende des topfförmigen Elements 710 ist aus dem Sensorbereich des Sensors 712a verschwunden, aber der Sensor 712c registriert noch das Vorhandensein des topfförmigen Elements 710, ebenso wie der Sensor 712b. Durch dieses Sensorergebnis wird eindeutig angezeigt, dass eine verkantete bzw. verbogene Speicherstange SP vorhanden ist. Diese Stange SP wird aus der Beschickungsmaschine B ausgeworfen.

Im Fall, dass keine Speicherstange SP in eine Einspanneinheit 414 eingespannt ist, wie in Fig. 10d dargestellt, wird das topfförmige Element 710 soweit aus der Gehäusewand der Beschickungsmaschine B herausgefahren, dass es von keinem der Sensoren 712a, 712b, 712c erfasst wird. In diesem Fall wird eine neue Speicherstange SP durch eine Drehung der Revolverscheibe 410 der Prüfeinrichtung 700 zugeführt eingelegt und die Prüfung wiederholt.

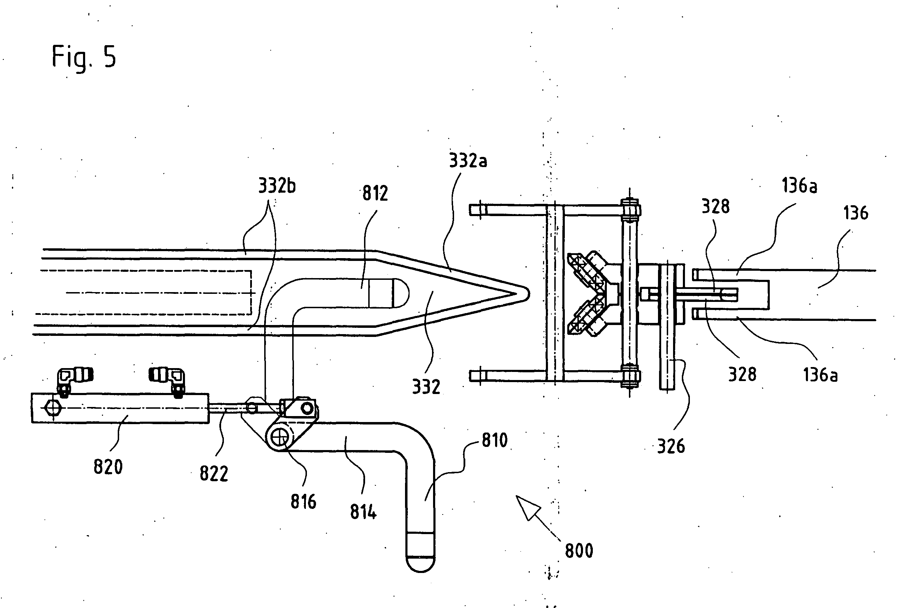

Die in Fig. 5 gezeigte Wiegeeinrichtung 800 dient zum beliebigen oder regelmäßigen Entnehmen und Wiegen eines Wurstprodukts W aus der laufenden Produktion, um dessen Gewicht, also die Abfüllung der korrekten Füllgutmenge, zu kontrollieren und befindet sich unterhalb des vorderen Spreizleistenabschnitts 332a. Die Wiegeeinrichtung 800 besteht aus einem Wiegehebel 810, einem in dieser Darstellung als hydraulischen/pneumatischen Zylinder 820 ausgeführten Antrieb und einer nicht dargestellten Wiegezelle.

Der Wiegehebel 810 besteht aus einem flachen, vorzugsweise aus Metall bestehenden Stab, der in seiner Haupterstreckungsebene, die im wesentlichen parallel unterhalb der Spreizleiste 332 verläuft, annähernd mittig um ca. 90° abgewinkelt ist. Dabei bildet er zwei Enden, ein vorderes freies Ende 812 und ein hinteres Ende 814, das mit der Drehachse des Wiegehebels 810 drehbar verbunden ist. Die Drehachse ist in unmittelbarer Nähe einer der Endlosketten 310a, 310b, an deren Außenseite angeordnet und senkrecht zur Spreizleiste 332 ausgerichtet. Der Zylinder 820 ist parallel neben dem Endlosförderer 310 angeordnet. Die Kolbenstange 822 ist mit ihrem ausfahrbaren Ende so mit dem hinteren Ende 814 des Wiegehebels 810 verbunden, dass er diesen beim Einfahren in den Zylinder 820 mit seinem vorderen Ende 812 in den Förderweg der Wurstprodukte W einschwenkt. In dieser eingeschwenkten Position, oder auch Wiegeposition, ist das vordere Ende 812 parallel zur Förderrichtung ausgerichtet und weist mit seinem freien Ende in Richtung der Übernahmeposition ÜB. In dieser Position kann ein Wurstprodukt W von einem Förderelement 320 an den Wiegehebel 810 übergeben werden. Wird die Kolbenstange 822 aus dem Zylinder herausgefahren, schwenkt der Wiegehebel 810 aus der Förderrichtung heraus. In einer so erreichbaren Endstellung oder Bereitschaftsposition, ist das hintere Ende 814 des Wiegehebels 810 parallel zur Förderrichtung ausgerichtet, während das vordere Ende 812 senkrecht zur Seite von dieser weg weist. Das Gewicht des Wurstprodukts W drückt den Wiegehebel 810 auf eine nicht dargestellte Wiegezelle, die dann das genaue Gewicht des Wurstprodukts W feststellt.

Die Umlaufgeschwindigkeit des Endlosförderers 310 wird in Ihrer Grundeinstellung durch die Zuführgeschwindigkeit der flexiblen Aufhängeelemente AE in der Clipmaschine B bestimmt. Diese Zuführgeschwindigkeit wird durch eine Steuereinrichtung erfasst, welche hieraus die Steuerung für die Umlaufgeschwindigkeit des Endlosförderers 310 ableitet. Da die Umlaufgeschwindigkeit der Förderelemente 320 Störungen, wie beispielsweise Störungen in Folge aufgetretenen Verschleißes oder in Folge von Schaukelbewegungen der Wurstprodukte W, ausgesetzt sein kann, die zu Schwankungen in der Umlaufgeschwindigkeit der Förderelemente 320 führen können, ist es von Vorteil, wenn der Steuerung der Umlaufgeschwindigkeit eine Regelung überlagert wird. Die Regelung kann dabei auf Basis verschiedener Regel- und Führungsgrößen erfolgen. Beispielsweise kann vorgesehen sein, dass mit der der Steuerung der Umlaufgeschwindigkeit überlagerten Regelung der Zeitpunkt des Erreichens der Übernahmeposition ÜB in der Beschickungsmaschine B durch die Förderelemente 320 zum kontinuierlichen Übernehmen von Wurstprodukten W geregelt wird. Hierdurch kann gewährleistet werden, dass sich zum Übernahmezeitpunkt immer ein Produkt W in der Übernahmeposition ÜB befindet.

Die eigentliche Regelung selbst kann wiederum auf unterschiedlichen Wegen erfolgen. So kann die Regelung der Umlaufgeschwindigkeit der Förderelemente 320 auf Basis der Abweichungstendenz des Abstandes der Förderelemente 320 von einer vorbestimmten Position an dem Förderweg der Förderelemente 320 durchgeführt werden. Denn mit der Ermittlung der Abweichungstendenz kann der Einfluss fast aller Störungen auf die Umlaufgeschwindigkeit der Förderelemente 320 erfasst und korrigiert werden. Bei Zunahme der Abweichungstendenz wird die Umlaufgeschwindigkeit der Förderelemente erhöht und bei Abnahme der Abweichungstendenz verringert.

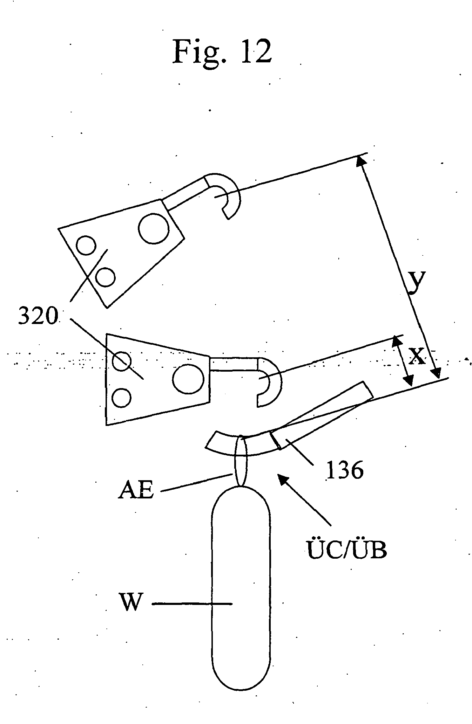

Fig. 12 veranschaulicht die Bestimmung der Abweichungstendenz, die in die Regelung des Zeitpunktes des Erreichens der Übernahmeposition ÜB durch die Förderelemente 320 einfließt. Hierzu wird der Abstand "×" eines Förderelements 320 von der vorbestimmten Position gemessen, hier ÜB, und mit dem Abstand "y" des nachfolgenden Förderelements 320 von der vorbestimmten Position ÜB verglichen. Im dargestellten Fall ist als die vorbestimmte Position die Übernahmeposition ÜB gewählt. Weiterhin wurde im dargestellten Fall als Messpunkt die Mitte eines Teilhakens 328 angenommen, es kann aber auch jeder andere Punkt des Förderelements 320 verwendet werden. Wahlweise kann der Abstand "y" auch der Abstand des gleichen Förderelements 320 von der vorbestimmten Position ÜB im nachfolgenden Umlauf sein. In beiden Fällen kann durch wiederholtes Messen und Vergleichen der Differenzen eine Tendenz festgestellt werden, die beispielsweise durch Schlupf, Verschleiß oder starke Schaukelbewegungen der an den Förderelementen 320 hängenden Wurstprodukte W entsteht. Dabei können die Messung der Abstände und der Vergleich der Differenzen kontinuierlich erfolgen, oder zu ausgewählten Zeitpunkten. Durch das Bestimmen der Abweichungstendenz erhält man eine zuverlässige Aussage über den Verlauf der Umlaufgeschwindigkeit und kann diese in die Regelung des Zeitpunktes des Erreichens der Übernahmeposition ÜB einfließen lassen.

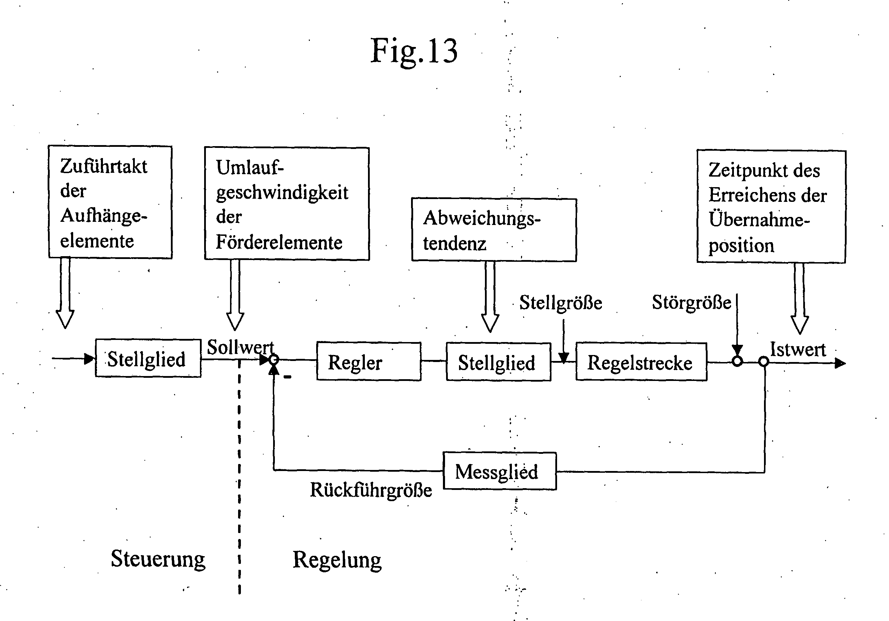

In Fig. 13 ist ein Blockschaltbild der Steuerung der Umlaufgeschwindigkeit der Förderelemente 320 zu sehen und der ihr überlagerten Regelung des Zeitpunktes des Erreichens der Übernahmeposition ÜB. Die vom Zuführtakt der Aufhängeelemente AE abgeleitete Umlaufgeschwindigkeit bzw. Grundumlaufgeschwindigkeit der Förderelemente 320 fließt als Sollwert in den Regelkreis ein. Mit Hilfe der in Fig. 12 erläuterten Abweichungstendenz kann der Zeitpunkt des Erreichens der Übernahmeposition ÜB genau geregelt werden.

Durch die Steuerung wird zunächst die Umlaufgeschwindigkeit der Förderelemente 320 entsprechend dem Zuführtakt bzw. der Zuführgeschwindigkeit der Aufhängeelemente AE als Grundeinstellung eingestellt, die im vorliegenden Ausführungsbeispiel exakt dem Produktionstakt entspricht, da an jedem Wurstprodukt W genau ein Aufhängeelement AE befestigt wird. Im bereits erwähnten Fall des Anbringens eines Aufhängeelements AE an jedem zweiten, dritten usw. Wurstprodukt W erfolgt eine entsprechende Anpassung.

In einem vollkommen störungsfreien Ablauf des Gesamtprozesses wäre die vorstehend erwähnte Steuerung ausreichend. Durch verschiedene Störfaktoren, wie Schlupf oder Verschleiß am Endlosförderer 310 sowie starker Schaukelbewegungen der an den Förderelementen 320 hängenden Wurstprodukte W, verändert sich die Umlaufgeschwindigkeit, wodurch sich ebenfalls der Zeitpunkt des Erreichens der Übernahmeposition ÜB verschiebt. Um aber eine korrekte Übergabe/Übernahme der Wurstprodukte zu gewährleisten und um ein kontinuierliches Umlaufen der Förderelemente 320 zu erreichen sollte dieser Zeitpunkt genau auf den Zuführtakt der Aufhängeelemente AE abgestimmt sein.

Zu diesem Zweck wird der Steuerung der Umlaufgeschwindigkeit eine Regelung des Zeitpunkts des Erreichens der Übernahmeposition ÜB überlagert, in die die, wie oben beschrieben, gemessene Abweichungstendenz einfließt. Durch diese Regelung werden Abweichungen in der Umlaufgeschwindigkeit, die sich in der Abweichungstendenz widerspiegeln, ausgeglichen. Bei einer Zunahme der Abweichungstendenz wird die Umlaufgeschwindigkeit durch die Regelung erhöht und entsprechend bei Abnahme der Abweichungstendenz verringert. Zu diesem Zweck wird der momentane Istwert des Zeitpunkts des Erreichens der Übernahmeposition ÜB durch ein Messglied als Rückführgröße mit dem Sollwert abgeglichen. Die gebildete Differenz ergibt den Regelfehler, der über die als Stellgröße wirkende Abweichungstendenz korrigiert wird. Außerdem ist es durch diese Regelung möglich, andere Störgrößen, die nicht aus dem Produktionsprozess stammen, wie Stromschwankungen oder mechanische Einflüsse, die die Umlaufgeschwindigkeit verändern, zu kompensieren. Es wird so eine kontinuierliche stoßfreie Übernahme von Produkten W ohne Start-/Stopbetrieb erreicht, wodurch die vorgenannte Störgrößen minimiert oder ausgeschaltet werden können.

Unabhängig von der oben beschriebenen Steuerung der Umlaufgeschwindigkeit mit überlagerter Regelung des Zeitpunkts des Erreichens der Übernahmeposition ÜB ist der Gesamtsteuerung der Fertigungslinie FCB eine Abschaltprozedur überlagert, die bei einer Störung ein kontrolliertes Abschalten der einzelnen Komponenten der Fertigungslinie FCB übernimmt. Im störungsfreien Betrieb liegt an der Füllmaschine F ein Freigabesignal an. Tritt eine Störung in der Beschickungsmaschine B auf, so wird das Freigabesignal von der Füllmaschine F weggenommen und sie stoppt die weitere Zufuhr von Füllgut zur Clipmaschine C. Diese stellt das gerade in Arbeit befindliche Produkt fertig und stoppt dann ebenfalls ihren Betrieb. Befindet sich gerade ein Wurstprodukt W in der Übergabeposition ÜC, so wird dieses von dem aktuellen Förderelement 320 aus der Übergabe bzw. Übernahmeposition ÜC bzw. ÜB entnommen und die Beschickungsmaschine B stoppt den Betrieb des Endlosförderers 310. Wurde gerade ein Wurstprodukt W durch ein Förderelement 320 aus der Übergabe- bzw. Übernahmeposition ÜC/ÜB entnommen, so wird der Betrieb des Endlosförderers 310 gestoppt, bevor das Förderelement 320 die zu beschickende Speicherstange SP erreicht hat.

Ebenso wird bei Fehlen eines Clipimpulses verfahren. Zunächst wird das Freigabesignal von der Füllmaschine F genommen, die daraufhin ihren Betrieb stoppt. Die Clipmaschine C stellt das gerade in Arbeit befindliche Produkt W fertig und stoppt dann ebenfalls seinen Betrieb. Anschließend hält auch die Beschickungsmaschine B entsprechend der oben geschilderten Vorgehensweise ihren Betrieb an.

Die beschriebene Abschaltprozedur ermöglicht, dass beim Auftreten einer Störung in der Fertigungslinie FCB diese jederzeit kontrolliert und gefahrlos abgeschaltet werden kann. Außerdem ermöglicht die Art und Weise des Abschaltens der Komponenten ein problemloses Wiedereinschalten der Fertigungslinie FCB ohne die Gefahr einer erneuten Störung durch die noch in der Fertigungslinie FCB befindlichen Produkte.

Der Produktionsablauf der erfindungsgemäßen Fertigungslinie von der Herstellung bis zur Ablage eines Wurstprodukt W geschieht wie folgt:

Von der Füllmaschine F wird ein fließfähiges Füllgut, hier Wurstbrät, der Clipmaschine C über das Füllrohr FR zugeführt. Um das Füllrohr FR herum befindet sich der Vorrat an schlauchförmigen Verpackungshüllenmaterial. Dieses wird in bekannter Weise gefüllt. Durch das gleichzeitige Setzen und Verschließen zweier Clips in der Clipmaschine C wird zum einen das gerade befüllte Wurstprodukt W fertiggestellt und zum anderen der Anfangszipfel eines neuen noch zu befüllenden Produkts W geschaffen. Beim Setzen und Verschließen der Clips wird dabei in den Clip, der das Wurstprodukt W fertig stellt, ein Aufhängeelement AE in Form einer Fadenschlaufe über die Zuführeinrichtung ZE zugeführt und mit diesem Clip an dem Wurstprodukt W befestigt.

Nachdem ein Wurstprodukt W durch Setzen und Verschließen der Clips, Anbringen eines Aufhängeelements AE und Abtrennen von dem Vorrat an übrigen Verpackungshüllenmaterial in der Clipmaschine C fertiggestellt wurde, wird es mit dem dem Aufhängeelement AE gegenüberliegenden Ende voran auf dem Förderband 110 der Austragstrecke AS, das parallel zur Gleitschiene 130 läuft, aus der Clipmaschine C in Richtung der Beschickungsmaschine B transportiert. Dabei wird die Schlaufe des Aufhängeelements AE vom Einfädelkegel 134 eingefangen und über die Gleitschiene 130 geführt. Beim Passieren der Lagereinrichtungen 140 wird das Aufhängeelement AE durch die Drehung der Hohlwelle 160 und die auf seiner Oberfläche angebrachte gewindeförmig umlaufende Nut 162 durch die Lagereinrichtungen 140 zwangsgeführt. Am Ende des Förderbandes 110 fällt das Wurstprodukt W dann durch Schwerkraft von dem Förderband 110 nach unten, wobei es mit dem Aufhängeelement AE weiterhin an der Gleitschiene 130 hängt. Mit dem Aufhängeelement AE gleitet es durch die nach unten gerichtete Abwinkelung der Gleitschiene 130 an dieser entlang, bis die Übergabeposition ÜC am gabelförmige Element 136 erreicht ist. Befindet sich ein Wurstprodukt W in der Übergabeposition ÜC wird dies vom Sensor 138 erkannt.

Die Teilhaken 328 eines Förderelement 320, das sich kurz vor der Übernahmeposition ÜB befindet, werden mittels des Hakenaufrichtelements 340 aus der zurückgeklappten Position in die ein Aufhängeelemente AE haltende Position bewegt. Gleichzeitig befinden sich die Teilhaken 328 in der aneinanderliegenden Position. Hierdurch können die Teilhaken 328 bei der kontinuierlichen Weiterförderung des Förderelements 320 durch das gabelförmige Element 136 hindurchfahren und so das Wurstprodukt W an dem sich quer über die Zinken 136a erstreckende Abschnitte des Aufhängeelements AE aufnehmen sowie in die Beschickungsmaschine B transportieren.

Auf seinem Förderweg entlang des Endlosförderers 310 passiert das Förderelement 320 anschließend die Spreizleiste 332. Diese drängt mit ihrem vorderen dreiecksförmigen Abschnitt 332a zwischen die Trag- und Führungsrollen 330 des Förderelements 320 und drückt so die Tragwände 322 und die Teilhaken 328 des Förderelements 320 auseinander. Dabei gleiten die Trag- und Führungsrollen 330 an den Schrägen der Führungsbahnen 332b der Spreizleiste 332 entlang und werden solange gespreizt, bis das Ende der Spreizleiste 332 bzw. des hinteren dreiecksförmigen Abschnitts 332a erreicht ist.

Durch das Spreizen der Teilhaken 328 wird die Schlaufe des Aufhängeelements AE soweit geöffnet, dass sie bei der Weiterförderung des Förderelements 320 über die Speicherstange SP geführt werden kann. In Abstimmung mit dem Füllstand der Speicherstangen SP wird die Auslösemutter 352 entgegen der Förderrichtung der Förderelemente 320 bzw. der Wurstprodukte W auf der Spindel 354, die sich dicht neben dem unteren Trum des Endlosförderers 310 und parallel zu diesem befindet, geführt. Bei Erreichen der Auslösemutter 352 gleitet das Förderelement 320 mit seiner Auslösernase 336b über die Auslösemutter 352. Dadurch wird der Mechanismus zum Umlegen bzw. Zurückklappen der Teilhaken 328 aus der die Wurstprodukte W haltenden Stellung in die ablegende Stellung ausgelöst. Durch Wegklappen der Teilhakens 328 wird das Wurstprodukt W auf der Speicherstange SP an der vorbestimmten Position ablegt (vgl. Fig. 6a).

Ist ein bestimmter Füllstand der Speicherstange SP erreicht, beispielsweise 50% der Speicherstange SP sind mit Wurstprodukten W besetzt, so löst die Auslösemutter 352, den sich dann an dieser Stelle befindenden Unterstützungsgreifer 510 aus, der sich zu Beginn des Befüllens einer Speicherstange SP in der Warteposition befindet. Dieser bewegt sich aus der Warteposition in die Unterstützungsposition. Das Auslösen erfolgt, indem die Auslösemutter 352 die Verriegelungsstange 520 aus der Ausnehmung 412b der Nockenbahn 412 herauszieht. Durch Gewichtskraft sowie einen ggf. vorhandenen Antrieb wird der Unterstützungsgreifer 510 aus der Warteposition in die Unterstützungsposition bewegt und die Verriegelungsstange 520 greift in die nächste Ausnehmung 412b ein.

Nachdem die Speicherstange SP vollständig befüllt ist, wird die Revolverscheibe 410 durch Antrieb des Zahnkranzes 416 um 90° in Uhrzeigerrichtung, betrachtet in der Ausrichtung der Fig. 2, gedreht. Der Unterstützungsgreifer 510, der immer noch durch die in der Ausnehmung 412b arretierten Verriegelungsstange 520 gehalten wird, wird wieder in die Warteposition mitbewegt.

Eine in der nächsten Einspanneinheit 414 befindliche leere Speicherstange SP wird in die Befüllposition gebracht und die befüllte Stange SP wird aus der entsprechenden Einspanneinheit 414 entfernt, beispielsweise durch eine entsprechende Fördereinrichtung abtransportiert. Bei der Drehung der Revolverscheibe 410 wird eine befüllte Speicherstange SP aus der Befüllstellung heraus bewegt, während gleichzeitig eine leere Stange SP in die Befüllstellung hineinbewegt wird. Bei einer Koppelung der Exzentereinheit 610 der Zuführeinrichtung 600 an den Antrieb für die Revolverscheibe 410 werden gleichzeitig leere Speicherstangen SP in die Revolvereinheit 400 transportiert. Durch die entsprechend ausgelegte Koppelung wird beim Entfernen einer gefüllten Speicherstange SP genau eine neue Speicherstange SP vom Vorrat der auf den Abstützstangen 630 liegenden Speicherstangen SP in die Prüfstellung im Revolver 400 eingelegt. Dadurch wird eine auf den Produktionsablauf abgestimmte, bedarfsgerechte Zuführung leerer Speicherstangen zur Beschickungsmaschine erreicht.

Mit der Drehung der Revolverscheibe 410 wird die im vorhergehenden Zyklus in eine Einspanneinheit 414 von der Zuführeinrichtung 600 für leere Speicherstangen SP zugeführte Speicherstange SP aus dieser Zuführ- bzw. Beladeposition in die Prüfposition überführt. Dort folgt die Prüfung, ob eine Speicherstange SP überhaupt vorhanden ist, ob diese korrekt eingespannt ist und/oder ob diese verbogen ist. Bei dem nächsten Zyklus wird diese in der Prüfposition befindliche Speicherstange SP in die Beladeposition zum Beladen bzw. Beschicken mit Wurstprodukten W geführt. Anschließend wird die, wie eben beschrieben, beladene Speicherstange SP in der Entnahmeposition aus der Beschickungsmaschine B ausgetragen.

Um eine gleichbleibende Qualität zu sichern, ist es möglich in der laufenden Produktion einzelne Wurstprodukte W zu wiegen und so zu kontrollieren, ob die korrekte Menge an Füllgut in das Verpackungshüllenmaterial eingebracht wurde. Hierzu dient die oben, anhand von Fig. 5, beschriebene Wiegeeinrichtung 800. Im normalen Produktionsablauf befindet sich der Wiegehebel 810 der Wiegeeinrichtung 800 in der oben beschriebenen Bereitschaftsposition. Soll nun ein Wurstprodukt W gewogen werden, wird durch Betätigen des Zylinders 820 die Kolbenstange 822 in diesen eingefahren. Dabei wird der Wiegehebel 810 in die Förderrichtung der Wurstprodukte W eingeschwenkt, sodass das vordere Ende parallel zu dieser ausgerichtet ist und zur Übergabestelle ÜC der Clipmaschine zeigt. Von dem Förderelement 320, das gerade ein Wurstprodukt W von der Übernahmestelle ÜB übernommen hat, wird dieses an den Wiegehebel übergeben. Durch erneutes Betätigen des Zylinders 820 wird durch Einfahren der Kolbenstange 822 Der Wiegehebel 810 wieder in die Bereitschaftsposition gefahren. Das am Wiegehebel 810 hängende Wurstprodukt W aktiviert die Wiegezelle, die das Gewicht feststellt.

Im Falle einer wie auch immer gearteten Störung greift die oben bereits beschriebene Abschaltprozedur, die ein gefahrloses Anhalten der Komponenten der Fertigungslinie ebenso garantiert, wie ein gefahrloses erneutes Wiederanfahren.

Abschließend ist noch zu bemerken, dass die Erfindung nicht auf die in den Fig.1 bis 13 dargestellten Ausführungen beschränkt ist. So kann für den Endlosförderer ein anderes Transportmittel als eine Kette gewählt werden, beispielsweise ein Zahnriemen, die auch nicht als zwei parallel nebeneinander laufende Riemen ausgeführt sein müssen. Der Revolver kann mehr oder auch weniger als vier Spannelemente enthalten, ebenso wie die Zuführungsvorrichtung mehr als zwei starre Abstützelemente und fördernde Stangen enthalten kann.

### Bezeichnungsliste

- FCB: Fertigungslinie
- F: Füllmaschine
- C: Clipmaschine
- B: Beschickungsmaschine
- PR: Produktionsablaufrichtung
- T: Fülltrichter
- AS: Austragstrecke
- ÜC: Übergabeposition
- ÜB: Übernahmeposition
- W: Wurstprodukte
- SP: Speicherstangen
- FR: Füllrohr
- ZE: Zuführeinrichtung
- AE: Aufhängeelemente
- 110: Förderband
- 112: Antriebsmotor
- 114: Riemenscheibe
- 116: Riemen
- 118: Umlenkrolle
- 120: Winkelgetriebe
- 122: Antriebsriemen
- 130: Gleitschiene
- 130a: horizontal verlaufender Gleitschienenabschnitt
- 130b: geneigt verlaufender Gleitschienenabschnitt
- 130c: Absatz
- 134: Einfädelkegel
- 134a: ringförmig umlaufenden Nut
- 136: gabelförmiges Übergabeelement
- 136a: Zinken
- 138: Sensor
- 140: Lagereinrichtungen
- 150: Stützrollen
- 150a: konkave Oberflächenkontur
- 150': obere Stützrolle
- 150": untere Stützrolle
- 152: Kugellagern
- 154: Achse
- 156, 157: Lagerwänden
- 158: Welle
- 158a: Wellenfortsatz
- 159: Kegel- oder Schneckenradgetriebe
- 160: Hohlwelle
- 160a: stirnseitiges Wellenende
- 160b: rechtes stirnseitige Ende
- 160c: Abschrägung
- 160d: konvexe Oberflächenkontur
- 162: gewindeförmig umlaufende Nut
- 300: Fördereinrichtung
- 310: Endlosförderer
- 310a, 310b: Endlosketten
- 312: freilaufende Ritzel
- 314: angetriebene Ritzel
- 320: Förderelemente
- 322: Befestigungsstangen
- 324: dreiecksförmige Tragwände
- 326: Drehachse
- 328: Teilhaken
- 328a: Verriegelungsausnehmung
- 330: Trag- und Führungsrollen
- 332: Spreizleiste
- 332a: dreiecksförmiger Abschnitte
- 332b: Führungsbahn
- 336: Sperrklinkenelement
- 336a: Sperrklinke
- 336b: Auslösenase
- 338: Blattfeder
- 340: Hakenaufrichtelement
- 350: Auslöseeinheit
- 352: Auslösemutter
- 354: Drehspindel
- 400: Revolvereinrichtung
- 410: Revolverscheibe
- 412: Zentralöffnung
- 412a: Nockenbahn
- 412b: Ausnehmungen
- 414: Einspanneinheiten
- 416: Zahnkranz
- 500: Unterstützeinrichtung
- 510: Unterstützungsgreifer
- 516: Schwenkachse
- 518: Hakenelement
- 520: Verriegelungsstange
- 522: Nocken
- 600: Zuführeinrichtung
- 610: Exzentereinheit
- 612: ersten Exzenter
- 614: zweiten Exzenter
- 620: fördernde Stangen
- 622: Ausnehmungen
- 630: starre Abstützelemente
- 700: Prüfeinrichtung
- 710: zylindrisches Element
- 710a: Boden
- 710b: Verjüngung
- 710c: hintere Hälfte
- 712: Überwachungseinheit
- 712a: Sensor
- 712b: Sensor

- 712c: Sensor
- 800: Wiegeeinrichtung
- 810: Wiegehebel
- 812: vorderes Ende
- 814: hinteres Ende
- 816: Drehachse
- 820: Zylinder
- 822: Kolbenstange

## Patentansprüche

1. Verfahren zum Steuern einer Fertigungslinie (FCB) zur Herstellung von wurstförmigen Produkten (W), die in einem schlauchförmigen Verpackungshüllenmaterial ein fließfähiges Füllgut, wie Wurstbrät, Dichtmasse, Granulat und dgl. aufnehmen, wobei die Fertigungslinie (FCB) zumindest aufweist: eine Clipmaschine (C), in der das mit Füllgut befüllte Verpackungshüllenmaterial in einzelne wurstförmige Produkte (W) durch Setzen von Verschlussclips portioniert und von dem Vorrat an übrigem Verpackungshüllenmaterial abgetrennt wird, wobei beim Setzen der Verschlussclips mindestens ein flexibles Aufhängeelement (AE) an dem wurstförmigen Produkt (W) angebracht werden kann, das in der Clipmaschine (C) getaktet zugeführt wird, und eine Beschickungsmaschine (B), die Speicherstangen (SP) für die Weiterverarbeitung der wurstförmigen Produkte (W) einzeln mit wurstförmigen Produkten (W) beschickt, wobei zum Beschicken der Speicherstangen (SP) mit wurstförmigen Produkten (W) kontinuierlich entlang eines Förderwegs umlaufende Förderelemente (320) verwendet werden, die die aus der Clipmaschine (C) auslaufenden wurstförmigen Produkte (W) in einem zwischen der Clipmaschine (C) und der Beschickungsmaschine (B) vorgesehenen Übernahmebereich (ÜB,ÜC) übernehmen, **dadurch gekennzeichnet, dass**
zumindest die Umlaufgeschwindigkeit der Förderelemente (320) der Beschickungsmaschine (B) auf Basis einer aus der Clipmaschine (C) abgeleiteten Steuergröße gesteuert wird, wobei
der Steuerung der Umlaufgeschwindigkeit eine Regelung überlagert wird, und dass die Regelung der Umlaufgeschwindigkeit der Förderelemente (320) auf Basis der Abweichungstendenz des Abstandes der Förderelemente (320) von einer vorbestimmten Position an dem Förderweg der Förderelemente (320) erfolgt.

2. Verfahren nach Anspruch 1,
**dadurch gekennzeichnet, dass** die Umlaufgeschwindigkeit der Förderelemente (320) auf einem zumindest zeitabschnittsweise wenigstens annährend konstanten Sollwert gehalten wird, der durch die aus der Clipmaschine (C) abgeleitete Steuergröße bestimmt wird.

3. Verfahren nach Anspruch 1 oder 2,
**dadurch gekennzeichnet, dass** die aus der Clipmaschine (C) abgeleitete Steuergröße für die Umlaufgeschwindigkeit der Förderelemente (320) die Zuführgeschwindigkeit der Aufhängeelemente (AE) in der Clipmaschine (C) ist.

4. Verfahren nach einem der Ansprüche 1 bis 3,
**dadurch gekennzeichnet, dass** mit der der Steuerung der Umlaufgeschwindigkeit überlagerten Regelung der Zeitpunkt des Erreichens einer Übernahmeposition (ÜB) in der Beschickungsmaschine (B) durch die Förderelemente (320) zum kontinuierlichen Übernehmen von wurstförmigen Produkten (W) geregelt wird.

5. Verfahren nach einem der Ansprüche 1 bis 4,
**dadurch gekennzeichnet, dass** als die vorbestimmte Position die Übernahmeposition (ÜB) der Förderelemente (320) in der Beschickungsmaschine (B) zur Übernahme der aus der Clipmaschine (C) auslaufenden wurstförmigen Produkte (W) gewählt wird.

6. Verfahren nach Anspruch 5,
**dadurch gekennzeichnet, dass** bei Zunahme der Abweichungstendenz die Umlaufgeschwindigkeit der Förderelemente (320) erhöht und/oder bei Abnahme der Abweichungstendenz die Umlaufgeschwindigkeit der Förderelemente (320) verringert wird.

7. Verfahren nach einem der Ansprüche 5 bis 6,
**dadurch gekennzeichnet, dass** zur Bestimmung der Abweichungstendenz der Abstand eines bestimmten Förderelements (320) von der vorbestimmten Position in einem Umlauf entlang des Förderwegs mit dem Abstand des bestimmten Förderelements (320) von der vorbestimmten Position in einem nachfolgenden Umlauf verglichen wird.

8. Verfahren nach einem der Ansprüche 5 bis 6,
**dadurch gekennzeichnet, dass** zur Bestimmung der Abweichungstendenz der Abstand eines bestimmten Förderelements (320) von der vorbestimmten Position in einem Umlauf entlang des Förderwegs mit dem Abstand des nachfolgenden Förderelements (320) von der vorbestimmten Position in dem gleichen Umlauf verglichen wird.

9. Verfahren nach einem der Ansprüche 1 bis 8,
**dadurch gekennzeichnet, dass** für die Fertigungslinie (FCB) weiterhin eine Füllmaschine (F) vorgesehen wird, die in der Fertigungslinie (FCB) stromaufwärts der Clipmaschine (C) angeordnet wird und die vorzugsweise das Füllgut dem Verpackungshüllenmaterial in der Clipmaschine (C) zuführt.

10. Verfahren nach Anspruch 9,
**dadurch gekennzeichnet, dass** die Füllmaschine (F) diskontinuierlich betrieben wird.

11. Verfahren nach Anspruch 9 oder 10,
**dadurch gekennzeichnet, dass** der Betrieb der Füllmaschine (F) bei einer Störung des Betriebs der Beschickungsmaschine (B) angehalten wird.

12. Verfahren nach Anspruch 11,
**dadurch gekennzeichnet, dass** zum Anhalten der Füllmaschine (B) ein an der Füllmaschine (F) anliegendes Freigabesignal durch die Beschickungsmaschine (B) weggenommen wird.

13. Verfahren nach einem der Ansprüche 1 bis 12,
**dadurch gekennzeichnet, dass** bei einer Störung des Betriebs der Beschickungsmaschine (B) der Betrieb der Clipmaschine (C) zumindest bis zur Fertigstellung des gerade zu befüllenden wurstförmigen Produkts (W) fortgesetzt wird und dass nach der Fertigstellung der Betrieb der Clipmaschine (C) angehalten wird.

14. Verfahren nach einem der Ansprüche 1 bis 13,
**dadurch gekennzeichnet, dass** bei einer Störung des Betriebs der Beschickungsmaschine (B) das Förderelement (320), das gerade in der Übernahmeposition (ÜB) der Beschickungsmaschine (B) ein wurstförmiges Produkt (W) von der Clipmaschine (C) übernimmt, aus der Übernahmeposition (ÜB) herausgefahren wird, bevor der Betrieb der kontinuierlich umlaufenden Förderelemente (320) angehalten wird.

15. Verfahren nach Anspruch 14,
**dadurch gekennzeichnet, dass** das Anhalten der kontinuierlich umlaufenden Förderelemente (320) erfolgt, bevor das Förderelement (320), das gerade in der Übernahmeposition (ÜB) ein wurstförmiges Produkt (W) von der Clipmaschine (C) übernommen hat, eine zu beschickende Speicherstange (SP) erreicht hat.

16. Verfahren nach einem der Ansprüche 1 bis 15,
**dadurch gekennzeichnet, dass** eine Steuereinrichtung vorgesehen wird, die in der Lage ist, zumindest die Umlaufgeschwindigkeit der Förderelemente (320) der Beschickungsmaschine (B) auf Basis der aus der Clipmaschine (C) abgeleiteten Steuergröße zu steuern.

17. Verfahren nach Anspruch 16,
**dadurch gekennzeichnet, dass** die Steuereinrichtung dazu verwendet wird, zumindest den aufeinander abgestimmten Betrieb der Beschickungsmaschine (B) und der Clipmaschine (C) zu steuern.

18. Fertigungslinie (FCB) zum Herstellen von wurstförmigen Produkten (W), die in einem schlauchförmigen Verpackungshüllenmaterial ein fließfähiges Füllgut, wie Wurstbrät, Dichtmasse, Granulat und dgl. aufnehmen, wobei die Fertigungslinie (FCB) zumindest aufweist: eine Clipmaschine (C), in der das mit Füllgut befüllte Verpackungshüllenmaterial in einzelne wurstförmige Produkte (W) durch Setzen von Verschlussclips portioniert und von dem Vorrat an übrigem Verpackungshüllenmaterial abgetrennt wird, wobei beim Setzen der Verschlussclips mindestens ein flexibles Aufhängeelement (AE) angebracht werden kann, das in der Clipmaschine (C) getaktet zugeführt wird, und eine Beschickungsmaschine (B), die Speicherstangen (SP) für die Weiterverarbeitung der wurstförmigen Produkte (W) einzeln mit wurstförmigen Produkten (W) beschickt und die kontinuierlich entlang eines Förderwegs umlaufende Förderelemente (320) aufweist, welche die aus der Clipmaschine (C) auslaufenden wurstförmigen Produkte (W) in einem zwischen der Clipmaschine (C) und der Beschickungsmaschine (B) vorgesehenen Übernahmebereich (ÜB, ÜC) übernehmen, **dadurch gekennzeichnet, dass**
eine Steuereinrichtung vorgesehen ist, welche in der Lage ist, zumindest die Umlaufgeschwindigkeit der Förderelemente (320) der Beschickungsmaschine (B) auf Basis einer aus der Clipmaschine (C) abgeleiteten Steuergröße zu steuern, wobei
die Steuereinrichtung in der Lage ist, der Steuerung der Umlaufgeschwindigkeit eine Regelung zu überlagern, die die Umlaufgeschwindigkeit der Förderelemente (320) auf Basis der Abweichungstendenz des Abstandes der Förderelemente (320) von einer vorbestimmten Position an dem Förderweg der Förderelemente (320) regelt.

19. Fertigungslinie nach Anspruch 18,
**dadurch gekennzeichnet, dass** die Steuereinrichtung in der Lage ist, zumindest den aufeinander abgestimmten Betrieb der Beschickungsmaschine (B) und der Clipmaschine (C) zu steuern.

20. Fertigungslinie nach einem der Ansprüche 18 bis 19,
**dadurch gekennzeichnet, dass** die Förderstrecke zwischen der Clipmaschine (C) und der Beschickungsmaschine (B) unterbrochen ist.

21. Fertigungslinie nach Anspruch 20,
**dadurch gekennzeichnet, dass** die Unterbrechung der Förderstrecke zwischen Clipmaschine (C) und Beschickungsmaschine (B) durch einen Übernahmebereich (ÜB, ÜC) gebildet ist, in dem der Förderweg der Clipmaschine in einer Übergabeposition (ÜC) endet und in dem die Förderelemente (320) der Beschickungsmaschine (B) in einer beschickungsmaschinenseitigen Übernahmeposition (ÜB) die in der clipmaschinenseitigen Übergabeposition (ÜC) befindlichen wurstförmigen Produkte (W) einzeln übernehmen.

22. Fertigungslinie nach einem der Ansprüche 18 bis 21,
**dadurch gekennzeichnet, dass** eine Füllmaschine (F) zum Zuführen von Füllgut an das Verpackungshüllenmaterial in der Clipmaschine (C) vorgesehen ist, die in der Fertigungslinie (FCB) stromaufwärts der Clipmaschine (C) angeordnet ist.

23. Fertigungslinie nach Anspruch 18, enthaltend:
eine Clipmaschine (C) mit wenigstens zwei Verschließwerkzeugen, die zum Setzen und Verschließen von Clips an dem wurstförmigen Produkt (W) relativ zueinander zwischen einer Öffnungsstellung und einer Verschließstellung bewegbar sind, mit mindestens einer Clipspeichereinrichtung, von der Clips den Verschließwerkzeugen zuführbar sind, mit einer Speichereinrichtung zum Speichern eines Vorrats an Verpackungshüllenmaterial, mit einer Trenneinrichtung zum Abtrennen von Verpackungshüllenmaterial eines einzelnen Wurstprodukts von dem Vorrat an Verpackungshüllenmaterial, mit einem Füllrohr (F) zum Zuführen von Füllgut, mit einer Austragfördereinrichtung zum Austragen von wurstförmigen Produkten (W) aus der Clipmaschine (C) entlang einer Austragstrecke (AS) für die wurstförmigen Produkte (W) und mit einer Zuführeinrichtung (ZE) für flexible Aufhängeelemente (AE), aus der Aufhängeelemente (AE) beim Setzen von Clips einem der Verschließwerkzeuge zuführbar sind, wobei
die Austragstrecke (AS) für die wurstförmigen Produkte (W) einen ersten Förderweg (110) für die wurstförmigen Produkte (W) und parallel zu dem Förderweg (110) für die wurstförmigen Produkte (W) ein von dem Förderweg (110) für die wurstförmigen Produkte (W) getrennten Förderweg (130) für das mit einem wurstförmigen Produkt (W) verbundene Aufhängeelement (AE) vorgesehen ist,
**dadurch gekennzeichnet, dass** der Förderweg (130) für die Aufhängeelemente (AE) eine vorzugsweise einen kreisförmigen Querschnitt aufweisende Gleitschiene (130) enthält, die wenigstens zwei Lagereinrichtung (140) aufweist, und dass die Gleitschiene (130) im Bereich der Lagereinrichtungen (140) eine antreibbare Hohlwelle (160) aufweist, die koaxial zu der Gleitschiene (130) angeordnet ist.

24. Fertigungslinie nach Anspruch 23,
**dadurch gekennzeichnet, dass** der Förderweg (110) für die wurstförmigen Produkte (W) und der Förderweg (130) für das mit einem wurstförmigen Produkt (W) verbundene Aufhängeelement (AE) in einer Übergabeposition (ÜC) enden, in der ein wurstförmiges Produkt (W) zur Übergabe für eine Weiterverarbeitung definiert bereitgehalten werden kann.

25. Fertigungslinie nach Anspruch 24,
**dadurch gekennzeichnet, dass** an der Übergabeposition (ÜC) zumindest ein Übergabeelement (136) zur Übergabe der wurstförmigen Produkte (W) vorgesehen ist, das an seinem von der Clipmaschine (C) wegweisenden Ende gabelförmig ausgestaltet ist.

26. Fertigungslinie nach Anspruch 24 oder 25,
**dadurch gekennzeichnet, dass** an der Übergabeposition (ÜC) wenigstens ein Sensor (138) vorgesehen ist, der das Vorhandensein eines wurstförmigen Produkts (W) erfasst.

27. Fertigungslinie nach Anspruch 23,
**dadurch gekennzeichnet, dass** die Lagereinrichtungen (140) jeweils durch drei vorzugsweise in einer gleichmäßigen Teilung in Umfangsrichtung der Gleitschiene (130) angeordnete Stützrollen (150) gebildet sind.

28. Fertigungslinie nach einem der Ansprüche 23 bis 27,
**dadurch gekennzeichnet, dass** die Gleitschiene (130) im Bereich der Lagereinrichtungen (140) mit einer gewindeförmig umlaufenden Nut (162) versehen ist.

29. Fertigungslinie nach Anspruch 28,
**dadurch gekennzeichnet, dass** die gewindeförmig umlaufende Nut (162) auf der Hohlwelle (160) vorgesehen ist.

30. Fertigungslinie nach einem der Ansprüche 27 bis 29,
**dadurch gekennzeichnet, dass** die Gleitschiene (130) im Bereich der Stützrollen (150) eine konvexe Oberfläche (160d) aufweist, während die Stützrollen (150) eine entsprechend konkave Oberfläche (150a) besitzen.

31. Fertigungslinie nach einem der Ansprüche 23 bis 30
**dadurch gekennzeichnet, dass** die Gleitschiene (130) zwischen den beiden Lagereinrichtungen (140) abgewinkelt ist.

32. Fertigungslinie nach einem der Ansprüche 27 bis 31,
**dadurch gekennzeichnet, dass** mindestens eine der Stützrollen (150) jeder Lagereinrichtung (140) antreibbar ist.

33. Fertigungslinie nach einem der Ansprüche 23 bis 32,
**dadurch gekennzeichnet, dass** die Gleitschiene (130) an ihrem clipmaschinenseitigen Ende mit einem Einfädelkegel (134) versehen ist.

34. Fertigungslinie nach einem der Ansprüche 23 bis 33,
**dadurch gekennzeichnet, dass** sich an das clipmaschinenseitige Ende der Gleitschiene (130) eine Fangeinrichtung für die Aufhängeelemente (AE) anschließt, die von der Gleitschiene (130) bis in den Verschließbereich der Verschließwerkzeuge reicht.

35. Fertigungslinie nach Anspruch 34,
**dadurch gekennzeichnet, dass** die Fangeinrichtung abgewinkelt und mit einer kegelförmigen Fangspitze versehen ist.

36. Fertigungslinie nach einem der Ansprüche 23 bis 35,
**dadurch gekennzeichnet, dass** die Aufhängeelemente (AE) durch Fadenschlaufen gebildet sind.

37. Fertigungslinie nach Anspruch 18, enthaltend:
eine Beschickungsmaschine (B), wobei Speicherstangen (SP) zum Aufhängen der wurstförmigen Produkte (W) vorgesehen sind, die an ihrem einen Ende ein flexibles Aufhängelement (AE) aufweisen, welches über die Speicherstangen (SP) führbar ist und welches eine geschlossene und eine offene Ausgestaltung annehmen kann,
- mit einer Einrichtung zur endseitigen Einspannung einer am anderen Ende freien Speicherstange (SP), und
- mit einer Einrichtung (300) zum aufeinanderfolgenden Zuführen der an ihren Aufhängeelementen (AE) hängenden wurstförmigen Produkte (W) zur Speicherstange (SP) unter Führung der Aufhängeelemente (AE) über die Speicherstange (SP) von deren freiem Ende her und Ablegen der Aufhängelemente (AE) an voneinander beabstandeten Stellen entlang der Speicherstange (SP),
- die einen Endlosförderer (310) mit einem parallel zur Speicherstange (SP) verlaufenden Trum aufweist,
- wobei der Endlosförderer (310) zur Aufnahme der Aufhängeelemente (AE) aufeinanderfolgender wurstförmiger Produkte (W) beabstandete Förderelemente (320) trägt,
- welche aus einer die wurstförmigen Produkte (W) an ihren Aufhängeelemente (AE) haltenden Stellung in eine die Aufhängeelemente (AE) auf der Speicherstange (SP) ablegenden Stellung bewegbar sind, und
- wobei wenigstens ein Steuerelement an beabstandeten Stellen entlang der Speicherstange (SP) die Bewegung der Förderelemente (320) in ihre ablegende Stellung bewirkt, wobei weiterhin
die Förderelemente (320) Haken (328) aufweisen, die um horizontale Achsen (326) aus ihrer die Aufhängeelemente (AE) haltenden Stellung in ihre die Aufhängeelemente (AE) ablegende Stellung schwenkbar sind und dass das Steuerelement ein entlang dem Trum des Endlosförderers (310) entgegen dessen Vorlaufrichtung bewegtes Löseglied (352) ist, welches die Schwenkung der Haken (328) aus ihrer haltenden in ihre ablegende Stellung auslöst; und
- mit einer Steuereinrichtung, welche in der Lage ist, zumindest die Umlaufgeschwindigkeit der Förderelemente (320) der. Beschickungsmaschine (B) auf Basis einer aus der Clipmaschine (C) abgeleiteten Steuergröße zu steuern,
**dadurch gekennzeichnet, dass** die Steuereinrichtung in der Lage ist, der Steuerung der Umlaufgeschwindigkeit eine Regelung zu überlagern, die die Umlaufgeschwindigkeit der Förderelemente (320) auf Basis der Abweichungstendenz des Abstandes der Förderelemente (320) von einer vorbestimmten Position an dem Förderweg der Förderelemente (320) regelt.

38. Fertigungslinie nach Anspruch 37,
**dadurch gekennzeichnet, dass** die Haken (328) jeweils aus zwei gleichartigen Teilhaken (328) bestehen, die vor Erreichen einer Übernahmeposition (ÜB) der Beschickungsmaschine (B), in der die wurstförmigen Produkte (W) von den Förderelementen (320) an deren Aufhängeelementen (AE) übernehmbar sind, deckungsgleich aneinander liegen und nach dem Verlassen der Übernahmeposition (ÜB) quer zur Erstreckung des Trums gegen Federkraft in eine die Aufhängeelemente (AE) offenhaltende Stellung spreizbar sind.

39. Fertigungslinie nach Anspruch 37 oder 38,
**dadurch gekennzeichnet, dass** ein in Rücklaufrichtung des Endlosförderers (310) vor der Übernahmeposition (ÜB) für die Aufhängeelemente (AE) angeordnetes Stellglied (352) die Haken (328) in ihre die Aufhängeelemente (AE) haltende Stellung bewegt.

40. Fertigungslinie nach einem der Ansprüche 37 bis 39,
**dadurch gekennzeichnet, dass** der Endlosförderer (310) eine um eine Antriebsscheibe (314) und eine Umlenkscheibe (312) laufende Kette (310a, 310b) ist, wobei beide Scheiben (312, 314) um horizontale Achsen drehbar sind.

41. Fertigungslinie nach einem der Ansprüche 37 bis 40,
**dadurch gekennzeichnet, dass** eine Abstützeinrichtung (500) vorgesehen ist, die nach Teilbeschickung einer Speicherstange (SP) an diese zwischen ihren Enden aus einer Warteposition in eine Unterstützungsposition reversibel anschwenkbar ist.

42. Fertigungslinie nach Anspruch 41,
**dadurch gekennzeichnet, dass** die Abstützeinrichtung (500) in die Unterstützungsposition mittels der Schwerkraft und in die Warteposition mittels eines motorischen Antriebs bewegbar ist.

43. Fertigungslinie nach Anspruch 42,
**dadurch gekennzeichnet, dass** die Bewegung der Abstützeinrichtung (500) in die Unterstützungsposition durch eine elastische Vorspannkraft unterstützbar ist, welche durch den motorischen Antrieb reproduzierbar ist.

44. Fertigungslinie nach Anspruch 42 oder 43,
**dadurch gekennzeichnet, dass** der motorische Antrieb der Abstützeinrichtung (500) von einem Antrieb der Beschickungsmaschine (B) ableitbar ist.

45. Fertigungslinie nach einem der Ansprüche 41 bis 44,
**dadurch gekennzeichnet, dass** die Bewegung der Abstützeinrichtung (500) aus der Warteposition in die Unterstützungsposition von dem Auslöseelement (352) auslösbar ist.

46. Fertigungslinie nach einem der Ansprüche 41 bis 45,
**dadurch gekennzeichnet, dass** die Abstützeinrichtung (500) eine Verriegelungseinrichtung (520) aufweist, die die Abstützeinrichtung (500) in der Warteposition reversibel verriegelt.

47. Fertigungslinie nach einem der Ansprüche 41 bis 46,
**dadurch gekennzeichnet, dass** die Bewegung der Abstützeinrichtung (500) entlang einer stetigen Kurvenbahn (412a) geführt ist.

48. Fertigungslinie nach Anspruch 47,
**dadurch gekennzeichnet, dass** die Kurvenbahn (412a) für die Abstützeinrichtung (500) wenigstens zwei Unstetigkeitsstellen (412b) aufweist, die die Warteposition und die Unterstützungsposition definieren.

49. Fertigungslinie nach einem der Ansprüche 37 bis 48, bei der die Einrichtung zur endseitigen Einspannung einer Speicherstange (SP) Teil einer Revolvereinrichtung (400) mit vorzugsweise vier Einspannköpfen (414) ist, die wenigstens in eine Einspannstellung, in eine Beschickungsstellung und in eine Abgabestellung drehbar sind,
**dadurch gekennzeichnet, dass** zwischen der Einspannstellung und der Beschickungsstellung eine Prüfstellung vorgesehen ist.

50. Fertigungslinie nach Anspruch 49,
**dadurch gekennzeichnet, dass** die Revolvereinrichtung (400) einen motorischen Antrieb aufweist, von dem die Bewegung der Abstützeinrichtung (500) aus der Unterstützungsposition in die Warteposition ableitbar ist.

51. Fertigungslinie nach Anspruch 49 oder 50,
**dadurch gekennzeichnet, dass** an der der Revolvereinrichtung (400) gegenüberliegenden Seite der Beschickungsmaschine eine Prüfeinrichtung (700) vorgesehen ist, die zumindest das Vorhandensein einer Speicherstange (SP) erfasst.

52. Fertigungslinie nach Anspruch 51,
**dadurch gekennzeichnet, dass** die Prüfeinrichtung (700) in der Lage ist, die Ausrichtung der Speicherstange (SP) zu erfassen.

53. Fertigungslinie nach Anspruch 51 oder 52,
**dadurch gekennzeichnet, dass** die Prüfeinrichtung (700) in der Lage ist, eine falsch positionierte Speicherstange (SP) und/oder eine eine falsche Ausrichtung aufweisende Speicherstange (700) aus dem Revolver (400) zu entfernen.

54. Fertigungslinie nach einem der Ansprüche 51 bis 53,
**dadurch gekennzeichnet, dass** die Prüfeinrichtung (700) in der Lage ist, die Zuführung der Speicherstangen (SP) so zu steuern, dass sich immer mindestens eine Speicherstange (SP) in der korrekten Positionierung in der Beschickungsposition befindet.

55. Fertigungslinie nach einem der Ansprüche 51 bis 54,
**dadurch gekennzeichnet, dass** in der Prüfstellung die Speicherstange (SP) vom Einspannkopf (414) mit ihrem freien Ende axial in einen Testnapf (710) der Prüfeinrichtung (700) verschiebbar ist und im Falle einer Behinderung des Verschiebens aussonderbar ist.

56. Fertigungslinie nach einem der Ansprüche 37 bis 55,
**dadurch gekennzeichnet, dass** die Förderelemente (320) zur Übergabe der wurstförmigen Produkte (W) an die Speicherstangen (SP) parallel über diese hinwegführbar ist.

57. Fertigungslinie nach einem der Ansprüche 38 bis 56,
**dadurch gekennzeichnet, dass** die Teilhaken (328) eines Förderelements (320) unmittelbar vor Erreichen der Speicherstange (SP) spreizbar sind.

58. Fertigungslinie nach Anspruch 57,
**dadurch gekennzeichnet, dass** zum Spreizen der Teilhaken (328) eine vorzugsweise trapezförmige Spreizleiste (332) vorgesehen ist.

59. Fertigungslinie nach Anspruch 57 oder 58,
**dadurch gekennzeichnet, dass** die gespreizten Teilhaken (328) der Förderelemente (320) nach Erreichen des Endes der Speicherstange (SP) wieder zusammenführbar sind.

60. Fertigungslinie nach Anspruch 59,
**dadurch gekennzeichnet, dass** das Zusammenführen der gespreizten Teilhaken (328) der Förderelemente (320) mittels einer vorgespannten Feder durchführbar ist.

61. Fertigungslinie nach einem der Ansprüche 37 bis 60,
**dadurch gekennzeichnet, dass** als Auslöseelement eine Auslösemutter (352) vorgesehen ist, bei deren Erreichen ein Förderelement (320) durch Wegklappen der Haken (328) das wurstförmige Produkt (W) zur Ablage auf die Speicherstange (SP) freigibt.

62. Fertigungslinie nach Anspruch 61,
**dadurch gekennzeichnet, dass** die Auslösemutter (352) auf einer Spindel (354) führbar ist.

63. Fertigungslinie nach Anspruch 60 oder 61,
**dadurch gekennzeichnet, dass** die Auslösemutter (352) entgegen der Bewegungsrichtung der Förderelemente (320) so führbar ist, dass ein gleichmäßiges Befüllen der Speicherstangen erfolgt.

64. Fertigungslinie nach einem der Ansprüche 60 bis 63,
**dadurch gekennzeichnet, dass** die Auslösemutter (352) in der Lage ist, einen Mechanismus zu betätigen, der das Wegklappen des Haken (328) des Förderelements (320) bewirkt.

65. Fertigungslinie nach einem der Ansprüche 37 bis 64,
**dadurch gekennzeichnet, dass** das Förderelement (320) eine Klinkenvorrichtung (336) aufweist, die den Haken (328) des Förderelements (320) in der weggeklappten Position sichert.

66. Fertigungslinie nach einem der Ansprüche 37 bis 65,
**dadurch gekennzeichnet, dass** das Förderelement (320) in der Lage ist, unmittelbar vor Erreichen der Übernahmeposition (ÜB) ein Hakenaufrichtelement (340) zu passieren, das die zur Freigabe des wurstförmigen Produkts (W) weggeklappten Haken (328) wieder aufrichtet.

67. Fertigungslinie nach Anspruch 66,
**dadurch gekennzeichnet, dass** das Förderelement (320) eine Klinkenvorrichtung (336) aufweist, die die Haken des Förderelements (320) in der aufgerichteten Position sichert.

68. Fertigungslinie nach einem der Ansprüche 37 bis 67,
**dadurch gekennzeichnet, dass** eine Zuführeinrichtung (600) für die Speicherstangen (SP) vorgesehen ist, die die Speicherstangen (SP) in Übereinstimmung mit dem Arbeitszyklus der Beschickungsmaschine (B) zuführt.

69. Fertigungslinie nach Anspruch 68,
**dadurch gekennzeichnet, dass** die Zuführeinrichtung (600) in der Lage ist, die Speicherstangen (SP) achsparallel zur Einspannvorrichtung (414) der Revolvereinrichtung (400) dieser zu zuführen, und die Speicherstangen (SP) koaxial mit der Einspannvorrichtung (414) in die Beschickungsmaschine (B) einlegt.

70. Fertigungslinie nach Anspruch 68 oder 69,
**dadurch gekennzeichnet, dass** die Zuführeinrichtung (600) mindestens zwei mit gleichmäßigen Teilungen versehene, starre Abstützelemente (630) besitzt, auf denen ein Vorrat an Speicherstangen (SP) achsparallel zur Befüllrichtung abgelegt ist.

71. Fertigungslinie nach einem der Ansprüche 68 bis 70,
**dadurch gekennzeichnet, dass** die Zuführeinrichtung (600) mindestens zwei fördernde, mit gleichmäßigen Teilungen versehene Stangen (620) aufweist, die durch eine intermittierende Bewegung die Speicherstangen (SP) in die Beschickungsmaschine (B) transportieren.

72. Fertigungslinie nach Anspruch 71,
**dadurch gekennzeichnet, dass** die intermittierende Bewegung durch mindestens einen Excenter (612) erzeugbar ist.

73. Fertigungslinie nach Anspruch 72,
**dadurch gekennzeichnet, dass** der mindestens eine Excenter (612) durch einen Riementrieb antreibbar ist.

74. Fertigungslinie nach Anspruch 73,
**dadurch gekennzeichnet, dass** der Antrieb für den Riementrieb von dem Antrieb der Revolvereinrichtung (400) ableitbar ist.

75. Fertigungslinie nach einem der Ansprüche 37 bis 74,
**dadurch gekennzeichnet, dass** im Bereich der Übernahmeposition (ÜB) eine Wiegeeinrichtung (800) für die wurstförmigen Produkte (W) vorgesehen ist, die wahlweise das Gewicht eines einzelnen wurstförmigen Produkts (W) erfasst.

76. Fertigungslinie nach Anspruch 75,
**dadurch gekennzeichnet, dass** die Wiegeeinrichtung (800) einen in den Bewegungsweg eines Förderelements (320) einschwenkbaren Wiegehebel (810) aufweist, an den ein zu wiegendes wurstförmiges Produkt (W) von dem Förderelement (320) übergebbar ist.

## Claims

1. A method of controlling a production line (FCB) for the production of sausage-shaped products (W) which receive a filling material capable of flow such as sausage meat, sealing material, granular material and the like in a tubular packaging casing material, wherein the production line (FCB) has at least: a clip machine (C) in which the packaging casing material filled with filling material is portioned into individual sausage-shaped products (W) by the fitment of closure clips and is separated from the supply of the other packaging casing material, wherein upon placement of the closure clips at least one flexible suspension element (AE) can be fitted to the sausage-shaped product (W), which is supplied in cyclically controlled relationship in the clip machine (C), and a loading machine (B) which individually loads storage bars (SP) with sausage-shaped products (W) for further processing thereof, wherein conveyor elements (320) which continuously circulate along a conveyor path are used for loading the storage bars (SP) with sausage-shaped products (W), which conveyor elements take over the sausage-shaped products (W) issuing from the clip machine (C) in a takeover region (ÜB, ÜC) provided between the clip machine (C) and the loading machine (B), **characterised in that** at least the speed of circulation of the conveyor elements (320) of the loading machine (B) is controlled on the basis of a control parameter derived from the clip machine (C), wherein a regulation is superimposed on the control of the speed of circulation and regulation of the speed of circulation of the conveyor elements (320) is effected on the basis of the tendency of a deviation in the spacing of the conveyor elements (320) from a predetermined position on the conveyor path of the conveyor elements (320).

2. A method according to claim 1 **characterised in that** the speed of circulation of the conveyor elements (320) is kept at a reference value which is at least approximately constant at least in time intervals, the reference value being determined by the control parameter derived from the clip machine (C).

3. A method according to claim 1 or claim 2 **characterised in that** the control parameter derived from the clip machine (C) for the speed of circulation of the conveyor elements (320) is the speed of supply of the suspension elements (AE) in the clip machine (C).

4. A method according to one of claims 1 to 3 **characterised in that** the moment in time of attainment of a takeover position (ÜB) in the loading machine (B) by the conveyor elements (320) for the continuous takeover of sausage-shaped products (W) is regulated with the regulation which is superimposed on the control of the speed of circulation.

5. A method according to one of claims 1 to 4 **characterised in that** the takeover position (ÜB) of the conveyor elements (320) in the loading machine (B) for takeover of the sausage-shaped products (W) issuing from the clip machine (C) is selected as the predetermined position.

6. A method according to claim 5 **characterised in that** upon an increase in the tendency to deviation the speed of circulation of the conveyor elements (320) is increased and/or upon a reduction in the tendency to deviation the speed of circulation of the conveyor elements (320) is reduced.

7. A method according to one of claims 5 and 6 **characterised in that** to determine the tendency to deviation the spacing of a given conveyor element (320) from the predetermined position in a circulation along the conveyor path is compared to the spacing of the given conveyor element (320) from the predetermined position in a subsequent circulation.

8. A method according to one of claims 5 and 6 **characterised in that** to determine the tendency to deviation the spacing of a given conveyor element (320) from the predetermined position in a circulation along the conveyor path is compared to the spacing of the subsequent conveyor element (320) from the predetermined position in the same circulation.

9. A method according to one of claims 1 to 8 **characterised in that** for the production line (FCB) there is further provided a filling machine (F) which is arranged upstream of the clip machine (C) in the production line (FCB) and which preferably feeds the filling material to the packaging casing material in the clip machine (C).

10. A method according to claim 9 **characterised in that** the filling machine (F) is operated discontinuously.

11. A method according to claim 9 or claim 10 **characterised in that** operation of the filling machine (F) is stopped upon a disturbance in the operation of the loading machine (B).

12. A method according to claim 11 **characterised in that** an enable signal applied at the filling machine (F) is removed by the loading machine (B) to stop the filling machine (B).

13. A method according to one of claims 1 to 12 **characterised in that** upon a disturbance in the operation of the loading machine (W) operation of the clip machine (C) is continued at least until the sausage-shaped product (W) which is just to be filled is finished, and that after finishing operation of the clip machine (C) is stopped.

14. A method according to one of claims 1 to 13 **characterised in that** upon a disturbance in operation of the loading machine (B) the conveyor element (320) which is just taking over a sausage-shaped product (W) from the clip machine (C) in the takeover position (ÜB) of the loading machine (B) is moved out of the takeover position (ÜB) before operation of the continuously circulating conveyor elements (320) is stopped.

15. A method according to claim 14 **characterised in that** the continuously circulating conveyor elements (320) are stopped before the conveyor element (320) which has just taken over a sausage-shaped product (W) from the clip machine (C) in the takeover position (ÜB) has reached a storage bar (SP) to be loaded.

16. A method according to one of claims 1 to 15 **characterised in that** there is provided a control device capable of controlling at least the speed of circulation of the conveyor elements (320) of the loading machine (B) on the basis of the control parameter derived from the clip machine (C).

17. A method according to claim 16 **characterised in that** the control device is used to control at least the mutually matched operation of the loading machine (B) and the clip machine (C).

18. A production line (FCB) for the production of sausage-shaped products (W) which receive a filling material capable of flow such as sausage meat, sealing material, granular material and the like in a tubular packaging casing material, wherein the production line (FCB) has at least: a clip machine (C) in which the packaging casing material filled with filling material is portioned into individual sausage-shaped products (W) by the fitment of closure clips and is separated from the supply of the other packaging casing material, wherein upon placement of the closure clips at least one flexible suspension element (AE) can be fitted, which is supplied in cyclically controlled relationship in the clip machine (C), and a loading machine (B) which individually loads storage bars (SP) with sausage-shaped products (W) for further processing thereof and which has conveyor elements (320) which continuously circulate along a conveyor path and which take over the sausage-shaped products (W) issuing from the clip machine (C) in a takeover region (ÜB, ÜC) provided between the clip machine (C) and the loading machine (B), **characterised in that** there is provided a control device capable of controlling at least the speed of circulation of the conveyor elements (320) of the loading machine (B) on the basis of a control parameter derived from the clip machine (C), wherein the control device is capable of superimposing on the control of the speed of circulation a regulation which regulates the speed of circulation of the conveyor elements (320) on the basis of the tendency of a deviation in the spacing of the conveyor elements (320) from a predetermined position on the conveyor path of the conveyor elements (320).

19. A production line according to claim 18 **characterised in that** the control device is capable of controlling at least the mutually matched operation of the loading machine (B) and the clip machine (C).

20. A production line according to one of claims 18 and 19 **characterised in that** the conveyor section between the clip machine (C) and the loading machine (B) is interrupted.

21. A production line according to claim 20 **characterised in that** the interruption in the conveyor section between the clip machine (C) and the loading machine (B) is formed by a takeover region (ÜB, ÜC) in which the conveyor path of the clip machine ends in a transfer position (ÜC) and in which the conveyor elements (320) of the loading machine (B) in a takeover position (ÜB) at the loading machine side individually take over the sausage-shaped products (W) disposed in the transfer position (ÜC) at the clip machine side.

22. A production line according to one of claims 18 to 22 **characterised in that** there is provided a filling machine (F) for feeding filling material to the packaging casing material in the clip machine (C), arranged upstream of the clip machine (C) in the production line (FCB).

23. A production line according to claim 18 including:
a clip machine (C) having at least two closure tools which are movable relative to each other between an open position and a closure position for placing and closing clips on the sausage-shaped product (W), at least one clip storage device from which clips can be fed to the closure tools, a storage device for storing a supply of packaging casing material, a separating device for separating off packaging casing material of an individual sausage product from the supply of packaging casing material, a filling tube (F) for feeding filling material, a discharge conveyor device for discharge of sausage-shaped products (W) out of the clip machine (C) along a discharge section (AS) for the sausage-shaped products (W) and a feed device (ZE) for flexible suspension elements (AE), from which suspension elements (AE) can be fed to one of the closure tools when placing clips, wherein
the discharge section (AS) for the sausage-shaped products (W) has a first conveyor path (110) for the sausage-shaped products (W) and parallel to the conveyor path (110) for the sausage-shaped products (W) a conveyor path (130) separate from the conveyor path (110) for the sausage-shaped products (W), for the suspension element (AE) connected to a sausage-shaped product (W),
**characterised in that** the conveyor path (130) for the suspension elements (AE) includes a slide rail (130) which is preferably of a circular cross-section and which has at least two bearing devices (140) and the slide rail (130) in the region of the bearing devices (140) has a drivable hollow shaft (160) arranged coaxially with respect to the slide rail (130).

24. A production line according to claim 23 **characterised in that** the conveyor path (110) for the sausage-shaped products (W) and the conveyor path (130) for the suspension element (AE) connected to a sausage-shaped product (W) end in a transfer position (ÜC) in which a sausage-shaped product (W) can be kept in readiness in defined relationship for transfer for further processing.

25. A production line according to claim 24 **characterised in that** provided at the transfer position (ÜC) is at least one transfer element (136) for transfer of the sausage-shaped product (W), which is of a forked configuration at its end facing away from the clip machine (C).

26. A production line according to claim 24 or claim 25 **characterised in that** provided at the transfer position (ÜC) is at least one sensor (138) which detects the presence of a sausage-shaped product (W).

27. A production line according to claim 23 **characterised in that** the bearing devices (140) are respectively formed by three support rollers (150) preferably arranged at a uniform pitch in the peripheral direction of the slide rail (130).

28. A production line according to one of claims 23 to 27 **characterised in that** the slide rail (130) is provided with a groove (162) extending in a thread configuration in the region of the bearing devices (140).

29. A production line according to claim 28 **characterised in that** the groove (162) extending in a thread configuration is provided on the hollow shaft (160).

30. A production line according to one of claims 27 to 29 **characterised in that** in the region of the support rollers (150) the slide rail (130) has a convex surface (160d) while the support rollers (150) have a correspondingly concave surface (150a).

31. A production line according to one of claims 23 to 30 **characterised in that** the slide rail (130) is angled between the two bearing devices (140).

32. A production line according to one of claims 27 to 31 **characterised in that** at least one of the support rollers (150) of each bearing device (140) is drivable.

33. A production line according to one of claims 23 to 32 **characterised in that** the slide rail (130) is provided at its end towards the clip machine with a conical threading-in portion (134).

34. A production line according to one of claims 23 to 33 **characterised in that** adjoining the end of the slide rail (130), at the clip machine side, is a catch device for the suspension elements (AE), which extends from the slide rail (130) into the closure region of the closure tools.

35. A production line according to claim 34 **characterised in that** the catch device is angled and is provided with a conical catch tip.

36. A production line according to one of claims 23 to 35 **characterised in that** the suspension elements (AE) are formed by thread loops.

37. A production line according to claim 18 including:
a loading machine (B), wherein there are provided storage bars (SP) for suspending the sausage-shaped products (W), which at their one end have a flexible suspension element (AE) which can be guided over the storage bars (SP) and which can assume a closed and an open configuration,
- having a device for gripping at the end a storage bar (SP) which is free at the other end, and
- having a device (300) for successively feeding the sausage-shaped products (W) hanging at their suspension elements (AE) to the storage bar (SP) with the suspension elements (AE) being guided over the storage bar (SP) from the free end thereof and deposit of the suspension elements (AE) at mutually spaced positions along the storage bar (SP),
- which has an endless conveyor (310) with a run extending parallel to the storage bar (SP),
- wherein the endless conveyor (310) has spaced conveyor elements (320) for receiving the suspension elements (AE) of successive sausage-shaped products (W),
- which elements are movable out of a position of holding the sausage-shaped products (W) at their suspension elements (AE) into a position of depositing the suspension elements (AE) on the storage bar (SP), and
- wherein at least one control element at spaced positions along the storage bar (SP) implements movement of the conveyor elements (320) into their depositing position, wherein moreover
the conveyor elements (320) have hooks (328) which are pivotable about horizontal axes (326) out of their position of holding the suspension elements (AE) into their position of depositing the suspension elements (AE), and
the control element is a release member (352) which is moved along the run of the endless conveyor (310) in opposite relationship to the advance direction thereof and which triggers the pivotal movement of the hooks (328) out of their holding position into their depositing position; and
- a control device which is capable of controlling at least the speed of circulation of the conveyor elements (320) of the loading machine (B) on the basis of a control parameter derived from the clip machine (C),
**characterised in that** the control device is capable of superimposing on the control of the speed of circulation a regulation which regulates the speed of circulation of the conveyor elements (320) on the basis of the tendency to deviation of the spacing of the conveyor elements (320) from a predetermined position on the conveyor path of the conveyor elements (320).

38. A production line according to claim 37 **characterised in that** the hooks (328) respectively comprise two similar hook portions (328) which bear against each other in coincident relationship prior to the attainment of a takeover position (ÜB) of the loading machine (B) in which the sausage-shaped products (W) can be taken over by the conveyor elements (320) at their suspension elements (AE) and which are spreadable after leaving the takeover position (ÜB) transversely to the extent of the run against a spring force into a position of holding the suspension elements (AE) open.

39. A production line according to claim 37 or claim 38 **characterised in that** a control member (352) arranged before the takeover position (ÜB) for the suspension elements (AE) in the return direction of the endless conveyor (310) moves the hooks (328) into their position of holding the suspension elements (AE).

40. A production line according to one of claims 37 to 39 **characterised in that** the endless conveyor (310) is a chain (310a, 310b) running around a drive wheel (314) and a direction-changing wheel (312), both wheels (312, 314) being rotatable about horizontal axes.

41. A production line according to one of claims 37 to 40 **characterised in that** there is provided a support device (500) which after partial loading of a storage bar (SP) can be reversibly pivoted thereto between its ends from a waiting position into a support position.

42. A production line according to claim 41 **characterised in that** the support device (500) is movable into the support position by means of the force of gravity and into the waiting position by means of a motor drive.

43. A production line according to claim 42 **characterised in that** the movement of the support device (500) into the support position can be supported by an elastic biasing force which can be reproduced by the motor drive.

44. A production line according to claim 42 or claim 43 **characterised in that** the motor drive of the support device (500) can be derived from a drive of the loading machine (B).

45. A production line according to one of claims 41 to 44 **characterised in that** the movement of the support device (500) out of the waiting position into the support position can be triggered by the trigger element (352).

46. A production line according to one of claims 41 to 45 **characterised in that** the support device (500) has a locking device (520) which reversibly locks the support device (500) in the waiting position.

47. A production line according to one of claims 41 to 46 **characterised in that** the movement of the support device (500) is guided along a constant curved path (412a).

48. A production line according to claim 47 **characterised in that** the curved path (412a) for the support device (500) has at least two discontinuity locations (412b) defining the waiting position and the support position.

49. A production line according to one of claims 37 to 48 in which the device for end gripping of a storage bar (SP) is part of a turret device (400) with preferably four gripping heads (414) which are rotatable at least into a gripping position, a loading position and a delivery position,
**characterised in that** there is provided a testing position between the gripping position and the loading position.

50. A production line according to claim 49 **characterised in that** the turret device (400) has a motor drive from which the movement of the support device (500) out of the support position into the waiting position can be derived.

51. A production line according to claim 49 or claim 50 **characterised in that** provided at the side of the loading machine, that is opposite to the turret device (400), is a testing device (700) which detects at least the presence of a storage bar (SP).

52. A production line according to claim 51 **characterised in that** the testing device (700) is capable of detecting the orientation of the storage bar (SP).

53. A production line according to claim 51 or claim 52 **characterised in that** the testing device (700) is capable of removing a wrongly positioned storage bar (SP) and/or a storage bar (700) involving a wrong orientation out of the turret (400).

54. A production line according to one of claims 51 to 53 **characterised in that** the testing device (700) is capable of so controlling the feed of the storage bars (SP) so that there is always at least one storage bar (SP) in the correct positional relationship in the loading position.

55. A production line according to one of claims 51 to 54 **characterised in that** in the testing position the storage bar (SP) is displaceable by the gripping head (414) with its free end axially into a test cup (710) of the testing device (700) and can be separated out in the case of an obstacle to displacement.

56. A production line according to one of claims 37 to 55 **characterised in that** the conveyor elements (320) are movable parallel over the storage bars (SP) for transfer of the sausage-shaped products (W) to the storage bars (SP).

57. A production line according to one of claims 38 to 56 **characterised in that** the hook portions (328) of a conveyor element (320) are spreadable immediately before reaching the storage bar (SP).

58. A production line according to claim 57 **characterised in that** there is provided a preferably trapezoidal spreading bar (332) for spreading the hook portions (328).

59. A production line according to claim 57 or claim 58 **characterised in that** the spread hook portions (328) of the conveyor elements (320) can be brought together again after reaching the end of the storage bar (SP).

60. A production line according to claim 59 **characterised in that** the spread hook portions (328) of the conveyor elements (320) are brought together by means of a biased spring.

61. A production line according to one of claims 37 to 60 **characterised in that** provided as the trigger element is a trigger nut (352), upon the attainment of which a conveyor element (320) releases the sausage-shaped product (W) for deposit on the storage bar (SP) by pivoting the hooks (328) away.

62. A production line according to claim 61 **characterised in that** the trigger nut (352) can be guided on a spindle (354).

63. A production line according to claim 60 or claim 61 **characterised in that** the trigger nut (352) can be so guided in opposite relationship to the direction of movement of the conveyor elements (320) that uniform filling of the storage bars is effected.

64. A production line according to one of claims 60 to 63 **characterised in that** the trigger nut (352) is capable of actuating a mechanism which causes the hook (328) of the conveyor element (320) to pivot away.

65. A production line according to one of claims 37 to 64 **characterised in that** the conveyor element (320) has a pawl device (336) which secures the hook (328) of the conveyor element (320) in the pivoted-away position.

66. A production line according to one of claims 37 to 65 **characterised in that** the conveyor element (320) is capable of passing a hook erecting element (340) immediately before reaching the transfer position (ÜB), the hook erection element (340) erecting again the hooks (328) which were pivoted away to release the sausage-shaped product (W).

67. A production line according to claim 66 **characterised in that** the conveyor element (320) has a pawl device (336) which secures the hooks of the conveyor element (320) in the erected position.

68. A production line according to one of claims 37 to 67 **characterised in that** there is provided a feed device (600) for the storage bars (SP), which feeds the storage bars (SP) in conforming relationship with the working cycle of the loading machine (B).

69. A production line according to claim 68 **characterised in that** the feed device (600) is capable of feeding the storage bars (SP) to the turret device (400) in axis-parallel relationship with the gripping device (414) of the turret device (400) and introduces the storage bars (SP) into the loading machine (B) in coaxial relationship with the gripping device (414).

70. A production line according to claim 68 or claim 69 **characterised in that** the feed device (600) has at least two rigid support elements (630) which are provided at uniform pitches and on which a supply of storage bars (SP) is deposited in axis-parallel relationship with the filling direction.

71. A production line according to one of claims 68 to 70 **characterised in that** the feed device (600) has at least two conveying bars (620) which are provided at uniform pitches and which by an intermittent movement transport the storage bars (SP) into the loading machine (B).

72. A production line according to claim 71 **characterised in that** the intermittent movement can be produced by at least one eccentric (612).

73. A production line according to claim 72 **characterised in that** the at least one eccentric (612) is drivable by a belt drive.

74. A production line according to claim 73 **characterised in that** the drive for the belt drive can be derived from the drive of the turret device (400).

75. A production line according to one of claims 37 to 74 **characterised in that** provided in the region of the transfer position (ÜB) is a weighing device (800) for the sausage-shaped products (W), which selectively detects the weight of an individual sausage-shaped product (W).

76. A production line according to claim 75 **characterised in that** the weighing device (800) has a weighing lever (810) which is pivotable into the path of movement of a conveyor element (320) and to which a sausage-shaped product (W) to be weighed can be transferred from the conveyor element (320).

## Revendications

1. Procédé de commande d'une ligne (FCB) de fabrication pour la production de produits (W) en forme de saucisse, qui reçoivent, dans une matière de gaine d'emballage en forme de boyau, un produit à embosser susceptible de s'écouler, comme de la chair à saucisse, une masse d'étanchéité, un granulé et analogue, la ligne (FCB) de fabrication ayant au moins : une machine (C) d'agrafage, dans laquelle la matière de gaine d'emballage emplie de produit à embosser est mise en portion en des produits (W) individuels en forme de saucisse par pose d'agrafes de fermeture et est séparée de la réserve du reste du matériau de gaine d'emballage, dans lequel, lors de la pose des agrafes de fermeture, au moins un élément (AE) souple de suspension peut être mis sur le produit (W) en forme de saucisse, qui est apporté en cadence dans la machine (C) d'agrafage, et une machine (B) de chargement, qui charge des barres (SP) d'accumulation individuellement avec les produits (W) en forme de saucisse, pour le retraitement des produits (W) en forme de saucisse, dans lequel, pour charger les barres (SP) d'accumulation de produits (W) en forme de saucisse, on utilise des éléments (320) convoyeurs tournant continuellement le long d'un trajet de convoyage et prenant en charge les produits (W) en forme de saucisse sortant de la machine (C) d'agrafage dans une partie (ÜB, ÜC) de prise en charge prévue entre la machine (C) d'agrafage et la machine (B) de chargement,
**caractérisé en ce qu'**au moins la vitesse de rotation des éléments (320) de convoyage de la machine (B) de chargement est commandée sur la base d'une grandeur de commande déduite de la machine (C) d'agrafage, dans laquelle
on superpose à la commande de vitesse de rotation une régulation, et **en ce que** l'on effectue la régulation de la vitesse de rotation des éléments (320) de convoyage sur la base de la tendance à s'écarter de la distance des éléments (320) de convoyage d'une position déterminée à l'avance sur le trajet de convoyage des éléments (320) de convoyage.

2. Procédé suivant la revendication 1,
**caractérisé en ce que** l'on maintient la vitesse de rotation des éléments (320) de convoyage à une valeur de consigne au moins à peu près constante au moins par intervalle de temps, valeur de consigne qui est déterminée par la grandeur de commande déduite de la machine (C) d'agrafage.

3. Procédé suivant la revendication 1 ou 2,
**caractérisé en ce que** la grandeur de commande de la vitesse de rotation des éléments (320) de convoyage qui est déduite de la machine (C) d'agrafage est la vitesse d'apport des éléments (AE) de suspension dans la machine (C) d'agrafage.

4. Procédé suivant l'une des revendications 1 à 3,
**caractérisé en ce que** l'on règle à l'aide de la régulation superposée à la commande de la vitesse de rotation l'instant où est atteinte une position (ÜB) de prise en charge dans la machine (B) de chargement par les éléments (320) de convoyage pour la prise en charge continue de produits (W) en forme de saucisse.

5. Procédé suivant l'une des revendications 1 à 4,
**caractérisé en ce que** l'on choisit comme la position déterminée à l'avance la position (ÜB) de prise en charge des éléments (320) de convoyage dans la machine (B) de chargement pour la prise en charge des produits (W) en forme de saucisse sortant de la machine (C) d'agrafage.

6. Procédé suivant la revendication 5,
**caractérisé en ce que**, lorsque la tendance à s'écarter augmente, on augmente la vitesse de rotation des éléments (320) de convoyage et/ou, lorsque la tendance à s'écarter diminue, on diminue la vitesse de rotation des éléments (320) de convoyage.

7. Procédé suivant l'une des revendications 5 à 6,
**caractérisé en ce que**, pour la détermination de la tendance à s'écarter, on compare la distance d'un élément (320) de convoyage déterminé à la position déterminée à l'avance dans une rotation le long du trajet de convoyage à la distance de l'élément (320) de convoyage déterminé de la position déterminée à l'avance dans une rotation suivante.

8. Procédé suivant l'une des revendications 5 à 6,
**caractérisé en ce que**, pour la détermination de la tendance à s'écarter, on compare la distance d'un élément (320) de convoyage déterminé à la position déterminée à l'avance dans une rotation le long du trajet de convoyage à la distance de l'élément (320) de convoyage suivant à la position déterminée à l'avance dans la même rotation.

9. Procédé suivant l'une des revendications 1 à 8,
**caractérisé en ce que** l'on prévoit, en outre, pour la ligne (FCB) de fabrication, une machine (F) d'embossage, qui est disposée dans la ligne (FCB) de fabrication en amont de la machine (C) d'agrafage et qui apporte, de préférence, le produit à embosser au matériau de gaine d'emballage dans la machine (C) d'agrafage.

10. Procédé suivant la revendication 9,
**caractérisé en ce que** l'on fait fonctionner la machine (F) d'embossage d'une manière discontinue.

11. Procédé suivant la revendication 9 ou 10,
**caractérisé en ce que** l'on arrête le fonctionnement de la machine (F) d'embossage lors d'une panne du fonctionnement de la machine (B) de chargement.

12. Procédé suivant la revendication 11,
**caractérisé en ce que**, pour arrêter la machine (B) d'embossage, un signal d'autorisation se trouvant à la machine (F) d'embossage est retiré par la machine (B) de chargement.

13. Procédé suivant l'une des revendications 1 à 12,
**caractérisé en ce que**, s'il se produit une panne du fonctionnement de la machine (B) de chargement, le fonctionnement de la machine (C) d'agrafage se poursuit au moins jusqu'à la finition du produit (W) en forme de saucisse déjà à embosser et **en ce que**, après la finition, le fonctionnement de la machine (C) d'agrafage est arrêté.

14. Procédé suivant l'une des revendications 1 à 13,
**caractérisé en ce que**, s'il se produit une panne du fonctionnement de la machine (B) d'embossage, l'élément (320) de convoyage, qui prend en charge précisément dans la position (ÜB) de prise en charge de la machine (B) de chargement un produit (W) en forme de saucisse provenant de la machine (C) d'agrafage, est déplacé hors de la position (ÜB) de prise en charge avant que le fonctionnement des éléments (320) de convoyage tournant continuellement soit arrêté.

15. Procédé suivant la revendication 14,
**caractérisé en ce que** l'arrêt des éléments (320) de convoyage tournant continuellement s'effectue avant que l'élément (320) de convoyage, qui a pris précisément en charge dans la position (ÜB) de prise en charge un produit (W) en forme de saucisse provenant de la machine (C) d'agrafage, ait atteint une barre (SP) d'accumulation à charger.

16. Procédé suivant l'une des revendications 1 à 15,
**caractérisé en ce qu'**il est prévu un dispositif de commande qui est en mesure de commander au moins la vitesse de rotation des éléments (320) de convoyage de la machine (B) de chargement sur la base de la grandeur de commande déduite de la machine (C) d'agrafage.

17. Procédé suivant la revendication 16,
**caractérisé en ce que** le dispositif de commande est utilisé pour commander au moins le fonctionnement accordé l'un à l'autre de la machine (B) de chargement et de la machine (C) d'agrafage.

18. Ligne (FCB) de fabrication pour la production de produits (W) en forme de saucisse, qui reçoivent, dans une matière de gaine d'emballage en forme de boyau un produit à embosser susceptible de s'écouler, comme de la chair à saucisse, une masse d'étanchéité, un granulé et analogue, la ligne (FCB) de fabrication ayant au moins :
une machine (C) d'agrafage, dans laquelle la matière de gaine d'emballage emplie de produit à embosser est mise en portion en des produits (W) individuels en forme de saucisse par pose d'agrafes de fermeture et est séparée de la réserve du reste du matériau de gaine d'emballage, dans lequel, lors de la pose des agrafes de fermeture, au moins un élément (AE) souple de suspension peut être mis sur le produit (W) en forme de saucisse, qui est apporté en cadence dans la machine (C) d'agrafage, et une machine (B) de chargement, qui charge des barres (SP) d'accumulation individuellement avec des produits (W) en forme de saucisse, pour le retraitement des produits (W) en forme de saucisse et qui comporte des éléments (320) convoyeurs tournant continuellement le long d'un trajet de convoyage et prenant en charge les produits (W) en forme de saucisse sortant de la machine (C) d'agrafage dans une partie (ÜB, ÜC) de prise en charge prévue entre la machine (C) d'agrafage et la machine (B) de chargement,
**caractérisée en ce qu'**il est prévu un dispositif de commande qui est en mesure de commander au moins la vitesse de rotation des éléments (320) de convoyage de la machine (B) de chargement sur la base d'une grandeur de commande déduite de la machine (C) d'agrafage, dans laquelle
le dispositif de commande est en mesure de superposer à la commande de la vitesse de rotation une régulation qui régule la vitesse de rotation des éléments (320) de convoyage sur la base de la tendance à s'écarter de la distance des éléments (320) de convoyage d'une position déterminée à l'avance sur le trajet de convoyage des éléments (320) de convoyage.

19. Ligne de fabrication suivant la revendication 18,
**caractérisée en ce que** le dispositif de commande est en mesure de commander au moins le fonctionnement accordé l'une à l'autre de la machine (B) de chargement et de la machine (C) d'agrafage.

20. Ligne de fabrication suivant l'une des revendications 18 à 19,
**caractérisée en ce que** la section de convoyage est interrompue entre la machine (C) d'agrafage et la machine (B) de chargement.

21. Ligne de fabrication suivant la revendication 20,
**caractérisée en ce que** l'interruption de la section de convoyage entre la machine (C) d'agrafage et la machine (B) de chargement est formée par une partie (ÜB, ÜC) de prise en charge, dans laquelle le trajet de convoyage de la machine d'agrafage se termine en une position (ÜC) de transfert et dans laquelle les éléments (320) de convoyage de la machine (B) de chargement prennent en charge individuellement dans une position (ÜB) de prélèvement du côté de la machine de chargement les produits (W) en forme de saucisse se trouvant dans la position (ÜC) de transfert du côté de la machine d'agrafage.

22. Ligne de fabrication suivant l'une des revendications 18 à 21,
**caractérisée en ce qu'**il est prévu une machine (F) d'embossage pour apporter du produit à embosser sur le matériau de gaine d'emballage dans la machine (C) d'agrafage, machine (F) d'embossage qui est dans la ligne (FCB) de fabrication en amont de la machine (C) d'agrafage.

23. Ligne de fabrication suivant la revendication 18, comportant :
une machine (C) d'agrafage ayant au moins deux outils de fermeture, qui, pour poser et fermer des agrafes sur le produit (W) en forme de saucisse, peuvent être déplacés l'un par rapport à l'autre entre une position d'ouverture et une position de fermeture, au moins un dispositif d'emmagasinage d'agrafes, duquel des agrafes peuvent être apportées aux outils de fermeture, un dispositif de stockage, pour stocker une réserve de matériau de gaine d'emballage, un dispositif de séparation, pour séparer du matériau de gaine d'emballage d'un produit de saucisse individuel de la réserve de matériau de gaine d'emballage, un tube (F) d'embossage, pour apporter du produit à embosser ayant un dispositif de convoyage d'extraction pour extraire des produits (W) en forme de saucisse de la machine (C) d'agrafage le long d'une section (AS) d'extraction des produits (W) en forme de saucisse et un dispositif (ZE) d'apport d'éléments (AE) souples de suspension, à partir duquel les éléments (AE) de suspension peuvent être apportés lors de la pause d'agrafes à l'un des outils de fermeture, dans laquelle la section (AS) d'extraction des produits (W) en forme de saucisse a une première voie (110) de convoyage des produits (W) en forme de saucisse et, parallèlement à la voie (110) de convoyage pour les produits (W) en forme de saucisse, une voie (130) de convoyage pour l'élément (AE) de suspension relié à un produit (W) en forme de saucisse séparé de la voie (110) de convoyage pour les produits (W) en forme de saucisse,
**caractérisée en ce que** la voie (130) de convoyage pour les éléments (AE) de suspension a un rail (130) de glissement ayant, de préférence, une section transversale circulaire, qui a au moins deux dispositifs (140) formant palier, et **en ce que** le rail (130) de glissement a dans la partie du dispositif (140) formant palier un arbre (160) creux, qui peut être entraîné et qui est coaxial au rail (130) de glissement.

24. Ligne de fabrication suivant la revendication 23,
**caractérisée en ce que** la voie (110) de convoyage pour les produits (W) en forme de saucisse, et la voie (130) de convoyage, pour l'élément (AE) de suspension relié à un produit (W) en forme de saucisse, se terminent en une position (ÜC) de transfert, dans laquelle un produit (W) en forme de saucisse peut être maintenu prêt d'une manière définie pour le transfert pour un traitement ultérieur.

25. Ligne de fabrication suivant la revendication 24,
**caractérisée en ce qu'**en la position (ÜC) de transfert est prévu au moins un élément (136) de transfert pour le transfert des produits (W) en forme de saucisse, élément qui est conformé en fourche à son extrémité éloignée de la machine (C) d'agrafage.

26. Ligne de fabrication suivant la revendication 24 ou 25,
**caractérisée en ce qu'**en la position (ÜC) de transfert est prévu au moins un capteur (138), qui détecte la présence d'un produit (W) en forme de saucisse.

27. Ligne de fabrication suivant la revendication 23,
**caractérisée en ce que** les dispositifs (140) formant palier sont formés respectivement par trois rouleaux (150) d'appui disposés suivant un pas uniforme dans la direction périphérique du rail (130) de glissement.

28. Ligne de fabrication suivant l'une des revendications 23 à 27,
**caractérisée en ce que** le rail (130) de glissement est pourvu dans la partie des dispositifs (140) formant palier d'une rainure (162) faisant tout le tour en forme de filet.

29. Ligne de fabrication suivant la revendication 28,
**caractérisée en ce que** la rainure (162) formant tout le tour en forme de filet est prévue sur l'arbre (160) creux.

30. Ligne de fabrication suivant l'une des revendications 27 à 29,
**caractérisée en ce que** le rail (130) de glissement a dans la partie des rouleaux (150) d'appui une surface (160d) convexe tandis que les rouleaux (150) d'appui ont une surface (150a) concave.

31. Ligne de fabrication suivant l'une des revendications 23 à 30,
**caractérisée en ce que** le rail (130) de glissement est coudé entre les deux dispositifs (140) formant palier.

32. Ligne de fabrication suivant l'une des revendications 27 à 31,
**caractérisée en ce qu'**au moins l'un des rouleaux (150) d'appui de chaque dispositif (140) formant palier peut être entraîné.

33. Ligne de fabrication suivant l'une des revendications 23 à 32,
**caractérisée en ce que** le rail (130) de glissement est pourvu à son extrémité du côté de la machine d'agrafage d'un cône (134) d'insertion.

34. Ligne de fabrication suivant l'une des revendications 23 à 33,
**caractérisée en ce qu'**un dispositif de capture des éléments (AE) de suspension se raccorde à l'extrémité du côté de la machine d'agrafage du rail (130) de glissement et va du rail (130) de glissement jusque dans la partie de fermeture des outils de fermeture.

35. Ligne de fabrication suivant la revendication 34,
**caractérisée en ce que** le dispositif de capture est coudé et est pourvu d'une pointe de capture conique.

36. Ligne de fabrication suivant l'une des revendications 23 à 35,
**caractérisée en ce que** les éléments (AE) de suspension sont formés par des boucles en fil.

37. Ligne de fabrication suivant la revendication 18, comportant :
une machine (B) de chargement, des barres (SP) d'accumulation étant prévues pour la suspension des produits (W) en forme de saucisse, qui ont à leur extrémité un élément (AE) de suspension souple, lequel peut être guidé par les barres(SP) d'accumulation et qui peut prendre une conformation fermée et une conformation ouverte,
- comprenant un dispositif pour le blocage du côté de l'extrémité d'une barre (SP) d'accumulation libre à l'autre extrémité, et
- comprenant un dispositif (300) pour apporter successivement les produits (W) en forme de saucisse pendant sur leurs éléments (AE) de suspension à la barre (SP) d'accumulation en guidant les éléments (AE) de suspension par la barre (SP) d'accumulation par leur extrémité libre et pour déposer les éléments (AE) de suspension à des emplacements à distance les uns des autres le long de la barre (SP) d'accumulation,
- qui a un convoyeur (310) sans fin ayant un brin s'étendant parallèlement à la barre (SP) d'accumulation,
- dans lequel le convoyeur (310) sans fin porte, pour la réception des éléments (AE) de suspension, des éléments (320) convoyeurs successifs mettant à distance des produits (W) en forme de saucisse,
- qui sont mobiles d'une position arrêtant les produits (W) en forme de saucisse sur les éléments (AE) de suspension à une position déposant les éléments (AE) de suspension sur la barre (SP) d'accumulation, et
- dans lequel au moins un élément de commande provoque en des emplacements à distance le long de la barre (SP) d'accumulation le déplacement des éléments (320) de convoyage pour qu'ils viennent en leur position de dépôt, dans laquelle, en outre
les éléments (320) convoyeurs ont des crochets (328), qui peuvent pivoter autour d'axes (326) horizontaux hors de leur position maintenant les éléments (AE) de suspension pour venir dans leur position déposant les éléments (AE) de suspension et en ce que l'élément de commande est un organe (352) de déclenchement déplacé le long du brin du convoyeur (310) sans fin à l'encontre de son sens d'avance, organe qui déclenche le basculement des crochets (328) de leur position de maintien à leur position de dépôt ; et
- comprenant un dispositif de commande, qui est en mesure de commander au moins la vitesse de rotation des éléments (320) de convoyage de la machine (B) de chargement sur la base d'une grandeur de commande déduite de la machine (C) d'agrafage,
**caractérisée en ce que** le dispositif de commande est en mesure de superposer à la commande de la vitesse de rotation une régulation qui régule la vitesse de rotation des éléments (320) de convoyage sur la base de la tendance à s'écarter de la distance des éléments (320) de convoyage d'une position déterminée à l'avance sur la voie de convoyage des éléments (320) de convoyage.

38. Ligne de fabrication suivant la revendication 37, **caractérisée en ce que** les crochets (328) sont constitués respectivement de deux sous-crochets (328) de même type, qui, avant d'atteindre une position (ÜB) de prise en charge de la machine (B) de chargement, dans laquelle les produits (W) en forme de saucisse peuvent être pris en charge par les éléments (320) de convoyage sur leurs éléments (AE) de suspension, sont en coïncidence l'un avec l'autre et, après avoir quitté la position (ÜB) de prise en charge, sont écartés transversalement à l'étendue du brin à l'encontre d'une force élastique dans une position maintenant ouverts les éléments (AE) de suspension.

39. Ligne de fabrication suivant la revendication 37 ou 38, **caractérisée en ce qu'**un actionneur (352), disposé dans le sens de retour du convoyeur (310) sans fin avant la position (ÜB) de prise en charge de l'élément (AE) de suspension, met les crochets (308) dans leur position maintenant les éléments (AE) de suspension.

40. Ligne de fabrication suivant l'une des revendications 37 à 39,
**caractérisée en ce que** le convoyeur (310) sans fin est une chaîne (310a, 310b) passant autour d'une poulie (314) d'entraînement et autour d'une poulie (312) de renvoi, les deux poulies (312, 314) tournant autour d'axes horizontaux.

41. Ligne de fabrication suivant l'une des revendications 37 à 40,
**caractérisée en ce qu'**il est prévu un dispositif (500) d'appui, qui, après le chargement partiel d'une barre (SP) d'accumulation, peut basculer sur celle-ci entre ses extrémités de manière réversible d'une position d'attente à une position de soutien.

42. Ligne de fabrication suivant la revendication 41,
**caractérisée en ce que** le dispositif (500) d'appui peut être mis dans la position de soutien au moyen de la force de gravité et dans la position d'attente au moyen d'un entraînement motorisé.

43. Ligne de fabrication suivant la revendication 42,
**caractérisée en ce que** le mouvement du dispositif (500) d'appui, pour venir dans la position de soutien, peut être soutenu par une force élastique de précontrainte, qui peut être reproduite par l'entraînement motorisé.

44. Ligne de fabrication suivant la revendication 42 ou 43,
**caractérisée en ce que** l'entraînement motorisé du dispositif (500) d'appui peut être dérivé d'un entraînement de la machine (B) de chargement.

45. Ligne de fabrication suivant l'une des revendications 41 à 44,
**caractérisée en ce que** le mouvement du dispositif (500) d'appui de la position d'attente à la position de soutien peut être déclenché par l'élément (352) de déclenchement.

46. Ligne de fabrication suivant l'une des revendications 41 à 45,
**caractérisée en ce que** le dispositif (500) d'appui comporte un dispositif (520) de verrouillage, qui verrouille de manière réversible le dispositif (500) d'appui dans la position d'attente.

47. Ligne de fabrication suivant l'une des revendications 41 à 46,
**caractérisée en ce que** le déplacement du dispositif (500) d'appui est guidé le long d'une piste (412a) à courbe continue.

48. Ligne de fabrication suivant la revendication 47,
**caractérisée en ce que** la piste (412a) courbe pour le dispositif (500) d'appui a au moins deux points (412b) de discontinuité, qui définissent la position d'attente de la position de soutien.

49. Ligne de fabrication suivant l'une des revendications 37 à 48, dans laquelle le dispositif, pour le blocage du côté de l'extrémité d'une barre (SP) d'accumulation, fait partie d'un dispositif (400) revolver ayant, de préférence, quatre têtes (414) de blocage, qui peuvent tourner au moins dans une position de blocage, dans une position de chargement et dans une position de distribution,
**caractérisée en ce qu'**il est prévu un point de contrôle entre le point de blocage et le point de chargement.

50. Ligne de fabrication suivant la revendication 49,
**caractérisée en ce que** le dispositif (400) revolver a un entraînement motorisé, duquel le déplacement du dispositif (500) d'appui de la position de soutien à la position d'attente peut être dirigé.

51. Ligne de fabrication suivant la revendication 49 ou 50,
**caractérisée en ce que** du côté de la machine de chargement opposée au dispositif (400) revolver est prévu un dispositif (700) de contrôle, qui détecte au moins la présence d'une barre (SP) d'accumulation.

52. Ligne de fabrication suivant la revendication 51,
**caractérisée en ce que** le dispositif (700) de contrôle est en mesure de détecter la direction de la barre (SP) d'accumulation.

53. Ligne de fabrication suivant la revendication 51 ou 52,
**caractérisée en ce que** le dispositif (700) de contrôle est en mesure d'enlever du revolver (400) une barre (SP) d'accumulation mal positionnée et/ou une barre (700) d'accumulation ayant une mauvaise direction.

54. Ligne de fabrication suivant l'une des revendications 51 à 53,
**caractérisée en ce que** le dispositif (700) de contrôle est en mesure de commander l'apport des barres (SP) d'accumulation, de manière à ce qu'au moins une barre (SP) d'accumulation se trouve toujours bien positionnée dans la position de chargement.

55. Ligne de fabrication suivant l'une des revendications 51 à 54,
**caractérisée en ce qu'**au point de contrôle, la barre (SP) d'accumulation peut coulisser de la tête (414) de blocage par son extrémité libre axialement dans un godet (710) de test du dispositif (700) de contrôle et être écartée dans le cas d'un obstacle au coulissement.

56. Ligne de fabrication suivant l'une des revendications 37 à 55,
**caractérisée en ce que** les éléments (320) de convoyage peuvent, pour le transfert des produits (W) en forme de saucisse aux barres (SP) d'accumulation, être guidés parallèlement au-dessus de celles-ci.

57. Ligne de fabrication suivant l'une des revendications 38 à 56,
**caractérisée en ce que** les sous-crochets (328) d'un élément (320) de convoyage peuvent être écartés directement avant d'atteindre la barre (SP) d'accumulation.

58. Ligne de fabrication suivant la revendication 57,
**caractérisée en ce qu'**il est prévu une barrette (332) d'écartement, de préférence trapézoïdale, pour écarter les sous-crochets (328).

59. Ligne de fabrication suivant la revendication 57 ou 58,
**caractérisée en ce que** les sous-crochets (328) écartés des éléments (320) de convoyage peuvent être à nouveau rassemblés après avoir atteints l'extrémité de la barre (SP) d'accumulation.

60. Ligne de fabrication suivant la revendication 59,
**caractérisée en ce que** le rassemblement des sous-crochets (328) écartés des éléments (320) de convoyage peuvent être effectués au moyen d'un ressort précontraint.

61. Ligne de fabrication suivant l'une des revendications 37 à 60,
**caractérisée en ce qu'**il est prévu pour l'élément de déclenchement un écrou (352) de déclenchement et, lorsqu'il est atteint, un élément (320) de convoyage libère en décrochant les crochets (328) le produit (W) en forme de saucisse, pour le déposer sur la barre (SP) d'accumulation.

62. Ligne de fabrication suivant la revendication 61,
**caractérisée en ce que** l'écrou (352) de déclenchement peut être guidé sur une broche (354).

63. Ligne de fabrication suivant la revendication 60 ou 61,
**caractérisée en ce que** l'écrou (352) de déclenchement peut être guidé dans le sens opposé au sens de déplacement des éléments (320) de convoyage, de manière à effectuer un remplissage uniforme des barres d'accumulation.

64. Ligne de fabrication suivant l'une des revendications 60 à 63,
**caractérisée en ce que** l'écrou (352) de déclenchement est en mesure d'actionner un mécanisme qui provoque le décrochement des crochets (328) de l'élément (320) de convoyage.

65. Ligne de fabrication suivant l'une des revendications 37 à 64,
**caractérisée en ce que** l'élément (320) de convoyage comporte un dispositif (336) à cliquet, qui bloque le crochet (328) de l'élément (320) de convoyage dans la position décrochée.

66. Ligne de fabrication suivant l'une des revendications 37 à 65,
**caractérisée en ce que** l'élément (320) de convoyage est en mesure de passer immédiatement, avant d'atteindre la position (ÜB) de prise en charge, un élément (340) de redressement de crochet, qui redresse à nouveau les crochets (328) décrochés pour la libération du produit (W) en forme de saucisse.

67. Ligne de fabrication suivant la revendication 66,
**caractérisée en ce que** l'élément (320) de convoyage comporte un dispositif (336) à cliquet, qui bloque les crochets de l'élément (320) de convoyage dans la position redressée.

68. Ligne de fabrication suivant l'une des revendications 37 à 67,
**caractérisée en ce qu'**il est prévu un dispositif (600) d'apport des barres (SP) d'accumulation, qui apporte les barres (SP) d'accumulation en synchronisation avec le cycle de travail de la machine (B) de chargement.

69. Ligne de fabrication suivant la revendication 68,
**caractérisée en ce que** le dispositif (600) d'apport est en mesure d'apporter les barres (SP) d'accumulation au dispositif (400) revolver parallèlement à l'axe du dispositif (414) de blocage du dispositif (400) revolver et d'insérer les barres (SP) d'accumulation coaxialement au dispositif (414) de blocage dans la machine (B) de chargement.

70. Ligne de fabrication suivant la revendication 68 ou 69,
**caractérisée en ce que** le dispositif (600) d'apport a au moins deux éléments (630) d'appui rigide et munis de pas uniformes, sur lesquels une réserve de barres (SP) d'accumulation est déposée parallèlement par rapport à la direction d'embossage.

71. Ligne de fabrication suivant l'une des revendications 68 à 70,
**caractérisée en ce que** le dispositif (600) d'apport a au moins deux barres (620) de convoyages munies de pas uniformes, qui transportent par un mouvement intermittent les barres (SP) d'accumulation pour les mettre dans la machine (B) de chargement.

72. Ligne de fabrication suivant la revendication 71,
**caractérisée en ce que** le mouvement intermittent peut être produit par au moins un excentrique (612).

73. Ligne de fabrication suivant la revendication 72,
**caractérisée en ce que** le au moins un élément excentrique (612) peut être entraîné par un entraînement par courroie.

74. Ligne de fabrication suivant la revendication 73,
**caractérisée en ce que** l'entraînement pour l'entraînement par courroie peut être dérivé de l'entraînement du dispositif (400) revolver.

75. Ligne de fabrication suivant l'une des revendications 37 à 74,
**caractérisée en ce que,** dans la zone de la position (ÜB) de prise en charge, est prévu un dispositif (800) de pesée des produits (W) en forme de saucisse, qui relève éventuellement le poids d'un produit individuel en forme de saucisse.

76. Ligne de fabrication suivant la revendication 75,
**caractérisée en ce que** le dispositif (800) de pesée a un levier (810) qui peut basculer dans le trajet de déplacement d'un élément (320) de convoyage et auquel un produit (W) en forme de saucisse à peser peut être transmis par l'élément (320) de convoyage.
